# EUROPEAN PATENT APPLICATION

(11) **EP 4 585 470 A1**
(43) Date of publication of application: **16.07.2025**
(21) Application number: 25151002.0
(22) Date of filing: 09.01.2025
(51) Int. Cl.: B60R 16/037

(54) **METHOD AND SYSTEM FOR APPLYING CONFLICT RESOLUTION BETWEEN VEHICLE SETTING PROFILES OF TWO VEHICLE OCCUPANTS**

(30) Priority: 10.01.2024 US 202418409407
(71) Applicant: Volvo Car Corporation, 405 31 Göteborg (SE)
(72) Inventor: SINGH, Aditya Pratap, 40531 Göteborg (SE); ROPEL, Andreas, 40531 Göteborg (SE); LARSSON, Daniel, 40531 Göteborg (SE); LE SAUX, Mathias, 40531 Göteborg (SE)
(74) Representative: Maiwald GmbH

(57) **Abstract**

According to an embodiment, it is a system comprising a sensor, a communication module and a processor, wherein the processor is operable to detect, via a detection module, a first identity of a first occupant of a vehicle; connect, via the communication module, to a first device of the first occupant; retrieve, a first occupant profile, wherein the first occupant profile comprises a first vehicle setting; detect, via the detection module, a second identity of a second occupant of the vehicle; connect, via the communication module, to a second device of the second occupant; retrieve, a second occupant profile, wherein the second occupant profile comprises a second vehicle setting; adjust, via a conflict resolution module, the first vehicle setting and the second vehicle setting based on the first occupant profile and the second occupant profile; and apply, the first vehicle setting and the second vehicle setting to the vehicle.

## Description

### FIELD OF THE INVENTION

The present disclosure relates to accessing the vehicle settings and limitation settings stored in a user profile and applying the settings. More specifically, the present disclosure relates to systems and methods for adjusting settings and limitations in a vehicle based on one or more occupants.

### BACKGROUND

When someone lends or rents a vehicle (e.g., child borrowing parents' vehicle), they do not know who the passengers are that are getting into the vehicle. For example, parents may be okay to provide no limitation to use of the vehicle when lending their vehicle to their child. However, when additional passengers are involved, the parent may want to limit certain functionalities of the vehicle, such as max speed, max acceleration, use of sport mode, location limitations, stereo volume, etc. for the safety of the passengers. However, today's systems do not allow this control.

Therefore, there is a need for a smart system that needs to be added to a vehicle that can recognize a driver, and additional passenger/s, if any, and initiate adjustments to the settings and limitations to the vehicle.

### SUMMARY

The following presents a summary to provide a basic understanding of one or more embodiments described herein. This summary is not intended to identify key or critical elements or delineate any scope of the different embodiments and/or any scope of the claims. The sole purpose of the summary is to present some concepts in a simplified form as a prelude to the more detailed description presented herein.

According to an embodiment it is a system comprising, a sensor, a communication module, and a processor; wherein the processor storing instructions in a non-transitory memory that, when executed, cause the processor to detect, via a detection module comprising the sensor, a first identity of a first occupant of a vehicle; connect, via the communication module, to a first device of the first occupant; retrieve, a first occupant profile, wherein the first occupant profile comprises a first vehicle setting; detect, via the detection module, a second identity of a second occupant of the vehicle; connect, via the communication module, to a second device of the second occupant; retrieve, a second occupant profile, wherein the second occupant profile comprises a second vehicle setting; adjust, via a conflict resolution module, the first vehicle setting and the second vehicle setting based on the first occupant profile and the second occupant profile; and apply, the first vehicle setting and the second vehicle setting to the vehicle. In particular, the processor may be storing the instructions in the non-transitory memory and/or the processor may be configured to store or configured for storing the instructions in the non-transitory memory.

According to an embodiment it is a method comprising, detecting, via a detection module comprising a sensor, a first identity of a first occupant of a vehicle; connecting, via a communication module, to a first device of the first occupant; retrieving, a first occupant profile, wherein the first occupant profile comprises a first vehicle setting; detecting, via the detection module, a second identity of a second occupant of the vehicle; connecting, via the communication module, to a second device of the second occupant; retrieving, a second occupant profile, wherein the second occupant profile comprises a second vehicle setting; adjusting, via a conflict resolution module, the first vehicle setting, and the second vehicle setting based on the first occupant profile and the second occupant profile; and applying, the first vehicle setting and the second vehicle setting to the vehicle.

According to an embodiment it is a non-transitory computer-readable medium having stored thereon instructions executable by a computer system to perform operations comprising, detecting, via a detection module comprising a sensor, a first identity of a first occupant of a vehicle; connecting, via a communication module, to a first device of the first occupant; retrieving, a first occupant profile, wherein the first occupant profile comprises a first vehicle setting; detecting, via the detection module, a second identity of a second occupant of the vehicle; connecting, via the communication module, to a second device of the second occupant; retrieving, a second occupant profile, wherein the second occupant profile comprises a second vehicle setting; adjusting, via a conflict resolution module, the first vehicle setting, and the second vehicle setting based on the first occupant profile and the second occupant profile; and applying, the first vehicle setting and the second vehicle setting, to the vehicle.

### BRIEF DESCRIPTION OF THE FIGURES

These and other aspects of the present invention will now be described in more detail, with reference to the appended drawings showing exemplary embodiments of the present invention, in which:
FIG. 1 is an illustration of an example autonomous vehicle with various sensors, actuators, and systems according to an embodiment.
FIG. 2 shows a block diagram of electronic components of a vehicle according to an embodiment.
FIG. 3 shows the block diagram of the system for accessing user profile and configuring functions of a vehicle based on a user profile according to an embodiment.
FIG. 4A shows an occupant detection module and occupant profile access module according to an embodiment.
FIG. 4B shows an occupant detection module and occupant profile access module according to another embodiment.
FIG. 4C shows a vehicle system receiving limitation settings in real-time from a second device according to an embodiment.
FIG. 4D shows a vehicle system accessing the occupant profile from an occupant data system according to an embodiment.
FIG. 4E shows contents of an occupant profile according to an embodiment.
FIG. 4F shows example default occupant profiles according to an embodiment.
FIG. 5A shows a flowchart for conflict resolution in vehicle settings and limitations in a vehicle when more than one occupant is present according to an embodiment.
FIG. 5B shows a flowchart for adjusting vehicle settings and limitations using a machine learning model according to an embodiment.
FIG. 5C shows an example block diagram for occupant profile monitoring using a machine learning model according to an embodiment.
FIG. 5D shows a structure of the neural network / machine learning model with a feedback loop according to an embodiment.
FIG. 5E shows a structure of the neural network / machine learning model with reinforcement learning according to an embodiment.
FIG. 5F shows a sample message displayed on a vehicle dashboard or infotainment system according to an embodiment.
FIG. 6A shows an example message received by the vehicle from a user device according to an embodiment.
FIG. 6B shows another example message received by the vehicle from a user device according to an embodiment.
FIG. 6C shows an example message transmitted by the vehicle to a user device comprising vehicle settings according to an embodiment.
FIG. 6D shows an example message received by the vehicle from a user device comprising limitation settings according to an embodiment.
FIG. 6E shows an example message format and the bits allocated for the contents of the message according to an embodiment.
FIG. 7A shows a block diagram of the method executed by the vehicle for accessing occupant profile and applying vehicle settings according to an embodiment.
FIG. 7B shows a block diagram of a system for accessing occupant profile and applying vehicle settings according to an embodiment.
FIG. 7C shows a block diagram of the method executed by the non-transitory computer-readable medium for accessing occupant profile and applying vehicle settings according to an embodiment.
FIG. 8 shows a block diagram of a method executed by the vehicle for accessing occupant profile and applying vehicle settings according to an embodiment.
FIG. 9A shows a block diagram of the method executed by the vehicle for adjusting vehicle settings when more than one occupant is present in a vehicle according to an embodiment.
FIG. 9B shows a block diagram of a system for adjusting vehicle settings when more than one occupant is present in a vehicle according to an embodiment.
FIG. 9C shows a block diagram of the method executed by the non-transitory computer-readable medium for adjusting vehicle settings when more than one occupant is present in a vehicle according to an embodiment.
FIG. 10A shows a block diagram of the method executed by the vehicle for transmitting and receiving messages according to an embodiment.
FIG. 10B shows a block diagram of the system for transmitting and receiving messages by a vehicle according to an embodiment.
FIG. 10C shows a block diagram of the method executed by the non-transitory computer-readable medium for transmitting and receiving messages by a vehicle according to an embodiment.
FIG. 10D shows a block diagram of the method executed by the vehicle for transmitting a message when the user adjusts settings to the vehicle according to an embodiment.
FIG. 10E shows a block diagram of the system of vehicle for transmitting a message by the vehicle when the user adjusts settings to the vehicle according to an embodiment.
FIG. 10F shows a block diagram of the method executed by the non-transitory computer-readable medium for transmitting a message by the vehicle when the user adjusts settings to the vehicle according to an embodiment.
FIG. 11A shows a block diagram of the method executed by the vehicle for receiving messages by a vehicle according to an embodiment.
FIG. 11B shows a block diagram of the vehicle system for receiving messages by the vehicle according to an embodiment.
FIG. 11C shows a block diagram of the method executed by the non-transitory computer-readable medium for receiving messages by a vehicle according to an embodiment.
FIG. 12 shows the block diagram of the cyber security module in view of the system and server according to an embodiment.

### DETAILED DESCRIPTION

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same element.

Although the detailed description herein contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs. The following terms and phrases, unless otherwise indicated, shall be understood to have the following meanings.

As used herein, the articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or clear from context to mean a singular form.

As used herein, the terms "example" and / or "exemplary" mean serving as an example, instance, or illustration. For the avoidance of doubt, such examples do not limit the herein described subject matter. In addition, any aspect or design described herein as an "example" and / or "exemplary" is not necessarily preferred or advantageous over other aspects or designs, nor does it preclude equivalent exemplary structures and techniques known to those of ordinary skill in the art.

As used herein, the terms "first," "second," "third," and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include," "have," and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

As used herein, the terms "left," "right," "front," "back," "top," "bottom," "over," "under" and the like in the description and in the claims, if any, are for descriptive purposes and not necessarily for describing permanent relative positions. The terms so used are interchangeable under appropriate circumstances such that the embodiments of the apparatus, methods, and / or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more." Where only one item is intended, the term "one" or similar language is used. Also, the terms "has," "have," "having," or the like are open-ended terms. Further, the phrase "based on" means "based, at least in part, on" unless explicitly stated otherwise.

As used herein, the terms "system," "device," "unit," and / or "module" refer to a different component, component portion, or component of the various levels of the order. However, other expressions that achieve the same purpose may replace the terms.

As used herein, the terms "couple," "coupled," "couples," "coupling," and the like refer to connecting two or more elements mechanically, electrically, and / or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably," "removable," and the like, near the word "coupled" and the like does not mean that the coupling, etc. in question is or is not removable.

As used herein, the term "or" means an inclusive "or" rather than an exclusive "or." That is, unless specified otherwise, or clear from context, "X employs A or B" means any of the natural inclusive permutations. That is, if X employs A; X employs B; or X employs both A and B, then "X employs A or B" is satisfied under any of the foregoing instances.

As used herein, two or more elements or modules are "integral" or "integrated" if they operate functionally together. Two or more elements are "non-integral" if each element can operate functionally independently.

As used herein, the term "real-time" refers to operations conducted as soon as practically possible upon occurrence of a triggering event. A triggering event can include receipt of data necessary to execute a task or to otherwise process information. Because of delays inherent in transmission and / or in computing speeds, the term "real-time" encompasses operations that occur in "near" real-time or somewhat delayed from a triggering event. In a number of embodiments, "real-time" can mean real-time less a time delay for processing (e.g., determining) and / or transmitting data. The particular time delay can vary depending on the type and / or amount of the data, the processing speeds of the hardware, the transmission capability of the communication hardware, the transmission distance, etc. However, in many embodiments, the time delay can be less than approximately one second, two seconds, five seconds, or ten seconds.

As used herein, the term "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

As used herein the term "component" refers to a distinct and identifiable part, element, or unit within a larger system, structure, or entity. It is a building block that serves a specific function or purpose within a more complex whole. Components are often designed to be modular and interchangeable, allowing them to be combined or replaced in various configurations to create or modify systems. Components may be a combination of mechanical, electrical, hardware, firmware, software and/or other engineering elements.

Digital electronic circuitry, or computer software, firmware, or hardware, including the structures disclosed in this specification and their structural equivalents, or in combinations of one or more of them may realize the implementations and all of the functional operations described in this specification. Implementations may be as one or more computer program products i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data, including by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and / or methods is not limiting to the implementations. Thus, any software and any hardware can implement the systems and / or methods based on the description herein without reference to specific software code.

A computer program (also known as a program, software, software application, script, or code) is written in any appropriate form of programming language, including compiled or interpreted languages. Any appropriate form, including a standalone program or a module, component, subroutine, or other unit suitable for use in a computing environment may deploy it. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of digital computer. A processor will receive instructions and data from a read-only memory or a random-access memory or both. Elements of a computer can include a processor for performing instructions and one or more memory devices for storing instructions and data. A computer will also include, or is operatively coupled to receive data, transfer data or both, to/from one or more mass storage devices for storing data e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc. may embed a computer. Computer-readable media suitable for storing computer program instructions and data include all forms of non-volatile memory, media and memory devices, including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship with each other.

Embodiments of the present invention may comprise or utilize a special purpose or general purpose computer including computer hardware. Embodiments within the scope of the present invention may also include physical and other computer-readable media for carrying or storing computer-executable instructions and / or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and / or Digital Signal Processor (DSP) circuit) may embody the various electrical structures and methods.

In addition, a non-transitory machine-readable medium and / or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

As used herein, the term "network" refers to one or more data links that enable the transport of electronic data between computer systems and / or modules and / or other electronic devices. When a network or another communications connection (either hardwired, wireless, or a combination of hardwired or wireless) transfers or provides information to a computer, the computer properly views the connection as a transmission medium. A general purpose or special purpose computer access transmission media that can include a network and / or data links which carry desired program code in the form of computer-executable instructions or data structures. The scope of computer-readable media includes combinations of the above, that enable the transport of electronic data between computer systems and / or modules and / or other electronic devices. The term network may include the Internet, a local area network, a wide area network, or combinations thereof. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and / or to less volatile computer-readable physical storage media at a computer system. Thus, computer system components that also (or even primarily) utilize transmission media may include computer-readable physical storage media.

Computer-executable instructions comprise, for example, instructions and data which cause a general purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and / or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and / or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and / or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multiprocessor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

As used herein, the term "Unauthorized access" is when someone gains access to a website, program, server, service, or other system using someone else's account or other methods. For example, if someone kept guessing a password or username for an account that was not theirs until they gained access, it is considered unauthorized access.

As used herein, the term "IoT" stands for Internet of Things which describes the network of physical objects "things" or objects embedded with sensors, software, and other technologies for the purpose of connecting and exchanging data with other devices and systems over the internet.

As used herein "Machine learning " refers to algorithms that give a computer the ability to learn without explicit programming, including algorithms that learn from and make predictions about data. Machine learning techniques include, but are not limited to, support vector machine, artificial neural network (ANN) (also referred to herein as a "neural net"), deep learning neural network, logistic regression, discriminant analysis, random forest, linear regression, rules-based machine learning, Naive Bayes, nearest neighbor, decision tree, decision tree learning, and hidden Markov, etc. For the purposes of clarity, part of a machine learning process can use algorithms such as linear regression or logistic regression. However, using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. The ANN may be featured with a feedback loop to adjust the system output dynamically as it learns from the new data as it becomes available. In machine learning, backpropagation and feedback loops are used to train the Artificial Intelligence/Machine Learning (AI/ML) model improving the model's accuracy and performance over time. Statistical modeling relies on finding relationships between variables (e.g., mathematical equations) to predict an outcome.

As used herein, the term "Data mining" is a process used to turn raw data into useful information. It is the process of analyzing large datasets to uncover hidden patterns, relationships, and insights that can be useful for decision-making and prediction.

As used herein, the term "Data acquisition" is the process of sampling signals that measure real world physical conditions and converting the resulting samples into digital numeric values that a computer manipulates. Data acquisition systems typically convert analog waveforms into digital values for processing. The components of data acquisition systems include sensors to convert physical parameters to electrical signals, signal conditioning circuitry to convert sensor signals into a form that can be converted to digital values, and analog-to-digital converters to convert conditioned sensor signals to digital values. Stand-alone data acquisition systems are often called data loggers.

As used herein, the term "Dashboard" is a type of interface that visualizes particular Key Performance Indicators (KPIs) for a specific goal or process. It is based on data visualization and infographics.

As used herein, a "Database" is a collection of organized information so that it can be easily accessed, managed, and updated. Computer databases typically contain aggregations of data records or files.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is known as a datum. Data sets can also consist of a collection of documents or files.

As used herein, a "sensor" is a device that detects and measures physical properties from the surrounding environment and converts this information into electrical or digital signals for further processing. Sensors play a crucial role in collecting data for various applications across industries. Sensors may be made of electronic, mechanical, chemical, or other engineering components. Examples include sensors to measure temperature, pressure, humidity, proximity, light, acceleration, orientation etc.

The term "infotainment system" or "in-vehicle infotainment system" (IVI) as used herein refers to a combination of vehicle systems which are used to deliver entertainment and information. In an example, the information may be delivered to the driver and the passengers of a vehicle/occupants through audio/ video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "environment" or "surrounding" as used herein refers to surroundings and the space in which a vehicle is navigating. It refers to dynamic surroundings in which a vehicle is navigating which includes other vehicles, obstacles, pedestrians, lane boundaries, traffic signs and signals, speed limits, potholes, snow, water logging etc.

The term "autonomous mode" as used herein refers to an operating mode which is independent and unsupervised.

The term "vehicle" as used herein refers to a thing used for transporting people or goods. Automobiles, cars, trucks, buses etc. are examples of vehicles.

The term "autonomous vehicle" also referred to as self-driving vehicle, driverless vehicle, robotic vehicle as used herein refers to a vehicle incorporating vehicular automation, that is, a vehicle that can sense its environment and move safely with little or no human input. Self-driving vehicles combine a variety of sensors to perceive their surroundings, such as thermographic cameras, Radio Detection and Ranging (RADAR), Light Detection and Ranging (LIDAR), Sound Navigation and Ranging (SONAR), Global Positioning System (GPS), odometry and inertial measurement unit. Control systems are designed for the purpose of interpreting sensor information to identify appropriate navigation paths, as well as obstacles and relevant signage.

The term "communication module" or "communication system" as used herein refers to a system which enables the information exchange between two points. The process of transmission and reception of information is called communication. The elements of communication include but are not limited to a transmitter of information, channel or medium of communication and a receiver of information.

The term "autonomous communication" as used herein comprises communication over a period with minimal supervision under different scenarios and is not solely or completely based on pre-coded scenarios or pre-coded rules or a predefined protocol. Autonomous communication, in general, happens in an independent and an unsupervised manner. In an embodiment, a communication module is enabled for autonomous communication.

The term "communication connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networks. A channel is used for the information transfer of, for example, a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

The term "communication" as used herein refers to the transmission of information and / or data from one point to another. Communication may be by means of electromagnetic waves. Communication is also a flow of information from one point, known as the source, to another, the receiver. Communication comprises one of the following: transmitting data, instructions, information or a combination of data, instructions, and information. Communication happens between any two communication systems or communicating units. The term communication, herein, includes systems that combine other more specific types of communication, such as: V2I (Vehicle-to-Infrastructure), V2N (Vehicle-to-Network), V2V (Vehicle-to-Vehicle), V2P (Vehicle-to-Pedestrian), V2D (Vehicle-to-Device), V2G (Vehicle-to-Grid), and Vehicle-to-Everything (V2X) communication.

The term "Vehicle-to-Vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications) that can use the messages from surrounding vehicles to determine potential crash threats as they develop.

The term "Vehicle-to-Everything (V2X) communication" as used herein refers to transmission of information from a vehicle to any entity that may affect the vehicle, and vice versa. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.).

The term "protocol" as used herein refers to a procedure required to initiate and maintain communication; a formal set of conventions governing the format and relative timing of message exchange between two communications terminals; a set of conventions that govern the interactions of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications between communications terminals; a formal set of conventions governing the format and relative timing of message exchange between communications terminals; a set of semantic and syntactic rules that determine the behavior of functional units in achieving meaningful communication; a set of semantic and syntactic rules for exchanging information.

The term "communication protocol" as used herein refers to standardized communication between any two systems. An example communication protocol is a DSRC protocol. The DSRC protocol uses a specific frequency band (e.g., 5.9 GHz (Gigahertz)) and specific message formats (such as the Basic Safety Message, Signal Phase and Timing, and Roadside Alert ) to enable communications between vehicles and infrastructure components, such as traffic signals and roadside sensors. DSRC is a standardized protocol, and its specifications are maintained by various organizations, including the Institute of Electrical and Electronics Engineers (IEEE) and Society of Automotive Engineers (SAE) International.

The term "bidirectional communication" as used herein refers to an exchange of data between two components. In an example, the first component can be a vehicle and the second component can be an infrastructure that is enabled by a system of hardware, software, and firmware.

The term "alert" or "alert signal" refers to a communication to attract attention. An alert may include visual, tactile, audible alert, and a combination of these alerts to warn drivers or occupants. These alerts allow receivers, such as drivers or occupants, the ability to react and respond quickly.

The term "in communication with" as used herein, refers to any coupling, connection, or interaction using signals to exchange information, message, instruction, command, and / or data, using any system, hardware, software, protocol, or format regardless of whether the exchange occurs wirelessly or over a wired connection.

The term "electronic control unit" (ECU), also known as an "electronic control module" (ECM), is usually a module that controls one or more subsystems. Herein, an ECU may be installed in a vehicle or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be an embedded system in automotive electronics. In another example, the electronic control unit is wirelessly coupled with automotive electronics.

The terms "non-transitory computer-readable medium" and "computer-readable medium" include a single medium or multiple media such as a centralized or distributed database, and / or associated caches and servers that store one or more sets of instructions. Further, the terms "non-transitory computer-readable medium" and "computer-readable medium" include any tangible medium that is capable of storing, encoding, or carrying a set of instructions for execution by a processor that, for example, when executed, cause a system to perform any one or more of the methods or operations disclosed herein. As used herein, the term "computer-readable medium" is expressly defined to include any type of computer-readable storage device and / or storage disk and to exclude propagating signals.

The term "Vehicle Data bus" as used herein represents the interface to the vehicle data bus (e.g., Controller Area Network (CAN), Local Interconnect Network (LIN), Ethernet/IP, FlexRay, and Media Oriented Systems Transport (MOST)) that may enable communication between the Vehicle on-board equipment (OBE) and other vehicle systems to support connected vehicle applications.

The term, "handshaking" refers to an exchange of predetermined signals between agents connected by a communications channel to assure each that it is connected to the other (and not to an imposter). This may also include the use of passwords and codes by an operator. Handshaking signals are transmitted back and forth over a communications network to establish a valid connection between two stations. A hardware handshake uses dedicated wires such as the requestto-send (RTS) and clear-to-send (CTS) lines in a Recommended Standard 232 (RS-232) serial transmission. A software handshake sends codes such as "synchronize" (SYN) and "acknowledge" (ACK) in a Transmission Control Protocol/Internet Protocol (TCP/IP) transmission.

The term "computer vision module" or "computer vision system" allows the vehicle to "see" and interpret the world around it. This system uses a combination of cameras, sensors, and other technologies such as Radio Detection and Ranging (RADAR), Light Detection and Ranging (LIDAR), Sound Navigation and Ranging (SONAR), Global Positioning System (GPS), and Machine learning algorithms, etc. to collect visual data about the vehicle's surroundings and to analyze that data in real-time. The computer vision system is designed to perform a range of tasks, including object detection, lane detection, and pedestrian recognition. It uses deep learning algorithms and other machine learning techniques to analyze visual data and make decisions about how to control the vehicle. For example, the computer vision system may use object detection algorithms to identify other vehicles, pedestrians, and obstacles in the vehicle's path. It can then use this information to calculate the vehicle's speed and direction, adjust its trajectory to avoid collisions, and apply the brakes or accelerate as needed. It allows the vehicle to navigate safely and efficiently in a variety of driving conditions.

As used herein, the term "driver" refers to such an occupant, even when that occupant is not actually driving the vehicle but is situated in the vehicle so as to be able to take over control and function as the driver of the vehicle when the vehicle control system hands over control to the occupant or driver or when the vehicle control system is not operating in an autonomous or semi-autonomous mode. Driver is also referred to as an operator of the vehicle.

The term "application server" refers to a server that hosts applications or software that delivers a business application through a communication protocol. An application server framework is a service layer model. It includes software components available to a software developer through an application programming interface. It is system software that resides between the operating system (OS) on one side, the external resources such as a database management system (DBMS), communications and Internet services on another side, and the users' applications on the third side.

The term "cyber security" as used herein refers to application of technologies, processes, and controls to protect systems, networks, programs, devices, and data from cyber-attacks.

The term "cyber security module" as used herein refers to a module comprising application of technologies, processes, and controls to protect systems, networks, programs, devices and data from cyber-attacks and threats. It aims to reduce the risk of cyber-attacks and protect against the unauthorized exploitation of systems, networks, and technologies. It includes, but is not limited to, critical infrastructure security, application security, network security, cloud security, Internet of Things (IoT) security.

The term "encrypt" used herein refers to securing digital data using one or more mathematical techniques, along with a password or "key" used to decrypt the information. It refers to converting information or data into a code, especially to prevent unauthorized access. It may also refer to concealing information or data by converting it into a code. It may also be referred to as cipher, code, encipher, encode. A simple example is representing alphabets with numbers - say, 'A' is '01', 'B' is '02', and so on. For example, a message like "HELLO" will be encrypted as "0805121215," and this value will be transmitted over the network to the recipient(s).

The term "decrypt" used herein refers to the process of converting an encrypted message back to its original format. It is generally a reverse process of encryption. It decodes the encrypted information so that only an authorized user can decrypt the data because decryption requires a secret key or password. This term could be used to describe a method of unencrypting the data manually or unencrypting the data using the proper codes or keys.

The term "cyber security threat" used herein refers to any possible malicious attack that seeks to unlawfully access data, disrupt digital operations, or damage information. A malicious act includes but is not limited to damaging data, stealing data, or disrupting digital life in general. Cyber threats include, but are not limited to, malware, spyware, phishing attacks, ransomware, zero-day exploits, trojans, advanced persistent threats, wiper attacks, data manipulation, data destruction, rogue software, malvertising, unpatched software, computer viruses, man-in-the-middle attacks, data breaches, Denial of Service (DoS) attacks, and other attack vectors.

The term "hash value" used herein can be thought of as fingerprints for files. The contents of a file are processed through a cryptographic algorithm, and a unique numerical value, the hash value, is produced that identifies the contents of the file. If the contents are modified in any way, the value of the hash will also change significantly. Example algorithms used to produce hash values: the Message Digest-5 (MD5) algorithm and Secure Hash Algorithm-1 (SHA1).

The term "integrity check" as used herein refers to the checking for accuracy and consistency of system related files, data, etc. It may be performed using checking tools that can detect whether any critical system files have been changed, thus enabling the system administrator to look for unauthorized alteration of the system. For example, data integrity corresponds to the quality of data in the databases and to the level by which users examine data quality, integrity, and reliability. Data integrity checks verify that the data in the database is accurate, and functions as expected within a given application.

The term "alarm" as used herein refers to a trigger when a component in a system or the system fails or does not perform as expected. The system may enter an alarm state when a certain event occurs. An alarm indication signal is a visual signal to indicate the alarm state. For example, when a cyber security threat is detected, a system administrator may be alerted via sound alarm, a message, a glowing LED, a pop-up window, etc. Alarm indication signal may be reported downstream from a detecting device, to prevent adverse situations or cascading effects.

As used herein, the term "cryptographic protocol" is also known as security protocol or encryption protocol. It is an abstract or concrete protocol that performs a security-related function and applies cryptographic methods often as sequences of cryptographic primitives. A protocol describes how the algorithms should be used. A sufficiently detailed protocol includes details about data structures and representations, at which point it can be used to implement multiple, interoperable versions of a program. Cryptographic protocols are widely used for secure application-level data transport. A cryptographic protocol usually incorporates at least some of these aspects: key agreement or establishment, entity authentication, symmetric encryption, and message authentication material construction, secured application-level data transport, nonrepudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

The embodiments described herein can be directed to one or more of a system, a method, an apparatus, and/or a computer program product at any possible technical detail level of integration. The computer program product can include a computer-readable storage medium (or media) having computer-readable program instructions thereon for causing a processor to carry out aspects of the one or more embodiments described herein.

The flowcharts and block diagrams in the figures illustrate the architecture, functionality and / or operation of possible implementations of systems, computer-implementable methods and / or computer program products according to one or more embodiments described herein. In this regard, each block in the flowchart or block diagrams can represent a module, segment and / or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and / or the blocks can sometimes be executed in the reverse order, depending upon the functionality involved. It will also be noted that each block of the block diagrams and / or flowchart illustration, and / or combinations of blocks in the block diagrams and / or flowchart illustration, can be implemented by special purpose hardware-based systems that can perform the specified functions and / or acts and / or carry out one or more combinations of special purpose hardware and / or computer instructions.

As used in this application, the terms "component," "system," "platform," "interface," and / or the like, can refer to and / or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and / or a computer. By way of illustration, both an application running on a server and the server can be a component. One or more components can reside within a process and / or thread of execution and a component can be localized on one computer and / or distributed between two or more computers. In another example, respective components can execute from various computer-readable media having various data structures stored thereon. The components can communicate via local and / or remote processes such as in accordance with a signal having one or more data packets (e.g., data from one component interacting with another component in a local system, distributed system and / or across a network such as the Internet with other systems via the signal). As another example, a component can be an apparatus with specific functionality provided by mechanical parts operated by electric or electronic circuitry, which is operated by a software and / or firmware application executed by a processor. In such a case, the processor can be internal and / or external to the apparatus and can execute at least a part of the software and / or firmware application. As yet another example, a component can be an apparatus that provides specific functionality through electronic components without mechanical parts, where the electronic components can include a processor and / or other means to execute software and / or firmware that confers at least in part the functionality of the electronic components. In an aspect, a component can emulate an electronic component via a virtual machine, e.g., within a cloud computing system.

The embodiments described herein include mere examples of systems and computer-implemented methods. It is, of course, not possible to describe every conceivable combination of components and / or computer-implemented methods for purposes of describing the one or more embodiments, but one of ordinary skill in the art can recognize that many further combinations and / or permutations of the one or more embodiments are possible. Furthermore, to the extent that the terms "includes," "has," "possesses," and the like are used in the detailed description, claims, appendices and / or drawings such terms are intended to be inclusive in a manner similar to the term "comprising" as "comprising" is interpreted when employed as a transitional word in a claim.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and / or technical improvement over technologies found in the marketplace, and / or to enable others of ordinary skill in the art to understand the embodiments described herein.

The term "occupant" as used herein refers to any individual who is inside or on the vehicle. Broadly it may encompass anyone or anything inside the vehicle. It includes drivers and passengers. In certain contexts, items or goods being transported may also be considered as occupants. The terms "user" may also be used to refer to the occupant of the vehicle.

The term "occupant profile," as used herein refers to a set of personalized preferences and settings associated with individuals. For example, an occupant profile includes information such as seat positions, climate control settings, mirror adjustments, entertainment preferences, and other customizable features. These profiles are often linked to specific individuals, allowing the vehicle's onboard system to recognize and apply the appropriate settings when a recognized occupant enters the vehicle. Occupant profile may comprise any data stored in a data store, and/or database related to the person's physique, vehicles used by the person and each vehicle's settings for the person, and devices that belong to the person.

The term "vehicle setting" or "vehicle settings" as used herein refers to the customizable configurations and preferences within a vehicle that cater to the comfort, safety, and convenience of its occupant/s. These settings encompass a range of features, including seat adjustments (such as position, lumbar support, and memory presets), climate control preferences, mirror positions, steering wheel settings, cruise settings, and personalized configurations for entertainment and infotainment systems. Vehicle settings may allow occupants to tailor their in-vehicle experience, ensuring a personalized and ergonomic environment. Vehicle settings may be stored to the occupant's profile. It is also referred to as user preferences or occupant preferences.

The term "limitation setting" or "limitation settings" as used herein refers to restrictions or parameters imposed on a vehicle's operation when driven by individuals other than the primary owner or designated user. These settings are designed to regulate and control certain aspects of the vehicle's functionality, such as speed limits, geographic boundaries, acceleration patterns, or even specific timeframes for operation. The purpose of limitation settings may be to promote safety, ensure responsible usage, and provide a level of control or oversight for those who have authority over the vehicle or concern/responsibility over the occupant. These are also referred to as "limitations" or "restrictions".

The term "setting" or "settings" as used herein refers to one or more of vehicle setting/s and limitation setting/s.

The term "priority level" as used herein refers to an indicator associated with retaining authority or determining the overriding capacity of certain operations. For example, in a vehicle with multiple occupants, each with different occupant profiles, priority levels may be assigned to determine which profile/limitation takes precedence. A higher priority level could indicate a greater authority, allowing certain limitations to override or take precedence over lower priority limitations. Conversely, a lower priority level might imply restrictions on the ability to override actions with higher priority. This concept is employed in real-time vehicle operation, where safety and emergency may be given priority over comfort-related settings. In this context, priority levels help ensure that an occupant's limitations and settings do not override other occupant's settings and limitations inappropriately.

The term "vehicle system" or "system of a vehicle" as used herein refers to the vehicle comprising the system described in the current application. The system may be integrated and is a part of the vehicle, for example a system executing a method on a processor storing instructions in a non-transitory memory of the computer system of the vehicle. The system may be external but the instructions or method is executed through the vehicle, for example the method being on cloud but is accessed and executed by the vehicle. The system may be designed for a specific purpose to carry out a certain function or task, for example, transmitting a specific message to a user device. The designed system comprising instructions may also be using existing systems present on the vehicle, for example, a communication system of the vehicle.

Most vehicles allow the owner of the vehicle to set up the vehicle and its functions, based on the owner's profile. However, the problem is that when a non-owner driver uses the vehicle, the non-owner driver would have to set up the user profile (e.g., adjust the seats, temperature, music, etc.). Typically, this occurs when someone rents a vehicle or borrows someone's vehicle. It would be better if the vehicle could recognize the driver regardless of ownership and adjust various aspects of the vehicle. Thus, a smart system needs to be added to each vehicle that can recognize a driver, and additional passenger/s, if any, and initiate adjustments to the vehicle.

In an aspect, the vehicle can connect with a device comprising user preferences and limitations as the device nears the vehicle. Based on proximity of the device, the vehicle's smart system can begin adjusting seats, mirrors, etc., if identified that the new occupant is the driver versus a passenger.

In an aspect of the connection process when a person enters someone else's vehicle, using various technologies, a smart system recognizes the person (driver or a passenger) and determines 1) person's preferences and 2) any adjustments to functionality (speed limits, stereo volume, etc.). For example, vehicle ABC (e.g., owned by another such as a rental vehicle, a friend or family member vehicle, etc.) comprises a smart system that allows user preferences to be set based a device/transmitter (e.g., phone, key FOB (Frequency Operated Button), badge, etc.) carried by the new occupant. As the occupant (e.g., driver or a passenger) nears vehicle ABC, the smart system begins a handshake process to connect with one or more devices that can provide user profile information. Once a connection is established with one or more devices, the system begins to retrieve information about the user and limitations associated with the user. For example, a message from the device can be transmitted that is received by the smart system comprising a receiver as the device nears the vehicle ABC. This reception of the message initiates the handshake process to establish the connection. Once the connection is established, user preferences and adjustments are extracted from the device. In an aspect, the smart system can transmit a request to provide the information. In another aspect, the device can automatically transmit the information once the handshake process is completed. Based on the information, the smart system initiates adjustments to seats, mirrors, temperature, radio stations, communication settings such as Bluetooth^{®} connection of the phone and contact list, etc. The system begins monitoring for any additional adjustments made by the occupant and stores the new settings to be uploaded to the user device. In an aspect, any adjustments made during the rental period are transmitted to the transmitter that includes make and model of the vehicle, Vehicle Identification Number (VIN), and seat and mirror setting so that next time a user uses a similar vehicle, those adjustments will be made automatically. The device includes a transmitter, receiver, and memory (the information can be uploaded or downloaded from the cloud automatically or initiated by the user (e.g., actuating a button on FOB, using an app from the phone, etc.)

The system also comprises an erasure procedure wherein all adjustments to the vehicle are reset once the user exits the vehicle or the rental/borrowing period ends. This action can be prompted on the infotainment system to allow the user to either cancel or continue with the erasure procedure.

In an aspect, the smart system receives a message that is broadcasted by the transmitter. The message comprises user preference information. The information comprises user preference (e.g., seat position, mirrors position, temperature preferences, information to determine the routing, etc.). Upon receipt of the message, the system may initiate a handshake sequence to establish a connection with the transmitter. The system also needs to transmit a message back to the device if the user makes any adjustments during the use of the vehicle. These new adjustments are associated with the vehicle ID, model and make year.

When someone lends or rents a vehicle (e.g., child borrowing parents' vehicle), they may not know who the passengers are that are getting into the vehicle. For example, parents may be okay to provide no limitation to use of the vehicle when lending their vehicle to their child. However, when additional passengers are involved, the parent may want to limit certain functionalities of the vehicle, such as max speed, max acceleration, use of sport mode, location limitations, stereo volume, etc., for the safety of the passengers. Today's systems do not allow this control.

In an aspect, a user profile can be provided for a driver or the passenger. In case of the driver, the system can adjust seats, mirrors, and temperature on the driver's side. Based on limitations associated with transmitter/driver, the system may limit where the driver is allowed to travel (geofencing or route limitations), and how fast the driver can accelerate, or not allow the driver to go over any posted speed limit without an emergency. If no limitations are provided for the driver/borrower, the system can create limitations based on the passengers being added. For example, the driver is not provided limitations at the beginning of the borrowing period, but when adding passengers of a certain age to become occupants of the vehicle, such as elderly or minors becoming passengers, the system determines when elderly or minors are passengers and automatically places limitations on acceleration or maximum speed. In an aspect, the limitation may be modified based on the number of passengers added after the initial connection with the smart vehicle system. For example, the driver was allowed to go to location X, but now with additional passengers added, the driver is not allowed to go to location X. Also, if a minor enters the vehicle, the vehicle can no longer be driven over a certain speed limit, or the sport mode option is not available.

In an aspect, as a passenger enters the vehicle, their user profile is determined using various methods. For example, as the passenger enters a vehicle, the passenger's phone or the passenger's transmitter connects to the vehicle and provides the passenger's profile, including age to the smart system. Based on the passenger's profile and preferred limitation, the vehicle can implement those limitations and notify the driver of the limitations using the infotainment system. Limitations of use of the vehicle can be set up to limit functionality of the vehicle if additional passengers of a certain age become occupants if the vehicle is lent out or rented. The limitations can be modified as more passengers are added or removed. In an embodiment, when more passengers are added, then more of the limitations are to be implemented. A message comprising user information such as device identity, name, height, weight, body size, and limitation settings, such as maximum speed, maximum acceleration, geofencing, can be transmitted once the passenger's device makes a connection to the smart system of the vehicle. This novel idea will allow a parent of a passenger to set limitations on functions of the vehicle that their child will enter. It can also be useful for passengers using ride-share or taxis.

Most vehicles allow the owner of the vehicle to set up the vehicle and its functions based on the owner profile. However, the problem is that when a driver uses a vehicle owned by someone else, the driver would have to set up the user profile (e.g., adjust the seats, temperature, music, etc.). Typically, this occurs when someone rents a vehicle or borrows someone's vehicle. Thus, a smart system needs to be added to each vehicle that can connect with a device comprising user preferences and limitations.

In an aspect, a transmitter on the user device assists in establishing a connection with a vehicle by broadcasting a connection request message. Once the connection is established, the user device transmitter broadcasts a user preference message comprising user identity, seat positions, mirror position, temperature setting, routing information, one or more limitations that limits functionality of the vehicle such as max vehicle speed, max acceleration allowed, geofencing data, sobriety verification requirement, etc. In an aspect the transmitter can be a key fob, identity card, phone device, or any small portable device capable of exchanging messages with a smart system to set up user preferences and limitations. In an aspect, the user device transmitter may receive settings message/s from the vehicle system if the user has modified the settings. This may be due to the type of vehicle that is borrowed. The message may comprise a seat setting, a mirror setting, a make of the vehicle, a model of the vehicle, a model year of the vehicle, and a vehicle identification number.

When a user borrows a vehicle or rents a vehicle for a short period of time, the borrowed vehicle does not have the user's preferences stored in the borrowed vehicle. In addition, when a passenger enters a vehicle, their preferences are also not available in the vehicle. Thus, a system is needed to receive functions and settings information from a device to modify the settings for a period of use.

In an aspect, a transmitter device (e.g., phone, portable device with microchip, key fob, etc.) is connected to a smart system of a vehicle. See below regarding one aspect of the connection process. In an embodiment, the key fob may comprise a short-range radio transmitter/radio frequency identification (RFID) chip and antenna. Once the connection with the vehicle is established (handshake), the transmitter transmits a message to the smart system. The message comprises height data, weight data, body size data, one or more seat/mirror adjustment data comprising a default seat adjustment that is associated with make and model used by the user's own vehicle (the system has to map the seat and mirror adjustment to current make and model), make and model of vehicle associated with the seat/mirror adjustment, additional seat/mirror adjustment data with specific make and model data for all previous vehicles borrowed or rented, temperature preferences, radio settings data, phone setting data to establish or add a phone to vehicles Bluetooth list devices, etc.

In an aspect, using the identity from limitation settings, the system can determine additional limitations even if no limitations are added, for example, based on prior use or a driving record. If the driver abused the vehicle or received speeding violations, then the vehicle smart system can limit use of the vehicle to protect the owner's interests. A message comprising a seat setting data, a mirror setting data, a make of the vehicle, a model of the vehicle, a model year of the vehicle, and a vehicle identification number may be received at the device from the vehicle smart system. This message is transmitted by the vehicle smart system if the user adjusts settings to the vehicle during the borrowing period. This data is stored in memory or in the cloud upon receipt.

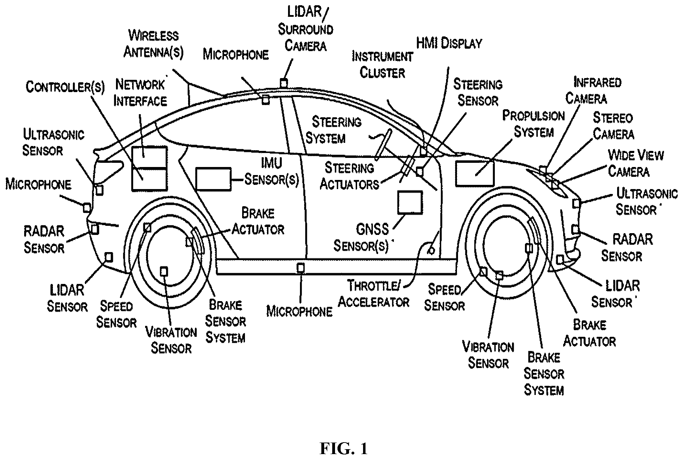

FIG. 1 is an illustration of a vehicle with various sensors, actuators, and systems according to an embodiment. The system comprises various sensors, such as ultrasonic sensor, LIDAR sensors, radar sensors, etc., actuators such as brake actuators, steering actuators, etc., and various subsystems such as propulsion system, steering system, brake sensor system, communication system, etc. FIG. 1 is depicted as an example system; neither is it limited by the systems depicted nor is it an exhaustive list of the sensors, actuators, and systems / subsystems, and / or features of the autonomous vehicle. Further, the vehicle shown should not be construed as limiting in terms of the arrangement of any of the sensors, actuators, and systems / subsystems depicted. These sensors, actuators, and systems / subsystems can be arranged as suited for a purpose to be performed by the autonomous vehicle. Autonomous vehicles, also known as self-driving vehicles or driverless vehicles, are vehicles that can navigate and operate without human intervention. Sensors, for example, including cameras, LIDARs, radars, and ultrasonic sensors enable autonomous vehicles to detect and recognize objects, obstacles, and pedestrians on the road. Autonomous vehicles use advanced control systems to make real-time decisions based on sensor data and pre-programmed rules or intelligence-based decision systems. These systems control, for example, acceleration, braking, steering, and communication of the vehicle. Navigation systems such as GPS, maps, and other location-based technologies help autonomous vehicles navigate and plan the optimal route to a destination. Communication systems of autonomous vehicles help them communicate with other vehicles and infrastructure, such as traffic lights and road signs, to exchange information and optimize traffic flow. Autonomous vehicles have several safety features, including collision avoidance systems, emergency braking, and backup systems in case of system failures. Autonomous vehicles are assisted by artificial intelligence and machine learning algorithms to analyze data, recognize patterns, and improve performance over time.

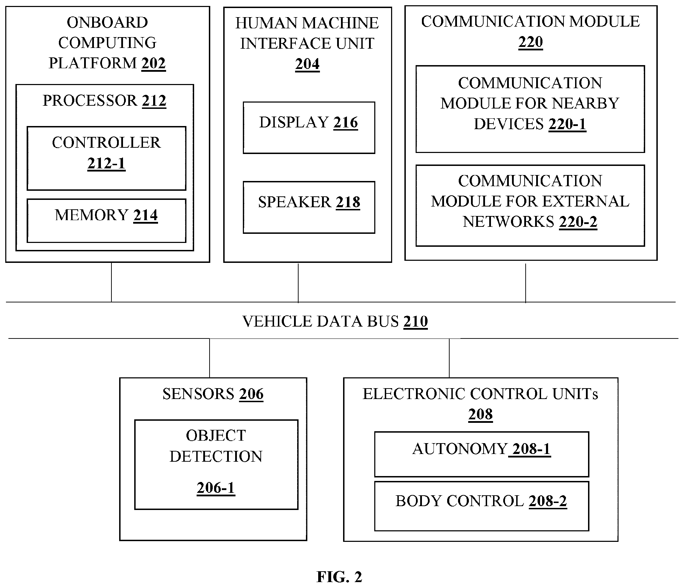

FIG. 2 shows a block diagram of electronic components of a vehicle according to an embodiment. In the illustrated example, the electronic components include an onboard computing platform 202, a human-machine interface (HMI) unit 204, the communication module 220, sensors 206, electronic control units (ECUs) 208, and a vehicle data bus 210. FIG. 2 illustrates an example architecture of some of the electronic components as displayed in FIG. 1. The onboard computing platform 202 includes a processor 212 (also referred to as a microcontroller unit or a controller) and memory 214. In the illustrated example, processor 212 of the onboard computing platform 202 is structured to include the controller 212-1. In other examples, the controller 212-1 is incorporated into another ECU with its own processor and memory. The processor 212 may be any suitable processing device or set of processing devices such as, but not limited to, a microprocessor, a microcontroller-based platform, an integrated circuit, one or more field programmable gate arrays (FPGAs), and / or one or more application-specific integrated circuits (ASICs). The memory 214 may be volatile memory (e.g., RAM including non-volatile RAM, magnetic RAM, ferroelectric RAM, etc.), non-volatile memory (e.g., disk memory, FLASH memory, EPROMs, EEPROMs, memristor-based non-volatile solid-state memory, etc.), unalterable memory (e.g., EPROMs), read-only memory, and / or high-capacity storage devices (e.g., hard drives, solid state drives, etc.). In some examples, memory 214 includes multiple kinds of memory, particularly volatile memory, and non-volatile memory. Memory 214 is computer-readable media on which one or more sets of instructions, such as the software for operating the methods of the present disclosure, can be embedded. The instructions may embody one or more of the methods or logic as described herein. For example, the instructions reside completely, or at least partially, within any one or more of the memory 214, the computer-readable medium, and / or within the processor 212 during execution of the instructions.

The HMI unit 204 provides an interface between the vehicle and a user. The HMI unit 204 includes digital and / or analog interfaces (e.g., input devices and output devices) to receive input from, and display information for, the user(s). The input devices include, for example, a control knob, an instrument panel, a digital camera for image capture and / or visual command recognition, a touch screen, an audio input device (e.g., cabin microphone), buttons, or a touchpad. The output devices may include instrument cluster outputs (e.g., dials, lighting devices), haptic devices, actuators, a display 216 (e.g., a heads-up display, a center console display such as a liquid crystal display (LCD), an organic light emitting diode (OLED) display, a flat panel display, a solid state display, etc.), and / or a speaker 218. For example, the display 216, the speaker 218, and / or other input and output device(s) of the HMI unit 204 are operable to emit an alert, such as an alert to request manual takeover to an operator (e.g., a driver) of the vehicle. Further, the HMI unit 204 of the illustrated example includes hardware (e.g., a processor or controller, memory, storage, etc.) and software (e.g., an operating system, etc.) for an infotainment system that is presented via display 216.

Sensors 206 are arranged in and / or around the vehicle to monitor properties of the vehicle and / or an environment in which the vehicle is located. One or more of the sensors 206 may be mounted to measure properties around an exterior of the vehicle. Additionally, or alternatively, one or more of sensors 206 may be mounted inside a cabin of the vehicle or in a body of the vehicle (e.g., an engine compartment, wheel wells, etc.) to measure properties of the vehicle and / or interior sensing of the vehicle. For example, the sensors 206 include accelerometers, odometers, tachometers, pitch and yaw sensors, wheel speed sensors, microphones, tire pressure sensors, biometric sensors, ultrasonic sensors, infrared sensors, Light Detection and Ranging (LIDAR / lidar), Radio Detection and Ranging System (radar), Global Positioning System (GPS), millimeter wave (mmWave) sensors, cameras and / or sensors of any other suitable type. Sensors may comprise object detection sensors 206-1 such as LIDAR, radar, cameras, ultrasonic sensors, GPS sensors, etc., to detect distances between the vehicle and an object or target in its vicinity.

According to an embodiment of the system, the one or more sensors associated with the vehicle comprises one or more of a magnetic sensor, a proximity sensor, a load sensor, an electrical sensor, and a vision sensor, a motion sensor, a temperature sensor, and a GPS sensor. According to an embodiment of the system, the one or more sensors associated with the vehicle comprises a camera coupled with a computer vision system. According to an embodiment of the system, the one or more sensors associated with the vehicle is mounted on the vehicle such that a change in a sensor data is used to detect an occupant of the vehicle.

The ECUs 208 monitor and control the subsystems of the vehicle. For example, the ECUs 208 are discrete sets of electronics that include their own circuit(s) (e.g., integrated circuits, microprocessors, memory, storage, etc.) and firmware, sensors, actuators, and / or mounting hardware. The ECUs 208 communicate and exchange information via a vehicle data bus (e.g., the vehicle data bus 210). Additionally, the ECUs 208 may communicate properties (e.g., status of the ECUs, sensor readings, control state, error, and diagnostic codes, etc.) and / or receive requests from each other. For example, the vehicle may have dozens of the ECUs that are positioned in various locations around the vehicle and are communicatively coupled by the vehicle data bus 210.

In the illustrated example, the ECUs 208 include the autonomy unit 208-1 and a body control module 208-2. For example, the autonomy unit 208-1 is operable to perform autonomous and / or semi-autonomous driving maneuvers (e.g., defensive driving maneuvers) of the vehicle based upon, at least in part, instructions received from the controller 212-1 and / or data collected by the sensors 206 (e.g., object detection sensors). Further, the body control module 208-2 controls one or more subsystems throughout the vehicle, such as power windows, power locks, an immobilizer system, power mirrors, etc. For example, the body control module 208-2 includes circuits that drive one or more relays (e.g., to control wiper fluid, etc.), brushed direct current (DC) motors (e.g., to control power seats, power locks, power windows, wipers, etc.), stepper motors, LEDs, safety systems (e.g., seatbelt pretensioner, air bags, etc.), etc.

The vehicle data bus 210 communicatively couples the communication module 220, the onboard computing platform 202, the HMI unit 204, the sensors 206, and the ECUs 208. In some examples, the vehicle data bus 210 includes one or more data buses. The vehicle data bus 210 may be implemented in accordance with a controller area network (CAN) bus protocol as defined by International Standards Organization (ISO) 11898-1, a Media Oriented Systems Transport (MOST) bus protocol, a CAN flexible data (CAN-FD) bus protocol (ISO 11898-7) and/a K-line bus protocol (ISO 9141 and ISO 14230-1), and / or an Ethernet^{™} bus protocol IEEE 802.3 (2002 onwards), etc.

The communication module for nearby devices 220-1 is operable to communicate with other nearby communication devices. In the illustrated example, communication module 220 includes a dedicated short-range communication (DSRC) module. A DSRC module includes antenna(s), radio(s) and software to communicate with nearby vehicle(s) via vehicle-to-vehicle (V2V) communication, infrastructure-based module(s) via vehicle-to-infrastructure (V2I) communication, and / or, more generally, nearby communication device(s) (e.g., a mobile device-based module) via vehicle-to-everything (V2X) communication. V2V communication allows vehicles to share information such as speed, position, direction, and other relevant data, enabling them to cooperate and coordinate their actions to improve safety, efficiency, and mobility on the road. It may rely on dedicated short-range communication (DSRC) and other wireless protocols that enable fast and reliable data transmission between vehicles. V2V communication, which is a form of wireless communication between vehicles, allows vehicles to exchange information and coordinate with other vehicles on the road.

Additionally, or alternatively, the communication module for external networks 220-2 includes a cellular vehicle-to-everything (C-V2X) module. A C-V2X module includes hardware and software to communicate with other vehicle(s) via V2V communication, infrastructure-based module(s) via V2I communication, and / or, more generally, nearby communication devices (e.g., mobile device-based modules) via V2X communication. For example, a C-V2X module is operable to communicate with nearby devices (e.g., vehicles, roadside units, mobile devices, etc.) directly and / or via cellular networks. Currently, standards related to C-V2X communication are being developed by the 3rd Generation Partnership Project. Further, the communication module 220-2 is operable to communicate with external networks. For example, the communication module 220-2 includes hardware (e.g., processors, memory, storage, antenna, etc.) and software to control wired or wireless network interfaces. In the illustrated example, the communication module 220-2 includes one or more communication controllers for cellular networks (e.g., Global System for Mobile Communications (GSM), Universal Mobile Telecommunications System (UMTS), Long Term Evolution (LTE), Code Division Multiple Access (CDMA)), Near Field Communication (NFC) and / or other standards-based networks (e.g., WiMAX (IEEE 802.16m), local area wireless network (including IEEE 802.11 a/b/g/n/ac or others), Wireless Gigabit (IEEE 802.11ad), etc.). In some examples, the communication module for external networks 220-2 includes a wired or wireless interface (e.g., an auxiliary port, a Universal Serial Bus (USB) port, a Bluetooth^{®} wireless node, etc.) to communicatively couple with a mobile device (e.g., a smart phone, a wearable, a smart watch, a tablet, etc.). In such examples, the vehicle may communicate with the external network via the coupled mobile device. The external network(s) may be a public network, such as the Internet; a private network, such as an intranet; or combinations thereof, and may utilize a variety of networking protocols now available or later developed including, but not limited to, TCP/IP-based networking protocols.

In an embodiment of the system, the Vehicle-to-Vehicle (V2V) communication is based on wireless communication protocols using at least one of a Dedicated Short-Range Communications (DSRC), and a Cellular Vehicle-to-Everything (C-V2X) technology. In an embodiment, the communication module is enabled for an autonomous communication, wherein the autonomous communication comprises communication over a period with minimal supervision under different scenarios. The communication module comprises a hardware component comprising, a vehicle gateway system comprising a microcontroller, a transceiver, a power management integrated circuit, an Internet of Things device capable of transmitting one of an analog and a digital signal over one of a telephone, a communication, either wired or wirelessly.

The autonomy unit 208-1 of the illustrated example is operable to perform autonomous and / or semi-autonomous driving maneuvers, such as defensive driving maneuvers, for the vehicle. For example, the autonomy unit 208-1 performs the autonomous and / or semi-autonomous driving maneuvers based on data collected by the sensors 206. In some examples, the autonomy unit 208-1 is operable to operate a fully autonomous system, a park-assist system, an advanced driverassistance system (ADAS), and / or other autonomous system(s) for the vehicle.

Further, in the illustrated example, controller (or control module) 212-1 is operable to monitor an ambient environment of the vehicle. For example, to enable the autonomy unit 208-1 to perform autonomous and / or semi-autonomous driving maneuvers, the controller 212-1 collects data that is collected by sensors 206 of the vehicle. In some examples, the controller 212-1 collects location-based data via the communication module 220-1 and / or another module (e.g., a GPS receiver) to facilitate the autonomy unit 208-1 in performing autonomous and / or semi-autonomous driving maneuvers. Additionally, the controller 212-1 collects data from (i) adjacent vehicle(s) via the communication module 220-1 and V2V communication and / or (ii) roadside unit(s) via the communication module 220-1 and V2I communication to further facilitate the autonomy unit 208-1 in performing autonomous and / or semi-autonomous driving maneuvers.

In some examples, controller 212-1 is operable to determine the takeover time of the adjacent vehicle based on measured characteristics of the vehicle combination and measured characteristics of the adjacent vehicle (e.g., velocity, acceleration, dimensions, etc.), the operator of the adj acent vehicle (e.g., a measured reaction time, etc.), and / or an environment of the adjacent vehicle (e.g., road conditions, weather conditions, etc.). Further, the time-to-collision corresponds with the time it would take for the adjacent vehicle to collide with another vehicle (e.g., a third vehicle) and / or object (e.g., a guardrail, a highway lane divider, etc.) if the current conditions were maintained.

According to an embodiment of the system, the vehicle-to-vehicle(V2V) communication is based on a wireless communication protocol using at least one of a Dedicated Short-Range Communications (DSRC), and a Cellular Vehicle-to-Everything (C-V2X) technology. According to an embodiment of the system, the V2X communication includes at least one of a Vehicle-to-Network (V2N), Vehicle-to-Grid (V2G), Vehicle-to-Device (V2D), and Vehicle-to-Pedestrian (V2P). Then, the system notifies nearby or surrounding vehicles or vehicles communicating with the vehicle's communication module. The vehicle uses, for example, a message protocol, a message that goes to the other vehicles via a broadcast.

In an embodiment, a connection is established between a vehicle and the user device. The user device is detected by exchanging handshaking signals. Handshaking is the automated process for negotiation of setting up a communication channel between entities. The processor sends a start signal through the communication channel in order to detect a user device. If the user device receives the signal, the processor may receive an acknowledgement signal from the user device. Upon receiving the acknowledgement signal, the processor establishes a secured connection with the user device. The processor may receive a signal at the communication module from the user device. The processor may further automatically determine the origin of the signal. The processor communicatively connects the communication module to the user device. Then the processor is operable to send and / or receive a message to and / or from the user device. The signals received by the communication module may be analyzed to identify the origin of the signal to determine the location of the user device.

In an embodiment, the system is enabled for bidirectional communication. The system or vehicle sends a signal and then receives a signal/communication from the user device. As a first step of the method according to the disclosure, a data link between the vehicle and the external device is set up in order to permit data to be exchanged between the vehicle and the user device in the form of a bidirectional communication. This can take place, for example, via a radio link or a data cable. It is therefore possible for the user device to receive data from the vehicle or for the vehicle to request data from the user device. In an embodiment, bidirectional communication comprises the means for data acquisitions and are designed to exchange data bidirectionally with one another. In addition, at least the vehicle comprises the logical means for gathering the data and arranging it to a certain protocol based on the receiving entity's protocol. Initially, a data link for bidirectional communication is set up. The vehicle and the user device can communicate with one another via this data link and therefore request or exchange data, wherein the data link can be implemented, for example, as a cable link or radio link. Bidirectional communication has various advantages as described herein. In various embodiments, data is communicated and transferred at a suitable time interval, including, for example, 200 millisecond (ms) intervals, 100 ms intervals, 50 ms intervals, 20 ms intervals, 10 ms intervals, or even more frequent and / or in real-time or near real-time, in order to allow a vehicle to respond to, or otherwise react to, data. Bidirectional communication may be used to facilitate data exchange.

In an embodiment, the vehicle may transmit a message via a communication link. It can be using any combination of vehicle to vehicle (V2V), vehicle to everything (V2X) or vehicle to infrastructure (V2I) type of communication. In an embodiment of the system, the vehicle is operable to establish a communication via a communication module with the user device to obtain occupant profile, wherein the occupant profile comprises vehicle settings and limitation settings. In an embodiment of the system, information about the user/occupant is obtained using a LIDAR, a radar, and a camera. In an embodiment of the system, the communication between the vehicle and the user device is via V2X communication. In an embodiment of the system, V2X communication is based on wireless communication protocols using at least one of a Dedicated Short-Range Communications (DSRC), and a Cellular Vehicle-to-Everything (C-V2X) technology. In an embodiment of the system, the communication between the vehicle and the trailer or attachment is via an internet connection.

According to an embodiment of the system, the communication module is enabled for at least one of a vehicle-to-vehicle (V2V) communication, a vehicle-to-infrastructure (V2I) communication, a vehicle-to-everything (V2X) communication, and a Vehicle-to-Network communication. According to an embodiment of the system, the communication module supports a communication protocol, wherein the communication protocol comprises at least one of a Advanced Message Queuing Protocol (AMQP), Message Queuing Telemetry Transport (MQTT) protocol, Simple (or Streaming) Text Oriented Message Protocol (STOMP), Zigbee protocol, Unified Diagnostic Services (UDS) protocol, Open Diagnostic exchange format (ODX) protocol, Diagnostics Over Internet Protocol (DoIP), On-Board Diagnostics (OBD) protocol, and a predefined protocol standard.

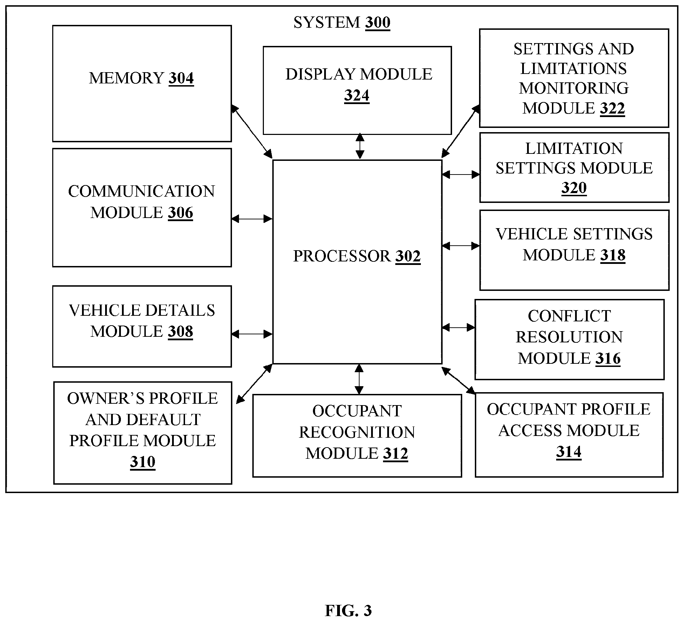

FIG. 3 shows the block diagram of the system 300 for accessing user profile and configuring functions of a vehicle smart system based on a user profile according to an embodiment. The system comprises a processor 302, memory 304, communication module 306, vehicle details module 308, owner's profile/ default profile module 310, occupant recognition module 312, occupant profile access module 314, conflict resolution module 316, vehicle settings module 318, limitation settings module 320, settings and limitations monitoring module 322, and display module 324.

Processor 302 may be a high-performance, multi-core CPU or system-on-chip (SoC) solution to process vast amounts of data from various sensors that may be used. Processor 302 processes data from sensors, such as cameras, LIDAR, radar, and other inputs to make real-time decisions, recommendations, and to execute control actions for the vehicle. Processor 302 may comprise Graphics Processing Units (GPUs). GPUs are utilized for their ability to accelerate tasks like image and sensor data processing. Some vehicles may incorporate Field-Programmable Gate Arrays (FPGAs) to efficiently perform specialized computations, while others might leverage Application-Specific Integrated Circuits (ASICs) for optimized functions. The choice of processor depends on factors such as the vehicle's level of autonomy, processing requirements, power consumption, and thermal considerations. Processors, also known as central processing units (CPUs), are the heart and brain of any computer or electronic device capable of executing instructions. Processor or processors' function is to process data and perform calculations, etc. At the core of their operation lies data processing, where they handle arithmetic and logical operations on data stored in memory. CPUs execute instructions, which are sets of specific operations encoded in machine language, to perform various tasks. The control unit within, or interacting with, the processor manages and coordinates the execution of instructions, fetching them from memory, decoding them, and directing the appropriate components to execute the instruction. To ensure a controlled and orderly flow of tasks, processors use an internal clock that generates regular electrical pulses, synchronizing their operations through clock cycles. Processors support multitasking environments, rapidly switching between executing different tasks for various applications. Additionally, they may work with the operating system to manage virtual memory, allowing programs to access more memory than is physically available, and to efficiently manage memory usage. Processor or processors may be integrated with security features, including hardware-level encryption, memory protection, and support for secure execution environments, enhancing the system's security against potential threats. The processor may run sophisticated algorithms and artificial intelligence (AI) software to analyze sensor data, detect users, interpret the environment, and help in decision making. Its high-performance capabilities and parallel processing help ensure the vehicle can perceive and respond to its surroundings quickly and accurately. In an embodiment, the processor may be a neuromorphic processor, inspired by the human brain, which offers a unique approach to handling AI tasks. The processor interacts and exchanges data with one or more of the other components or modules of the system, for example, memory 304, communication module 306, vehicle details module 308, owner's profile/ default profile module 310, occupant recognition module 312, occupant profile access module 314, conflict resolution module 316, vehicle settings module 318, limitation settings module 320, settings and limitations monitoring module 322, and display module 324, as shown in FIG.3.

Memory 304 may be a non-volatile memory (NVM) which is utilized in reliable operations of the system, ensuring that data is preserved even during power interruptions or failures. Various NVM technologies are utilized, such as flash memory for storing the operating system and software, EEPROM for retaining configuration data, calibration values, and sensor settings, Ferroelectric RAM (FRAM) for critical real-time information, and emerging technologies like ReRAM for potential performance enhancements due to its high-speed operation and low power consumption. In an embodiment, the memory may be a cloud-based memory. In another embodiment, the memory may be a local memory. In another embodiment, it may be a combination of local and cloud-based memory. Local memory refers to the traditional memory components present in a physical device, such as a computer's RAM, hard disk drives (HDDs), or solid-state drives (SSDs). It provides fast access to data and is directly connected to the device, making it suitable for immediate processing tasks and offline use. On the other hand, cloud-based memory relies on remote servers and services provided by third-party cloud providers to store and manage data over the internet. Systems can access their data from anywhere with an internet connection, allowing for seamless collaboration and scalability. Cloud-based memory is often used for storing large amounts of data, enabling data sharing, and providing backup and disaster recovery solutions. The combination of local memory and cloud-based memory allows for flexible and efficient data management tailored to different needs of the system.

Communication module 306, functions are similar to communication module 220 as described herein in this application in relation to FIG. 2. Further it facilitates communication between different modules within the system, communication between the user device and the vehicle.

Vehicle details module 308 comprises information about a vehicle, encompassing details like the Vehicle Identification Number (VIN), make, model, year of manufacture, body type. It may further comprise vehicle weight, engine specifications, transmission details, fuel efficiency, dimensions, safety features, vehicle's characteristics, performance, and history. It further comprises a list of user-configurable settings, such as adjustable seat positions, configurable infotainment settings, configurable driver assistance preferences, and configurable display 324 preferences for dashboard information. It may further comprise presence, details, and functionality of safety elements, such as airbags, anti-lock braking systems (ABS), electronic stability control (ESC), and other advanced driver assistance systems (ADAS), etc. It may further comprise maintenance and service records, driving profile records, usage records, etc., providing a history of repairs and routine maintenance, driving habits of drivers who drove the vehicle, usage of the vehicle in terms of handling, etc. It may further comprise the updates on the software and hardware features made to the vehicle via the cloud. In an embodiment, the Vehicle details module 308 comprises all the details that may be present in the vehicle's manual, organized and accessible digitally.

Owner's profile and default profile module 310 comprises a record with various details about an individual's ownership and interaction with a specific vehicle and/or all the vehicles used by the owner (user). The profile may include the owner's personal information such as full name, contact details, and address. It incorporates the Vehicle Identification Number (VIN) of the owned vehicle, serving as a unique identifier linked to manufacturing details, model specifications, and the vehicle's history. The owner's profile may further comprise and store vehicle settings provided by the owner of the vehicle. The vehicle settings provided by the owner may also be learned settings based on use. The settings can further include remote access settings, as well as settings allowing the user to control vehicle components from a remote location or a remote computer. The settings can also be based on historical driving patterns, recent driving activities, the performance of the vehicle during specific driving sessions, the performance of specific vehicle components, etc. The owner's profile can include specific settings, preferences, use, history, and learned settings from earlier uses of one or more vehicles. The profile settings defined/recorded by the driver and stored in the vehicle may be transferred by cloud services to one or more vehicles utilized by the owner. For example, if the user wishes to utilize his regular everyday vehicle, the profile settings may already be stored on the vehicle. If the user wishes to utilize a different vehicle, such as a friend's vehicle, a rented vehicle, a shared vehicle, a temporary vehicle, a loaner vehicle, a test drive vehicle, a company vehicle, etc., the user's (owner's) profiles can also be transferred to that vehicle via a database stored in a cloud or a mobile phone of the user.

In addition to personal and vehicle identification details, the owner's profile may further comprise information related to the vehicle's purchase, including the date of acquisition, purchase price, and relevant documentation such as sales receipts and titles. It may also document the vehicle's service, insurance details, emission details, and maintenance history, detailing any noteworthy modifications or upgrades. In an embodiment, the vehicle system could include a default profile, allowing for a neutral configuration when the owner prefers not to leave the vehicle with personalized settings or when handing over the vehicle to another user, ensuring that the subsequent user operates with neutral settings.

Occupant recognition module 312 of the vehicle system detects an occupant entering and leaving the vehicle. If the occupant is entering the vehicle for the first time, a new profile will be created, and a unique occupant identifier will be provided. Sensors such as Lidars radars, cameras, etc., are used to extract the information of the occupant about height, weight, body size, sitting posture, etc., and will be mapped to the new identifier that the system just detected. In an embodiment, the camera may be coupled to a computer vision module. Further, sensors measure the seat settings, mirror settings, temperature settings, radio settings, occupant behavior such as his concentration on road, driving habits, interaction with other passengers, etc., which will all be stored into the database under the occupant identifier. Each of these are analyzed, categorized, and stored according to the data category such as vehicle settings, limitation settings, historical data, last used settings, etc. In an embodiment, when a person sits in the vehicle, a scanner aided with a microphone may perform facial recognition and/or biometrics to recognize the driver and subsequently configure the system with settings and other limitations from the occupant's profile. Additionally, settings and limitations in the occupant profile may be adjusted based on specific inputs. According to an embodiment of the system, the identity of the occupant is determined using one or more of login credentials, a passcode, a biometric reading, a face recognition, a fingerprint reading, a retina scan, and a voice detection.

According to an embodiment of the system, the system further determines the identity of the occupant via one or more sensors. According to an embodiment of the system, the one or more sensors comprise a video camera, a Radio Frequency Identification Chip (RFID) reader, a motion sensor, a weight sensor, a proximity sensor, a biometric scanner, a lidar sensor, a radar sensor, a light sensor, and an audio sensor.

In an embodiment, a facial recognition module is operable for identifying vehicle occupants which employs advanced technology to analyze and authenticate individuals based on their unique facial features. Integrated within the vehicle's system, this module captures facial images of occupants using cameras strategically positioned within the vehicle cabin. Through a combination of facial detection algorithms and machine learning, the module distinguishes and recognizes specific facial characteristics, such as the arrangement of eyes, nose, and mouth. This biometric identification process allows for identification and access of individualized occupant profiles. The facial recognition module comprises methods that analyze facial landmarks, face geometry, texture, skin color, facial expressions, symmetry, 3D representation, liveness detection, etc. In an embodiment, the module may utilize infrared imaging, and perform age and gender estimation, gait analysis, and contextual information analysis for accurate and comprehensive identification.

In an embodiment, when the person enters a car, using various technologies, the system will recognize the person. In some of the existing systems, the user may be recognized via a key fob. When the user sits down in the vehicle and the vehicle system is programmed such that when the vehicle is started with a particular key fob, then the settings of the vehicle are based on the key fob. Such systems do not really recognize the driver based on the key fob as many users may use the same key fob. The system may behave as if it is the same person. In an embodiment, it is a smart system that determines who the driver is via a key fob, wherein the key fob may comprise a smart tag or an identifier to recognize the driver. In an embodiment, the biometric recognition system may be integrated into the key fob. The key fob may comprise a smart chip which identifies the person via a biometric or a microphone that is integrated into the key fob. The key fob recognizes the person who is operating or handling the key fob and attempting to drive the vehicle. The key fob may pick the correct occupant profile stored in the key fob. In an embodiment, the key fob may further connect with a cloud system via a network and access the user profile once it recognizes the user. The key fob is no longer just the key but acts as a smart key. In an embodiment, the system of the vehicle may use biometrics of the person to determine the identity via the steering wheel integrated with the biometric system. As soon as the person starts the vehicle and places hands on the steering wheel, the system may determine the identity of the person driving the vehicle.

In an embodiment, the system detects the user or the occupant of the vehicle. Methods that are employed to identify individuals entering could involve technologies such as voice recognition, cameras, direct input from mobile devices, retrieval of personal information, biometrics, a fingerprint reader within the key fob, a press to open pad on the vehicle to get fingerprint recognition. The biometrics can include face detection; fingerprint identification, eye retina exam, voice fingerprints, a voice command, and combinations thereof.

In an embodiment, the invention uses various technologies, like the key fob or other means to recognize who the driver is. The system determines the identity of the person, the system accesses the occupant's profile via the occupant profile access module 314, and then determines the person's preferences, such as settings, limitations, etc. In an embodiment, the vehicle can provide automatic limitations that are preset, that are either set by the user or by others. Others could include a person lending the vehicle to the user or a vehicle rental service. In an embodiment, the vehicle can provide limitations that are provided by the owner/guardian/rental service based on a real-time reception of the limitation settings.

In an embodiment, the vehicle determines who the user is. Further, the system can determine where the user is allowed to travel, i.e., basically limited to a geographical location. The vehicle system may determine the geographical location that the user is limited to. For example, a parent may let their children use the vehicle, however set a geographical limit of 20 miles, so the child may go anywhere within the set geographical location, but not beyond it. In an embodiment, the parent may program/set the limitation and send that information to the system of the vehicle. In an embodiment, the system is programmed or set by a parent such that with the key fob, their daughter may be driving the car, and nobody else can drive. With the key fob comprising set limitations by the patent, only she can drive the vehicle, the system of the vehicle will limit itself to a particular location or a particular geofencing. It may not let the driver go off to some other friend's location. In an embodiment, the vehicle system may further restrict adding passengers, etc.

When the occupant sets the settings, the system monitors and stores those settings. The occupant could be the driver or a passenger using a specific vehicle. Once another driver rents the vehicle, the system continues with the next driver and accesses data corresponding to the next driver and sets the data. In an embodiment, the rental agency may provide a smart card comprising occupant profile comprising occupant information, where occupant is the renting driver. The occupant profile may comprise information about the occupant, different vehicles the occupant used previously and their corresponding settings, any limitation settings, priority level of the settings, routing information, etc. The profile may be encrypted and may require prior authorization of the user for access by another user or agency/party. In an embodiment, the profile may be password protected for access. When the user/occupant rents the vehicle, the user profile may be loaded on the card and provided to the user. In an embodiment, the access code may be provided to the user via a mobile or smartphone. The smartphone may act as the smartcard with all the information about the vehicle. Once the user gets close to the vehicle, the vehicle starts scanning. In another embodiment, the smart card may be broadcasting information to the vehicle that the user is supposed to access, i.e., the vehicle that is rented or the vehicle that the user will be using. The smart card sends the occupant's profile to the vehicle and the vehicle would adjust everything according to the occupant's profile information. The vehicle settings may take place prior to the occupant entering the vehicle or immediately after the occupant enters the vehicle and before he starts driving.

The vehicle is provided with a system of receiving the information that the smart card is going to transmit. Once that handshake is established between the smart card and the vehicle, all of the occupant settings and limitations can be implemented by the vehicle based on the information received from the handshake signal. When the occupant starts the vehicle, the vehicle may further be operable to receive information on limitation settings. The limitation settings may be provided by a third party such as a parent, other user, owner of the vehicle, or the rental agency. The limitation setting for example may be one or more of a geofencing, a limit on a specific route, a speed limit, a speed limit on a specific route, a time limit, a limit on number of occupants and their age, etc.

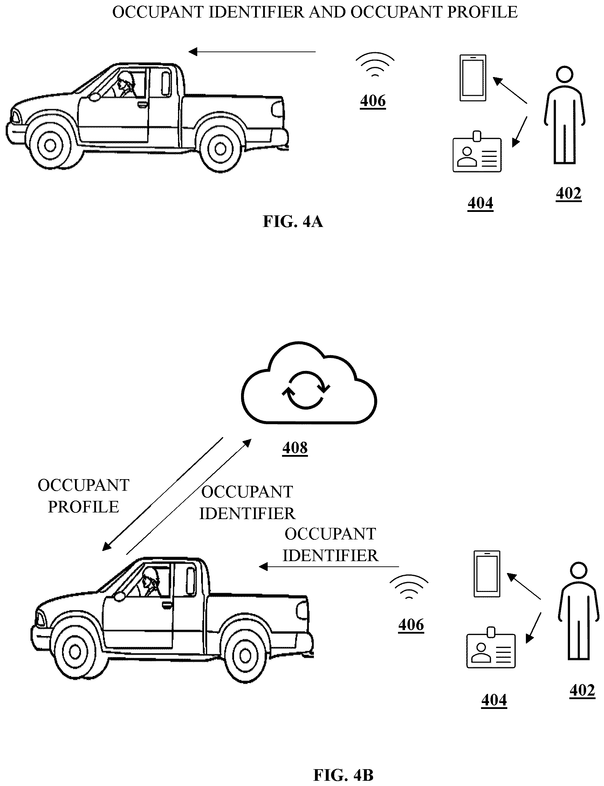

In an embodiment, recognizing the occupant may comprise accessing a unique identifier belonging to the occupant. FIG. 4A shows an occupant detection module and occupant profile access module according to an embodiment. According to this embodiment, an occupant 402 may be carrying a user device 404, for example, a smart card, a key fob, a smart card comprising an RFID tag, or a mobile phone, that may be detected based on the proximity to the vehicle via a communication module using wireless signals 406. Once an occupant 402 is detected, an occupant identifier is retrieved. It could be a mobile phone number or any unique code. Using the occupant identifier and using the vehicle details such as make and model of the vehicle and VIN from the vehicle details module 308, occupant profile is accessed. Further vehicle settings from the occupant profile that match the VIN, make and model are retrieved from the database that is stored either on the mobile phone or the user device locally. In an embodiment, the details may be tailored to the specific vehicle that the user may be accessing and may be stored in a local device such as key fob, a smart card, or the like.

FIG. 4B shows an occupant detection module and occupant profile access module according to another embodiment. According to this embodiment, an occupant 402 may be carrying a user device 404, for example, a smart card, a key fob, a smart card comprising an RFID tag, or a mobile phone that may be detected based on the proximity via a communication module using wireless signals 406. Once an occupant 402 is detected, an occupant identifier is retrieved. It could be a mobile phone number or any unique code. Using the occupant identifier and using the vehicle details such as make and model of the vehicle and VIN from the vehicle details module 308, occupant profile is accessed via a cloud network 408. Further vehicle settings from the occupant profile that match the VIN, make and model are retrieved. In an embodiment, the occupant profile is received by the vehicle system and the vehicle system would locally pick the settings that match the VIN, make and model.

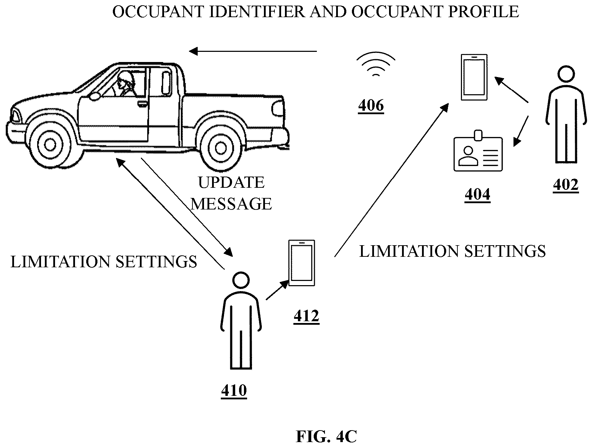

FIG. 4C shows a vehicle system receiving limitation settings in real-time from a second device according to an embodiment. According to this embodiment, an occupant 402 may be carrying a user device 404, for example, a smart card, a key fob, a smart card comprising an RFID tag, or a mobile phone that may be detected based on the proximity via a communication module using wireless signals 406. Once an occupant 402 is detected, an occupant identifier is retrieved. It could be a mobile phone number or any unique code. Using the occupant identifier and using the vehicle details such as make and model of the vehicle and VIN from the vehicle details module 308, occupant profile is accessed. Further vehicle settings from the occupant profile that match the VIN, make and model are retrieved from the database that is stored either on the mobile phone or the user device locally. In an embodiment, the details may be tailored to the specific vehicle that the user may be accessing and may be stored in a local device such as key fob, a smart card, or the like. Further, once the occupant is identified, the system may connect to a parent or guardian 410 via parent's user device 412 and receive limitation settings via the parent's user device 412 in real-time. In an embodiment, the parent's user device 412 may send the limitation settings directly to the vehicle system. In an embodiment, the parent's user device 412 may send the limitation settings to the occupant's user device 404. In an embodiment, the parent's user device 412 may send the limitation settings to the cloud where the user profile is stored and the same may be accessed by the vehicle system. In an embodiment, the vehicle may be sending an updated message with any adjustments it made to the limitations and settings. The vehicle may also send GPS based location, a route the system is taking, current speed and any other tailored information that the parent/guardian.

According to an embodiment of the method, the occupant profile further comprises a limitation setting, wherein the limitation setting is received via an external device. According to an embodiment of the method, the priority level indicates a prevailing authority of the limitation setting over a conflicting situation with another occupant profile. According to an embodiment of the method, the priority level has a value in a range of 1 to 10 with 1 being top priority to 10 being low priority.

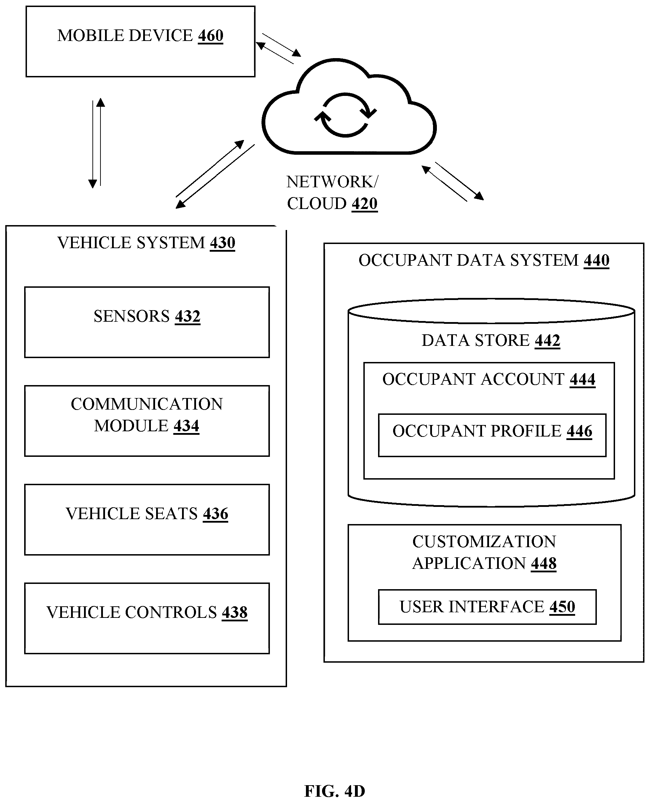

Occupant profile access module 314 accesses the stored occupant profile, creates the occupant profile if it doesn't exist and stores it in the database. The occupant profile can include standard settings that may be set for the various vehicles, or custom settings that can be selected for the user based on learned settings over time by use of various vehicles. In one embodiment, the user profiles are continuously updated and stored to a database, which is accessible by cloud services. Databases may include data storage, such as cloud storage, data center databases, distributed databases, local storage on vehicles, network storage, and the like. FIG. 4D shows the vehicle system 430 accessing the occupant profile from an occupant data system 440 according to an embodiment. The vehicle system 430 comprises sensors 432, communication module 434, vehicle seats 436, and vehicle controls 438. The vehicle system 430 comprises a combination of hardware and software. The occupant data system 440 may comprise a data store 442 comprising an occupant account 444, wherein the occupant account 444 comprises an occupant profile 446. The occupant data system 440 further comprises a customization application 448 with a user interface 450.

The vehicle system 430 comprises one or more sensors 432. Sensors 432 may comprise a video camera, microphone, RFID reader, motion sensor, weight sensor, proximity sensor, biometric scanner, Light Detection and Ranging (LiDar) device, Radio Detection and Ranging (Radar) device, beam forming light sensor, audio sensor, and other sensors used to detect a person's identity and/or position within a vehicle. According to an embodiment of the system, the sensor comprises one of a weight sensor, a heat sensor, a motion sensor, a sound sensor, an inertial sensor, a compression sensor, an image sensor, an RFID reader, a smart card reader, and a proximity sensor.

A sensor 432 communicates sensor data that may be processed to determine the identity and/or position of an occupant. For example, a sensor 432 may include a camera, wherein the identity is determined based on performing facial recognition. The sensor 432 may also include a weight sensor installed in vehicle seats 436 of the vehicle. In this example, the identity of an occupant may be determined based on measuring a weight distribution fingerprint of the vehicle occupant. The sensors 432 may include an RFID reader to read RFID tags carried by vehicle occupants. The sensors 432 may comprise a microphone installed in the vehicle. The identity may be determined based on voice recognition. The microphone may be a directional microphone to detect the direction and position of an occupant when he or she is speaking.

In an embodiment, capacitance-based sensors are used. Capacitance sensors detect changes in capacitance, which can occur when a person occupies a seat. In an embodiment, mmWave radar sensors can be used to detect the occupants in the vehicle. MmWave radar sensors operate by emitting electromagnetic waves in the millimeter-wave frequency range and then measuring the time it takes for the waves to bounce back after hitting an object. The radar sensor can analyze the reflected signals to detect occupants. Once the occupant is detected, occupant details and profile information can be accessed via Radio Frequency Identification Chip (RFID) technology, wherein an RFID tag on a smartcard comprises occupant profile, and an RFID reader is associated with the vehicle.

The communication module 434 may allow data generated within the vehicle system 430 to be communicated to the occupant data system 440 over a network 420. The communication module 434 may comprise, for example, a wireless receiver, wireless transmitter, a modem, or other device that provides communication over the network 420. In some embodiments, the communication module 434 may comprise a hotspot or access point for allowing mobile devices 460 to connect to the network 420. This may provide network access to mobile devices 460 of occupants. The communication module 434 may be coupled to sensors 432, vehicle seats 436, vehicle controls 438, infotainment system, displays, and other vehicle input/output systems. The communication module 434 may collect data received at the vehicle and transmit it over the network 420. In addition, the communication module 434 may receive data or control instructions over the network 420 and transmit them to the vehicle and related vehicle components.

The communication module 434 comprises a transmitter and a receiver. The vehicle system 430 interacts with user devices such as mobile device 460. In an embodiment the user device may comprise one or more of a key fob, a smartcard, a personal device, a wearable, etc. In an embodiment, the vehicle system 430 may access the occupant profile 446 via the occupant data system 440 that may be stored on the mobile device 460. In an embodiment, the vehicle system 430 may interact with network 420 to access the occupant profile 446 via the occupant data system 440 once it gets the occupant identification data via the mobile device 460. The occupant data system may be residing on the cloud/network 420. In an embodiment, cloud services may also be accessible over the network 420.

The vehicle system 430 includes one or more vehicle seats 436 that have identifiers and further comprising sensors 432. Seats generally have settings for adjusting their position and orientation. Sensors 432 may identify the occupied seat by the user during the trip and record such settings used by the occupant in the user profile corresponding to the user along with a seat identifier. This will enable a recording of the data for the user with a mapping of vehicle model and make, seat identifier and seat settings that correspond to seat identifier. Settings used by front seat versus back seat, or settings used by occupant as a driver versus occupant as a passenger are well distinguished based on the recorded data which is processed and stored as structured data in the data store 442.

The vehicle system 430 may include one or more vehicle controls 438 for controlling vehicle settings. Vehicle controls 438 may be positioned throughout the vehicle so that one or more occupants may manually select the vehicle controls 438. A vehicle control 438 may provide access and control over user profile, vehicle settings, limitation settings, a climate control, display control, volume control, video selector, audio selector, seat control, privacy control, or other controls used to customize the driving experience. A privacy control may be a control that manipulates a physical barrier to at least partially separate vehicle occupants. A privacy control may include a control for a curtain, a screen, and/or a wall. For example, if the vehicle is a taxi that shuttles different occupants around as they share the taxi to different destinations, each occupant may have access to a privacy control to have privacy from other occupants. The vehicle controls 438 may be implemented as a combination of hardware and software for allowing occupants to edit, modify, or adjust occupant preferences or settings of the vehicle. For example, the vehicle controls 438 may comprise a menu system. The menu system may include a plurality of occupant selectable options to configure the vehicle. The occupant input for the vehicle controls 438 may include, for example, a voice command, tactile touch, actuation of a button, knob, switch, or scroller, a gesture, posture when sitting in a vehicle seat, biometric input, or any other input from an occupant in the vehicle. Occupant input may be sensed through one or more of the input systems in the vehicle. In some embodiments, the vehicle controls 438 may include virtual controls implemented by a graphical user interface presented by the display and/or mobile device 460. For example, an occupant may provide occupant input to select vehicle controls 438 before an occupant enters the vehicle using an interface rendered by the mobile device 460. The mobile device 460 may render a display to depict virtualized controls that an occupant may select. These virtualized controls correspond to the vehicle controls 438 to configure a vehicle remotely. For example, an occupant may specify via a mobile device 460, desired temperature settings, preferences for content, volume settings, etc.

In an embodiment, one or more displays may be positioned in front of one or more seats. In some embodiments, at least some seats have a dedicated display so that each occupant may view an individual display. A display may comprise a video screen and speakers. The display may present videos and provide information to vehicle occupants related to the current seat settings and potential adjustments such that comfort and safety may be increased. In some embodiments, the display of a mobile device 460 may be used as the display. In an embodiment, the display may be a touch screen or may include input controls to receive occupant input so that the vehicle settings and the limitation settings may be adjusted from the display. Each display of a vehicle may be configured to independently present content to vehicle occupants such that each vehicle occupant may customize the content presented by an individual display. Each display may be selected according to a display identifier. For example, instructions to control the display may include the display identifier.

The components of occupant data system 440 and data store 442 may represent one or more data stores. Data store 442 includes, for example, occupant account 444. An occupant account 444 may be created and maintained for one or more occupants. An occupant account 444 may comprise an occupant profile 446. Access to occupant profile 446 may comprise providing occupant credentials for authenticating an occupant and to provide an access to occupant information. Occupant profile 446 comprises occupant information, for example, height data, weight data, body size data, age, vehicle settings, and limitation settings. Occupant profile 446 comprises historical data on vehicle settings and limitation settings including those that were used in the past trip. Vehicle settings comprise settings used by the occupant in a specific model and make of a vehicle and to a specific seat identifier within the vehicle. The occupant profile 446 may also comprise vehicle settings and configurations that are manually provided by an occupant or automatically generated as the occupant interacts with occupant data system 440. The occupant account 444 may be accessible on a user device and/or on vehicle system 430 via the network 420. The user device may include a mobile device 460. The user device in general may comprise one of a laptop, cellular phone, a key fob, a portable device with microchip, an identification card, a badge, personal computing device, wearable device, or other computing device that is configured to communicate over the network 420. The mobile device 460 may include a browser or dedicated application to communicate with the customization application 448. In some embodiments, the occupant account 444 may be stored locally on a mobile device 460 or within a memory of a vehicle 430. Cloud services may be used for identifying an occupant (e.g., authenticating or authorizing an occupant). For example, the cloud service may include a social media platform, a voice recognition service, a biometric service, or a third-party service used to authenticate an individual based on occupant input.

Customization application 448 may be used by the occupants to interact with the vehicle system 430 and/or the mobile device 460. Customization application 448 comprises a user interface 450 to facilitate various operations of accessing, storing, modifying, controlling, etc., via the vehicle system 430 and/or the mobile device 460. The user interface 450 provides an interface for users to personalize their preferences. It comprises a dashboard for navigation and guides users through customizable options. The user interface 450 provides users with the ability to adjust layout configurations, rearrange widgets, and choose from a variety of design elements. Additionally, the interface allows users to visualize changes in real-time before applying them. The user interface 450 allows users to manage privacy settings, notifications, and account preferences. The customization application 448 may include a portal to give occupants access to functionality provided by the occupant data system 440, for example, an occupant using a mobile device 460 may access the portal provided by the customization application 448.

Occupant data system 440 maintains an occupant profile 446 for one or more occupants and manages occupant vehicle settings or functionality for one or more occupants for different types of vehicles and for the one or more vehicles that the user/occupant has used in the past. In an embodiment, the occupant data system 440 is integrated with the system's cybersecurity module for end-to-end encryption of data and decryption of data upon authentication.

Vehicle system 430 and occupant data system 440 may be connected to a network 420 such as, for example, the Internet, intranets, extranets, wide area networks (WANs), local area networks (LANs), wired networks, cellular networks, wireless networks, or other suitable networks, etc., or any combination of two or more such networks. The network 420 may comprise, for example, a server computer or any other system providing computing capability. Alternatively, the network 420 may employ a plurality of computing devices that may be arranged, for example, in one or more server banks or computer banks or other arrangements. Such computing devices may be located in a single installation or may be distributed among many different geographical locations. For example, the network 420 may comprise a plurality of computing devices that together may comprise a hosted computing resource, a grid computing resource and/or any other distributed computing arrangement. In some cases, the network 420 may correspond to an elastic computing resource where the allotted capacity of processing, network, storage, or other computing-related resources may vary over time. The network 420 may implement one or more virtual machines. Various applications and/or other functionality may be executed in the network 420 according to various embodiments. Also, various data is stored in the data store 442 or other memory that is accessible to the network 420.

The vehicle system 430 may connect with a mobile device 460 of the occupant when the user is in proximity of the vehicle, or the user may access the vehicle system via the customization application 448 on his mobile device 460. The occupant account 444 may be accessed via an authentication, and the occupant profile 446 may then be accessed. Desired vehicle settings and/or limitations that correspond to the vehicle model and year may be accessed and applied in the vehicle system 430 either automatically or by the user on demand.

Upon entering a vehicle, one or more sensors 432 may identify the occupant and his seating position via a seat identifier within the vehicle. For example, sensors 432 may be configured to transmit sensor data over the network 420 to the occupant data system 440. In an embodiment, the occupant data system 440 may be accessed via the mobile device 460. The occupant data system 440 may perform an analysis on the sensor data to retrieve the correct settings that correspond to the occupant, the vehicle type, and the seat position. Upon determining the identity of the occupant by the vehicle system 430, the occupant data system 440 determines occupant profile 446 stored in the system that corresponds to the occupant. If no match is found for the vehicle type, either the system prompts the user to select, or automatically selects, a closest model of the current vehicle or a default profile. Each vehicle occupant is associated with a unique occupant identifier. Upon detecting the identity of the occupant, the vehicle identifier is used to obtain a corresponding occupant profile 446.

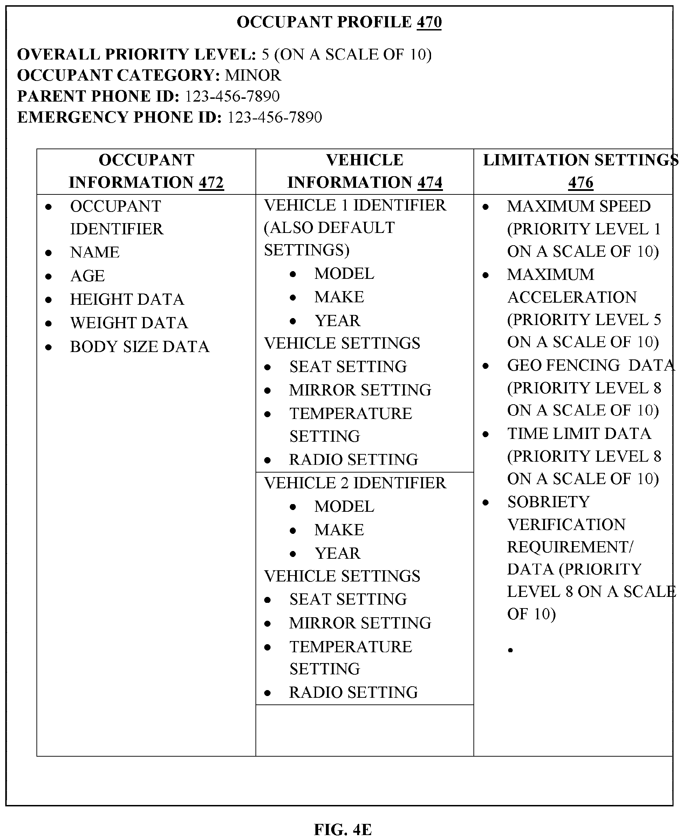

FIG. 4E shows contents of an occupant profile according to an embodiment. Occupant profile 470 comprises occupant information 472, vehicle information 474, and limitation settings 476. Occupant profile further comprises an overall priority level, occupant category, parent/guardian phone number, emergency phone number, etc. Vehicle information 474 comprises vehicle identifier and then the vehicle settings corresponding to the vehicle identifier. In an embodiment, a profile is identified as a default profile for considering the vehicle settings when a vehicle identifier is not found in the list. According to an embodiment of the system, the vehicle setting comprises one or more of a seat setting, a mirror setting, a temperature setting, a radio setting corresponding to the vehicle identification data of the vehicle. According to an embodiment of the system, the seat setting comprises one or more of a setting for the height of a seat, a recline of the seat, a lumbar support of the seat, an armrest height, and a temperature of the seat. According to an embodiment of the system, the mirror setting comprises one or more of a mirror tilt, a mirror angle, a mirror height, and a mirror position. According to an embodiment of the system, the mirror setting is configured to adjust a mirror, wherein the mirror is one or more of a side-view mirror and a rear-view mirror. According to an embodiment of the system, the temperature setting comprises a fan speed, a preferred temperature, and tilt and position of vents of the Heating, Ventilation, and Air Conditioning (HVAC) system of the vehicle. According to an embodiment of the system, the radio setting comprises one or more of preferred genres of content, audio playback settings, and a volume.

According to an embodiment of the method, the occupant profile further comprises occupant data comprising a height of the occupant, a weight of the occupant, a body size of the occupant, and an age of the occupant. According to an embodiment of the method, the vehicle setting comprises a seat setting, a mirror setting, a temperature setting, a radio setting, and routing information. According to an embodiment of the method, the seat setting comprises one or more of a setting for a height of a seat, a recline of the seat, a lumbar support of the seat, an armrest height, and a temperature setting. According to an embodiment of the method, the mirror setting comprises one or more of a mirror tilt, a mirror angle, a mirror height, and a mirror position. According to an embodiment of the method, the mirror setting is configured to adjust a mirror, wherein the mirror is one or more of a side-view and a rear-view mirror. According to an embodiment of the method, the temperature setting comprises a fan speed, a preferred temperature, and tilt and position of vents of an HVAC system of the vehicle. According to an embodiment of the method, the radio setting comprises one or more of preferred genres of content, audio playback settings, and a volume.

Limitation settings 476 comprises maximum speed, maximum acceleration, geofencing data, time limit data, sobriety verification requirement data, etc. According to an embodiment of the system, the occupant profile further comprises a limitation setting, wherein the limitation setting is received via an external device. According to an embodiment of the system, the limitation setting comprises one or more of a maximum speed data, a maximum acceleration data, a sobriety verification requirement, a route limitation data, a time limit data, and a geofencing data. According to an embodiment of the method, the limitation setting comprises a maximum speed data, a maximum acceleration data, a sobriety verification requirement, a time-based data and a geofencing data. According to an embodiment of the method, the occupant comprises one of a non-owner driver, an owner driver, and a passenger.

In an embodiment, the limitation settings section of the profile is received from the parent or guardian phone number confirming/providing the limitations once the user enters the vehicle in real-time. In an embodiment, the limitation setting values may not be present in the profile and are received via the parent or guardian phone number. In an embodiment, these settings are changed by the parent depending on the vehicle and situation that the occupant is in. Further, one or more limitations may be assigned a priority level or indicator confirming whether the limitation can be changed or cannot be changed when a conflicting situation arises. For example, an overall priority number could indicate how flexible the profile limitations are for a change. A value of 1 may indicate none of the limitations are prone to change. Similarly, a value greater than 1 for overall priority may indicate a flexibility on one or more limitation settings. When the limitation settings have an individual priority level of 1, it has the top priority and cannot be changed in conflicting situations unless otherwise contacted and approved by the parent or guardian. On the other hand, the individual priority levels on limitation settings such as 5 or 8 means that limitation settings can be overridden when a conflicting situation arises or when a situation demands.

According to an embodiment of the system, the occupant profile further comprises occupant information. According to an embodiment of the system, the occupant information comprises a height of the occupant, a weight of the occupant, a body size of the occupant, an age of the occupant, a contact number of the occupant, an emergency contact number, and an additional contact number, wherein the additional contact number comprises a parent contact number or a guardian contact number. According to an embodiment of the system, the occupant profile further comprises an overall priority.

Upon identifying the appropriate occupant profile 446, the occupant data system 440 extracts vehicle settings and limitation settings and generates control instructions to implement the vehicle settings and limitations. The control instructions are transmitted over the network 420 and received by the communication module 434 of the vehicle comprising the occupant. The vehicle may include computing components such as a processor and memory to process the control instructions so that they are implemented in the vehicle. For example, if the occupant profile specifies a particular temperature, the vehicle may receive temperature settings and implement the temperature settings using vehicle controls 438. In addition, the control instructions may be generated according to the seat identifier of the vehicle occupant. For example, depending on which seat the occupant sits in, the control instructions are applied to the corresponding seat identifier. In this respect, the control instructions may cause vehicle controls 438 to be adjusted so it is customized with respect to the occupant's seating position. According to an embodiment of the method, the occupant profile is stored in one or more of a local storage, a remote storage, and a cloud storage.

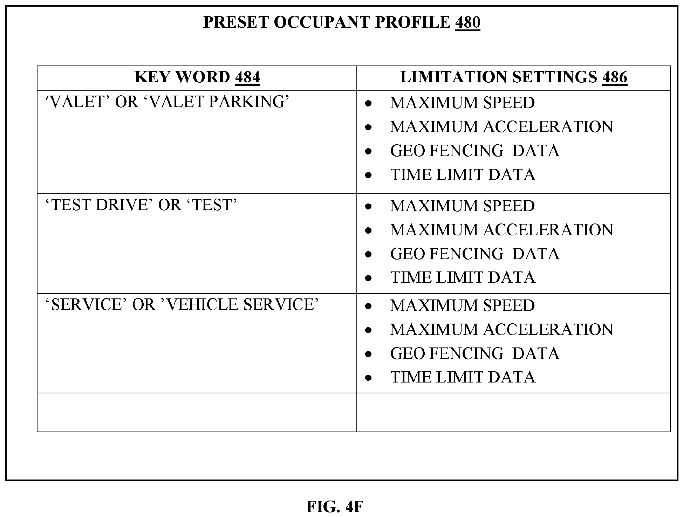

FIG. 4F shows example default occupant profiles according to an embodiment. In an embodiment, the user profile could be a default profile set for certain situations. Preset occupant profile 480 may be activated by using a keyword as shown in keyword 484. Preset profile comprises limitations settings 486 as shown in the FIG. 4F. Example situations could be valet parking, test drive, service of the vehicle etc. For instance, when the driver leaves the vehicle, they could issue a voice command like "valet driver", or "valet parking". In such cases the vehicle would recognize the next driver as a 'valet' and implement specific limitations, such as a maximum speed of 15 miles per hour and predefined boundaries based on the limits of the parking spaces provided for valet parking. In such a scenario, the system may not allow much of an adjustment or it may allow an adjustment, but it will neither identify the driver nor record the settings. The profile for a "valet" may remain as they are set by the owner of the vehicle. In an embodiment, the system may receive "clear profile" from the driver or occupant while leaving and the system of the vehicle would clear the details of the occupant from the system of the vehicle.

Conflict resolution module 316 is operable to detect and analyze the current scenario in the vehicle such as current passenger condition, other occupants in the vehicle and make decisions accordingly. In an embodiment, the physique of the occupant is taken into consideration, for example, height, weight, body size, etc. In an embodiment, the settings may be adaptively adjusted along with the actual occupant profile. For example, the occupant may be a passenger who generally likes to sit straight and be alert, with a radio playing in the background. However, maybe currently he is having some sickness due to which he prefers leaning back and not playing radio. The system would identify the occupant, retrieve the occupant profile, and further check the current mood and health of the occupant. If the occupant is as usual, the original settings would be applied. If the occupant is sick or having some health issue, then the system, after identifying the occupant vitals, may suggest deviating or suggest additional settings which are different to the occupant profile. In such cases, the system may prompt the occupant and consider the occupant's input. The system may store these additional settings back to the profile under an additional category of sick. Similarly, different categories can be created such as party mode, silent mode, work mode etc. for each occupant.

As a parent, one may authorize the use of the vehicle by their children. The parent can send the user profile for that particular vehicle to the mobile device of the child. The device that the child carries has a child profile for a specific vehicle, with the conditions, settings, and limitations as provided by the parent. When the occupant is in the proximity of the system of the vehicle, the system would retrieve the occupant profile and configure the settings of the vehicle as per occupant profile.

In an embodiment, the system is configured for resolving any conflicts in the settings and limitations present in the occupant profiles when more than one occupant is present in the vehicle. For example, if the vehicle has an occupant and has set a speed limit at 65 miles per hour, and then another occupant, maybe a younger occupant enters the vehicle, that speed limit will be adjusted. Initially, the speed limit may be set at 65 miles per hour, but with the addition of another occupant, such as a younger driver, it might be lowered to, for example, 55 miles per hour. As a parent, this not only ensures that your young driver does not exceed 55 miles per hour but also sets additional restrictions based on the new occupant's profile. The system is capable of understanding the driver's profile, and the occupant's profile, combining them to adjust the overall limitations on the use of the vehicle. In an embodiment, the speed limit set in the occupant profile would be adjusted based on another occupant in the vehicle. Further, when one of the occupants exits, then the system would reset the adjustments according to the occupants remaining in the vehicle.

For example, if there is more than one occupant, the volume of the stereo is impacted along with other parameters. One may not be able to increase the volume to a certain degree. When the occupant gets into the vehicle, the volume of the stereo is automatically based on the occupant's profile. When the volume is too high, the system may limit the volume to make sure that the driver seems focused and the driver's attention is on the driving. This scenario is applicable when the driver is present alone or when the driver is present along with other occupants. In an embodiment, once the occupant exits, and if the occupant is the only occupant of the vehicle, the system will reset to default settings and limitations. For example, for a rental vehicle or return of the rental vehicle, all the settings have been reset to default settings and the occupant profile related information and any data will be stored to the occupant authorized cloud databases and any copy of the occupant profile and data that is locally present on the system would be erased.

Additionally, when examining a conflict scenario, consider a situation where, upon entering a vehicle, say the primary occupant (maybe a driver) activates a designated device containing the driver profile. As the driver settles into the vehicle, various adjustments occur. Once the initial profile is established, the system begins monitoring additional occupants, often passengers who may not be driving but still have specific preferences. In such cases, the system must first allocate user profile settings based on the driver's preferences. However, complications arise when a secondary profile, possibly conflicting with the primary one, is introduced. This conflict resolution could involve adjusting various factors, such as seat positions for passengers in the front and back, temperature controls, and route information to optimize energy efficiency.

In an embodiment, even if the vehicle has a preset profile or no preset profile, the system should automatically apply the passenger's profile upon entry. This becomes crucial for scenarios where a parent wants to ensure certain safety parameters, such as speed limits, trailing distance, lane change frequency, etc., are enforced when their child is driving or accompanying someone else's vehicle. In this context, the system needs to recognize and prioritize user profiles, particularly those related to safety attributes. Hence, the proposed solution involves giving user profiles a priority level, with safety-related attributes preferably taking precedence over comfort-related ones. This ensures that, when conflicting profiles are detected, the system prioritizes safety aspects, such as limiting the maximum speed of the vehicle, maintaining a safe distance between vehicles, limiting the route or geographic area for the vehicle, etc., while allowing flexibility in other non-safety-related settings.

In an embodiment, priority is given to safety over comfort, particularly when new passengers bring their priority level into someone else's vehicle. The proposed solution aims to implement conflict resolution with an override mechanism based on the priority levels. When a new user profile is received, the system checks for conflicts and prioritizes safety-related settings over other preferences. This approach addresses concerns raised by parents who wish to safeguard their children when traveling in unfamiliar vehicles, and it underscores the need for the system to discern and prioritize safety aspects over other user preferences.

Receive an instruction from the third party, for e.g., parents, owner of the vehicle, for additional settings and limitations such as geofencing and speed. Limitations for occupants, whether they are passengers or borrowers driving the vehicle, owners of the vehicle or parents/guardians of the passenger or occupant, assert that the vehicle cannot surpass a specific limit for safety related aspects. However, the dynamics shift when a new occupant enters. They could potentially restrict or relax the available settings and limitations. Moreover, the existing preferences may address these concerns for a single user but do not consider the implications of multiple additional occupant profiles. In an embodiment, the system would automatically update the occupant settings in response to determining a category of the occupant in the vehicle, for example a minor, a senior citizen, a medical emergency, a baby on board category etc.

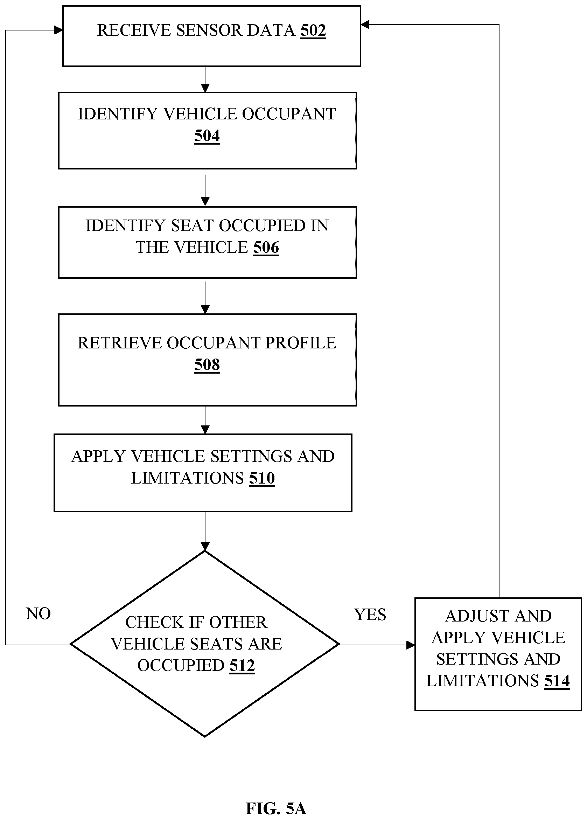

FIG. 5A shows a flowchart for conflict resolution in vehicle settings and limitations in a vehicle when more than one occupant is present according to an embodiment. It is understood that the flowchart of FIG. 5A provides merely an example of the many different types of implementations that may be employed by the system described herein. The flowchart of FIG. 5A may be viewed as depicting an example of elements of a method implemented in the system according to one or more embodiments. In some embodiments, the functionality of FIG. 5A may be implemented within one or more computing devices installed within a vehicle. The system of the vehicle receives sensor data at step 502. The sensor data may originate from one or more sensors installed in and around the vehicle. The sensor data may comprise raw data used to identify an occupant and/or the position of the occupant. The sensor data may include a sensor identifier associated with the sensors that produced the sensor data. The sensor identifier may be used to determine the location of the sensor to assist in identifying a seat occupied by the occupant. The sensor data may be collected and processed within the system or may be sent via a network to a cloud for processing. The sensor data may include sensor samples or raw data that is packetized for transmission over a network to a cloud.

The system performs a sensor data analysis to identify vehicle occupants at step 504. For example, if the sensor data comprises facial imagery, then the system may perform facial recognition. If the sensor data comprises audio data, then the system may perform vocal recognition. The sensor data may comprise data from multiple types of sensors to determine the identity of the vehicle occupant. The sensor data may comprise a biometric scan such as a fingerprint scan or retinal scan. The system may process the sensor data and compare it to the occupant identifier to determine the identity of an occupant. In some embodiments, occupant identifier is determined by the system by connecting a hotspot or an access point installed in the vehicle to a user device of the occupant. For example, upon connecting the hotspot or access point of the vehicle to the user device, the hotspot or access point establishes communication with an application executing in the mobile device. The application may convey an occupant identifier and the vehicle data comprising vehicle identifier to the hotspot or access point upon establishing a connection. The communication module may transmit the occupant identifier to the occupant data system to retrieve the occupant profile.

The system then proceeds to identify seats occupied in the vehicle by the occupant at step 506 from the sensor data. The seat identifier may be included in the sensor data, or the sensor identifier may act as a seat identifier as well. For example, each seat may be monitored by a dedicated sensor. Thus, the receipt of sensor data allows the system to determine which seat is being occupied by the occupant. In some embodiments, the vehicle may include a motion sensor, weight sensor, directional microphone, or image-based sensor to determine which seat is being occupied. By analyzing the sensor data, a seat identifier may be determined. The system may determine a seat identifier and map it to a seat position or otherwise derive a seat position, where the seat position indicates the seat's relative position within the vehicle. The seat identifier may comprise data indicating the seat's position within the vehicle. In some embodiments, the vehicle includes seats, where each seat has a weight sensor for detecting the presence and/or identity of the occupant. The seat identifier is determined depending on which weight sensor detects weight that corresponds to an occupant.

The system then retrieves the occupant profile at step 508. By determining the vehicle occupant based on the sensor data, the system may access a data store to determine the occupant profile corresponding to the occupant identifier. In an embodiment, the system retrieves the vehicle settings and the limitations that correspond to the vehicle identifier comprising make and model of the vehicle from the occupant profile. In another embodiment, the system retrieves the occupant profile and processes the profile to retrieve the vehicle settings and the limitations that correspond to the vehicle identifier comprising make and model of the vehicle from the occupant profile locally.

The system applies the vehicle settings and the limitations at step 510. The occupant profile may include various vehicle settings and limitations. These occupant profiles may contain vehicle settings based on how the occupant wishes to configure the vehicle. In some embodiments, the vehicle settings are further organized by seat type or, in other words, seat position. For example, an occupant may prefer certain seat adjustment for a driver seat but different seat adjustments when sitting in a passenger seat.

Upon referencing the occupant profile that corresponds to an occupant identifier, the system may automatically generate one or more control instructions to apply or implement settings available in the occupant profile. For example, if a setting indicates a temperature setting for 75 degrees Fahrenheit, then the system may generate a control instruction to control the vehicle temperature accordingly. As another example, if the occupant profile indicates an occupant preference for video content, then the system may generate and transmit an instruction to control content presented by a display according to the occupant profile. The instruction may indicate a display identifier based on the seat identifier so that the most appropriately positioned display presents the content.

The system checks if other vehicle seat/ seats are occupied at step 512. For example, the system may periodically receive sensor data from a vehicle to indicate which seats are occupied and which seats are empty. If any of the other seats becomes occupied, then the system adjusts and applies the vehicle settings and limitations for the occupants at step 514. These adjusted settings may or may not be stored in the database as these are temporary adjustments. Once one or more occupants leave, or if the occupant role changes from being a driver to a passenger, these settings are further prone to adjustment. According to an embodiment of the system, the system is operable to establish a connection by sending a connection request via the communication module to the first device of the first occupant. According to an embodiment of the system, the first occupant profile is retrieved via the first device. According to an embodiment of the system, the identity of the first occupant is received via the first device and the first occupant profile is retrieved via a network from a cloud. A first occupant may be using a first device, and a second occupant may be using a second device. According to an embodiment of the system, the first device comprises one of a phone, a key fob, a smart card, a portable device with microchip, an identification card, a laptop, a personal computing device, a wearable device, and a badge. According to an embodiment of the system, the system is operable to establish a connection by sending a connection request via the communication module to the second device of the second occupant. According to an embodiment of the system, the second occupant profile is retrieved via the second device. According to an embodiment of the system, the identity of the second occupant is received via the second device and the second occupant profile is retrieved via a network from a cloud. According to an embodiment of the system, the second device comprises one of a phone, a key fob, a smart card, a portable device with microchip, an identification card, a laptop, a personal computing device, a wearable device, and a badge.

In some embodiments, the system resolves conflicts or implements compromises to address situations where the vehicle carries more than one occupant having different occupant profiles. The result may involve generating an additional control instruction to adjust the vehicle settings and limitations for at least one or more of the occupants in the vehicle. In another embodiment, the system may implement an artificial intelligence-based system comprising machine learning algorithms to determine the adjustments to be made to the vehicle settings and limitations in response to detecting a new occupant. In an embodiment, the system may implement one or more rules to determine the adjustments to be made to the vehicle settings and limitations in response to detecting a new occupant. The rules/ AI methods may be based on the priority level indicated in the occupant profile or may be globally implemented rules. For example, if a second occupant is a minor, according to the occupant profile indicator, then the speed limitations may be adjusted to prioritize safety. In another example, all content displayed in the vehicle may be limited to accommodate the underage occupant. This rule may trigger the transmission of a control instruction to update occupant preference relating to the presentation of content. As another example, in response to detecting the presence or identity of a new occupant, the subsequent control instruction may be an instruction to limit playback volume, control a privacy screen, adjust the seat settings, adjust the temperature to an average temperature, or other instructions to adjust a vehicle control.

Settings and limitations can work for any passenger/ occupant including a driver. In such cases, the settings and limitations that are in no conflict will be directly implemented. In an embodiment, the occupants may have priority attached to their profiles. For example, if an occupant has a level one profile, the limitations and settings are set up. If the occupant is a driver and the first time user of the vehicle, then the vehicle will first set the occupant profile, and the system of the vehicle will record the settings and limitations. If a passenger enters, and happens to have settings and certain limitations, maybe the occupant is a minor and provided with a smart card, or a device (could be a smartphone) comprising the occupant profile. If the passenger enters the vehicle, now the system of the vehicle is going to consider the second input which is the second occupant profile. The system of the vehicle receives the driver's profile, for example, using a smart tag or a smartphone. Similarly, the system will also receive input for each passenger that enters the vehicle. The system of the vehicle will then resolve the conflicts, if any, based on the analysis of all of the profiles of the driver and the passengers as well as the profile priority levels. Settings that have no conflict, for example, height of the seat, backrest of the seat, etc., would be applied for each occupant. Seat inclination and legroom may be adjusted based on the conflict resolution between the passenger preferences, passenger build, and the seat occupancy. However, common features between the occupants of the vehicle such as temperature, may be adjusted for all using conflict resolution. The temperature may then be adjusted for each person which may be close to their preference. In an embodiment, the backseat temperature may be adjusted differently to the front seat.

In an embodiment, the system of the vehicle identifies the priority number associated with the profile. Based on the priority number, the conflict resolution may give certain weightage to high priority profiles than to the ones with low priority number. For example, if a passenger entered and was a minor, their profile would carry a higher priority number than an adult driver profile. The system then would check for the limitations associated with the minor and, for example, the limitation could be a speed limit, restricting the system from going beyond the set limit. For example, a driver profile of priority level six and an occupant profile of priority level one are together in a vehicle, then the system would set the limitations that are provided with the occupant having priority level one profile irrespective of the limitations of the occupant of priority level six profile. In an embodiment, in emergency situations or the like, the system is operable to allow the driver or the concerned (the owner or the parent) to make the adjustments to the limitations. In an embodiment, the adjustments can be remotely transmitted and controlled. In an embodiment, the adjusted limitations may be conveyed back to the parent or the guardian.

The vehicle has the capability of receiving input from the transmitter of a potential occupant. The transmitter could be one of a phone, an app, a badge, an identity card, or a smart card. As the occupant approaches the vehicle, the vehicle receives that transmitted information. The transmitted information may be a message, comprising a height of the user, a weight of the user, previous driving habits of the user, mode of driving etc. In an embodiment, the vehicle would analyze historical data of the occupant and apply the settings accordingly. For example, the vehicle may have been driven previously with all the settings of a first occupant, who was just driving around the town. However, when the second occupant enters the vehicle on the next day, maybe a Sunday morning, the vehicle applies all the settings for the person including tuning the vehicle for a sport mode because for the last six months, every Sunday, the second occupant has been using those specific settings. The vehicle system recognizes the second occupant, the settings corresponding to that occupant after analyzing historical data of that occupant are applied. In an embodiment, the occupant of the vehicle may be recognized via an app, or a smart tag that can transmit pre-determined information to the vehicle; and then, using that information, the vehicle will make the adjustments based on the occupant.

Initially, the driver of the vehicle may be a part of the system. The vehicle would perform all the adjustments based on the identity of the driver. The vehicle has the means of receiving additional information from the transmitters and then making the second level adjustments using an app or a user interface on the infotainment system provided within the vehicle. Initially, the system would perform certain settings, and then readjust the settings at a later point in time. There can be additional settings that can be maintained up to a certain period of time or upon demand. In an embodiment, the system of the vehicle receives a message from an app, or a smart card of the user and extracts all the information from the message. In an embodiment, the system of the vehicle gets identity information of the passenger and then the rest of the information is then extracted from the cloud. The system can store the information on the cloud using a tag or an identity.

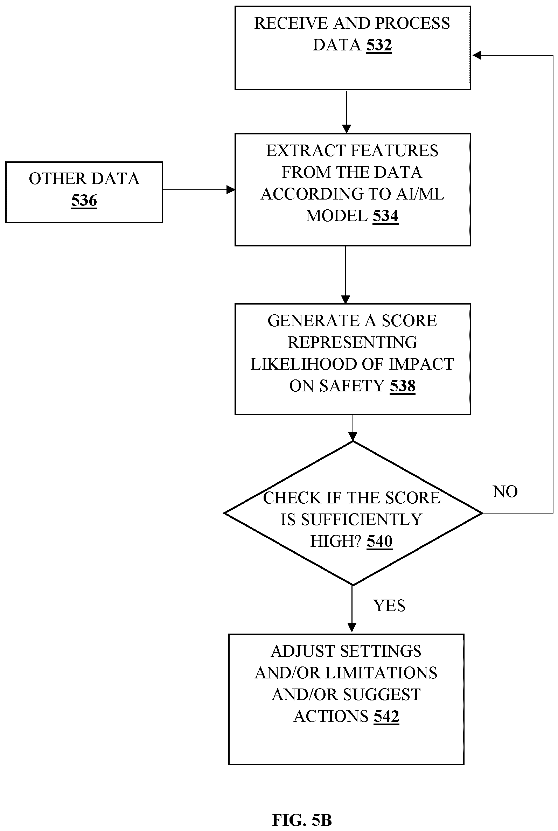

FIG. 5B shows a flowchart for adjusting vehicle settings and limitations using a machine learning model according to an embodiment. The vehicle system is operable for continuous monitoring and adaptively adjusting the vehicle settings and limitations when more than one occupant is present. The system may receive real-time data from the sensors associated with the vehicle related to the occupancy as shown at 532. Any type of sensor may be used to gather data pertaining to the vehicle. A sensor output may be, for example, images, videos, audios, LiDAR measures, infrared measures, temperature measures, GPS data, or any other information measured or detected by sensors. In an embodiment, a sensor output may be the result of one or more sensors capturing environmental information associated with the surroundings of the vehicle, which may include traffic at the location, road surface condition, etc. The system may receive any data associated with the sensor output from sensors, including raw sensory output and/or any derivative data. In an embodiment, the system may process the received data and identify any actionable parameter of interest using a machine learning model, trained using a set of training data. It may receive other data 536, such as weather conditions, road conditions, traffic conditions, humidity, temperature, driver behavior, tire tread, tire conditions, tire pressure, etc., from other sensors of the vehicle.

As shown at step 534, the system may extract features from the received data via the sensors and via the profiles according to a machine learning model. The machine learning model is able to automatically do so based on what it learned during the training process. In an embodiment, appropriate weights that were learned during the training process may be applied to the features.

As shown at step 538, the machine learning model, based on the features of the received data and occupant profiles, may generate a score representing a likelihood or confidence that the received data about the occupancy, occupant profiles comprising vehicle settings and the limitations on how the vehicle settings and limitation settings conflict with each other and how they are impacting the safety and comfort of the occupants. Safety and comfort may be given appropriate weightage based on the situation. For example, a change suggested in seat orientation, belt tightness on a very bumpy road may impact both safety and comfort and may be having a high score so that the settings can be changed. In another example, when all the occupants including driver are aggressive youths, determined using microphone, driving pattern, etc., then the score could be high on safety and speed limits provided by the parent, may be strictly implemented whereas in a vehicle when the occupant is a minor traveling with an adult, the score could be medium and the speed limit may be provided with an adjustment scope. In an embodiment, these changes are suggested adaptively based on the real-time data/ active data from the sensors associated with the vehicle.

Each occupant's personalized profile, encompassing vehicle settings and limitation settings, is stored, and recognized by the system. The AI continuously monitors sensor data to detect conflicts and employs communication interfaces to facilitate dialogue among occupants. If one occupant is subject to speed limitations set by a parent and has the priority level 1, the system implements and integrates parental controls, ensuring compliance. Machine learning algorithms enable predictive analysis of user preferences over time, allowing the AI to propose proactive solutions and minimize conflicts. Implementing mechanisms such as voting or consensus and adaptive user interfaces further refines the conflict resolution process, particularly in scenarios involving more than two occupants. Additionally, AI may provide emergency overrides to prioritize safety in critical situations, and in creating a harmonious and secure driving environment for all occupants.

As shown at step 540, the system may determine whether the score is sufficiently high relative to a threshold or criteria to warrant certain action due to conflict, such as changing the vehicle settings and limitation settings. If the score is not sufficiently high, thus indicating a falsepositive, the system may return to step 532 and continue to monitor subsequent incoming data. On the other hand, if the score is sufficiently high, then at step 542 the system may adjust vehicle settings and limitation settings for the occupants which are different from the occupant profile received initially. This may be due to additional occupants, bad road conditions, speed conditions, weather conditions, etc. In an embodiment, a change in the vehicle settings and/or limitation settings creates an alert to the occupant and generates or determines an appropriate action/response by the occupant. In an embodiment, the system may send alerts to appropriate recipients, such as parents in case of minors, based on the detected conflicts and priority numbers. For instance, an alert is generated in the vehicle regarding the speed limits, or geofencing when they are adjusted based on another occupant.

In an embodiment, the system may repeat one or more steps of the method where appropriate. In an embodiment, the steps 532 to 542 may be performed by the system, any combination of those steps may be performed by any other computing systems, for example, a remote network or a cloud network. In an embodiment, where machine learning models are used for making such determination, the system may transmit a trained machine learning model to the computing system in the vehicle. This may be desirable since sensor data may be overly large to transmit to the in-vehicle system for training in a timely fashion. In an embodiment, the system is provided, wherein the conflict resolution module utilizes a Convolutional Neural Networks (CNN). In an embodiment, it may use a recurrent neural network architecture because of its ability to use past, temporal information for inference on current inputs.

Alert signal generation module is an aspect of communication that serves to draw immediate attention to specific events, conditions, or situations that require prompt action or awareness. For example, an alert signal alerts the user when the limitation setting of speed limit is changed. These alert signals are designed to be noticeable, distinctive, and easily recognizable, ensuring they effectively convey the urgency of the situation to the intended recipients. The generation of alert signals takes various forms, depending on the context and the target audience.

In an embodiment, alerts may be audible alarms. They can range from simple beeps or chimes to attention-grabbing sirens. In an embodiment, an alert may be a visual alert. Bright and conspicuous visual signals, such as flashing screen, flashing LED displays, flashing text, are employed to draw attention. In addition to auditory and visual alert, haptic feedback may also be present. Haptic feedback provides alert signals through tactile sensations, such as vibrations or pulses. This form of alert may be used in smartphones and wearable devices to notify users of the messages without relying solely on sound or visuals. In an embodiment, it may be a text message, an email, and app notifications are also utilized to generate alert signals on electronic devices. In various contexts, alert signals are used to notify drivers of potential safety issues, for example when the vehicle settings are disturbing the driver's concentration. The effectiveness of alert signal generation depends on factors such as the clarity of the signal, the urgency of the situation, and the attention of the intended recipients. Proper design and consideration of the context are taken care of to ensure that alert signals serve their intended purpose and effectively communicate important information to the users. In an embodiment, one or more of audible alarms, visual alerts, haptic feedback, text messages, vehicle alerts are used in keeping users informed about issues related to safety and recommended actions. Alert signals for safety issues in vehicles are operable for ensuring that the occupants remain informed about the safety. These alert signals are designed to prompt immediate attention, helping occupants make informed decisions relating to the trip. One common method of generating an alert signal is through a warning light on the vehicle's dashboard. In addition to the warning light, the dashboard offers a continuous visual indication of the vehicle's safety and the surrounding traffic as icons on the dashboard. As the settings and limitations are changed, the display of the infotainment system or dedicated displays of the occupants are updated accordingly.

Vehicle settings module 318 comprises vehicle controls operable for applying vehicle settings once the system accesses the settings from the occupant profile corresponding to the identified user. Such identification of the user and adjusting the settings is desirable in situations where the user is renting a vehicle, or a vehicle is borrowed by a non-owner of the vehicle. The system will determine the identity of the person who is driving and apply the settings to the vehicle in case the occupant is the only occupant of the vehicle. Otherwise, the system will apply the adjusted vehicle settings and limitation settings that are output by the system. These adjusted settings are aimed to maximize the safety and comfort of the occupants. These adjusted settings may be stored separately from the occupant profile settings based on the other occupants in the vehicle. In an embodiment, these adjusted settings may not be stored back to the occupant profile unless the occupant asks the system to store the settings.

Limitation settings module 320 comprises vehicle controls operable for applying limitation settings once the system accesses the limitations from the occupant profile corresponding to the identified user. In an embodiment, the limitation settings that need to be set are based on the preset profile of the occupant. Limitation settings may include geographic area, geographic boundaries, speed restrictions, trailing distance, lane change frequency, maximum acceleration, and any other safety related restrictions. These limitations may be set via an app. The system will determine the identity of the person who is driving and apply the limitation settings to the vehicle in case the occupant is the only occupant of the vehicle. Otherwise, the system will apply the adjusted limitation settings. These adjusted settings are aimed to maximize the safety and comfort when there is more than one occupant. These adjusted settings may be stored separately from the occupant profile settings based on the other occupants in the vehicle. In an embodiment, these adjusted settings may not be stored to the occupant profile unless the occupant asks the system to store the settings. In an embodiment, the limitation settings are received in real-time from a device other than the occupant device. The system first receives the occupant profile, checks if the limitation settings are present and checks for the timestamp of the limitation settings and the priority number associated with the settings and the profile. The system would then check for the parent or guardian number when the profile is associated with a minor or a young adult. The system may check with the parent mobile number to confirm the limitation settings and the priority numbers. In an embodiment, the limitation settings are received in real-time from the guardian or parent. In another embodiment, the limitation settings are received via the occupant profile after the occupant is identified by the system. The vehicle will check for the timestamp to verify that the limitations are received after the occupant has boarded the vehicle. Further when more than one occupant is present the limitation settings may be adjusted considering the priority level and then applied to the vehicle.

Settings and limitations monitoring module 322 continuously monitors for any changes made by the occupants for their settings and limitations and uploads the information back to the occupant's profile.

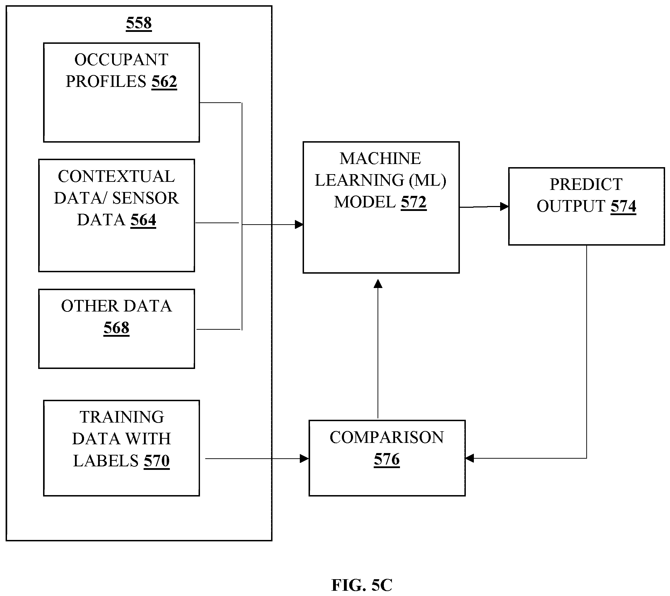

FIG. 5C shows an example block diagram for occupant profile monitoring using a machine learning model according to an embodiment. The machine learning model 572 may take as input any data associated with the vehicle, sensors of the vehicle, occupants, occupant profiles, and learn to identify features within the data that are predictive of safety and comfort for each of the occupants. The training data sample may include, for example, the vehicle data comprising VIN, make and model, etc. It further comprises occupant data such as driving habits, speed profile, braking profile, reaction time, etc. In an embodiment, it relates to systems and methods that identify an occupant in real-time using an on-board camera and/or other sensors and access the occupant profiles 562. Over a period of time, various occupants and their occupant profiles 562 may be grouped to learn the vehicle settings and adjustments for a given scenario. This occupant identification, along with the vehicle and user data may be transmitted to the cloud, where the occupant identification is coupled with vehicle details to predict occupant comfort and safety. Some of the data may be historical data from the vehicle and the occupant in similar situations. Subsequently, the information is used to compute/estimate the safety and comfort of the occupants. The systems and methods of the present disclosure may also provide data analytics information that may be used later to improve safety.

In an embodiment, the training data sample may also include contextual data/sensor data 564 relating to the surrounding environment. This may include, for example, location of the vehicle, current weather conditions, temperature, time of day, traffic conditions in the region, number of lanes, other obstacles, uphill segments of the road, etc. The system may also garner contextual information from a device associated with the user. For example, through an application installed on the device, such as an online mapping service, like Google^{®} maps, and location services, the system may know the vehicle details. Real-time sensor data may be collected which may include, for example, video, image, audio, infrared, temperature, 3D modeling, and any other suitable types of data that capture the current state around the vehicle. The current contextual information 564 includes real-time sensor data from the vehicle and the user device.

Other data 568 may include data derived from user data and vehicle data. For example, manufacturers specification for the vehicle, battery charge remaining, range, route conditions, social media status of the occupants etc.

Any of the aforementioned types of data (e.g., occupant profiles 562, contextual data/sensor data 564, other data 568) may correlate with the safety and comfort, and such correlation may be automatically learned by the machine learning model 572. In an embodiment, during training, the machine learning model 572 may process the training data sample (e.g., one or more occupants and occupant profiles 562, contextual data/sensor data 564, other data 568), and, based on the current parameters of the machine learning model 572, predict output 574 which may be adjustments to the settings based on the safety and comfort for the occupants for the given scenario. In an embodiment, the real-time sensor data may be processed using one or more machine learning models 572, trained and based on similar types of data to predict safety and comfort corresponding to current vehicle settings and limitations. The predicted output, which is adjustments to the vehicle settings and limitations, may depend on the training data with labels 570 associated with the training data sample 558. In an embodiment, during training, the predicted output, and the training data with labels 570 may be compared. For example, comparison 576 may be based on a loss function that measures a difference between the predicted output and the training data with labels 570. Based on the comparison at 576 or the corresponding output of the loss function, a training algorithm may update the parameters of the machine learning model 572, with the objective of minimizing the differences or loss between subsequent predicted output 574 and the corresponding labels 570. By iteratively training in this manner, the machine learning model 572 may "learn" from the different training data samples and become better at predicting output 574, predicting a range that is similar to the ones represented by the training labels at 570. In an embodiment, the machine learning model 572 is trained using data which is specific to a vehicle and different occupants for which the model is used for predicting adjustments to the settings given the safety and comfort maximization of the occupants. In an embodiment, the machine learning model 572 is trained using data which is general to the vehicle types and is used for predicting adjustments for the occupant's safety and comfort and thus adapting the settings based on real-time data. In an embodiment, given a scenario, safety and comfort may carry different weightage.

Using the training data, a machine learning model 572 may be trained so that it recognizes features of occupant profiles data that signify or correlate to safety and comfort. For example, a trained machine learning model 572 may recognize data features that signify the likelihood of an impact on the safety of the occupants and the vehicle as well. Through training, the machine learning model 572 may learn to identify predictive and non-predictive features and apply the appropriate weights to the features to optimize predictive accuracy of the machine learning model 572. In embodiments where supervised learning is used and each training data sample 558 has a label 570, the training algorithm may iteratively process each training data sample 558 (including occupant profiles 562, contextual data/sensor data 564, other data 568), and generate a predicted output 574 which is adjustment to the settings in the user profiles of one or more occupants based on safety and comfort for the occupants. Based on the comparison 576 results, the training algorithm may adjust the model's 572 parameters/configurations (e.g., weights) accordingly to minimize the differences between the generated predicted output 574 and the corresponding labels 570. Any suitable machine learning model and training algorithm may be used, including, e.g., neural networks, decision trees, clustering algorithms, and any other suitable machine learning techniques. Once trained, the machine learning model 572 may take input data associated with occupant profiles and vehicle data and output an adjustment to one or more occupant profile vehicle settings and limitation settings such that safety and comfort are maximized for each of the occupants. In an embodiment, the machine learning model, 572 is an artificial neural networks (ANN) model.

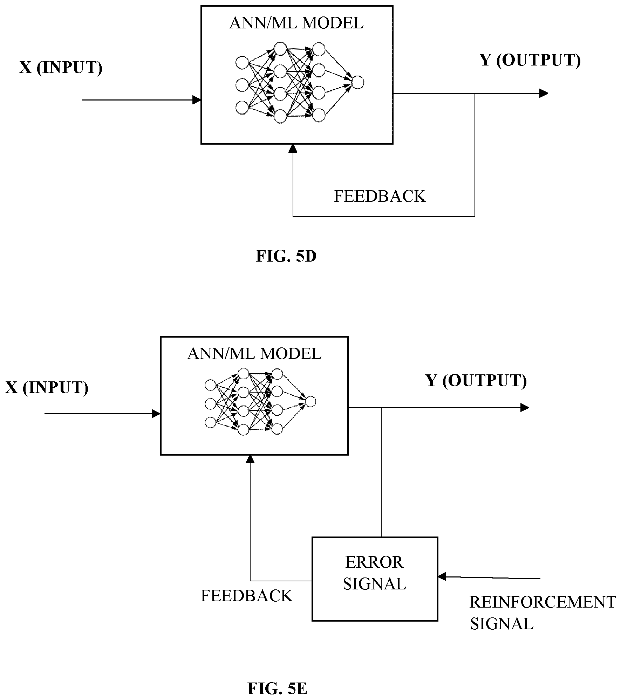

FIG. 5D shows a structure of the neural network / machine learning model with a feedback loop according to an embodiment. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, sending data to the next layer of the network. Otherwise, no data is passed to the next layer of the network. A machine learning model or an ANN model may be trained on a set of data to take a request in the form of input data, make a prediction on that input data, and then provide a response. Input data comprises data from occupant profiles 562, contextual data/sensor data 564, other data 568 and output comprises adjustment to the occupant profiles to maximize their safety and comfort given a scenario. Safety and comfort may carry weights based on the scenario. Further, additional parameters such as fastest time to destination, optimal route, minimum traffic route, a route for maximizing range, etc. can also be considered while considering safety and comfort. The model may learn from the data. Learning can be supervised learning and / or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict an adjustment to the vehicle settings and the limitation settings based on the inputs which are occupant profiles and the sensor data of the vehicle.

In an embodiment, ANNs may be a Deep-Neural Network (DNN), which is a multilayer tandem neural network comprising Artificial Neural Networks (ANN), Convolution Neural Networks (CNN) and Recurrent Neural Networks (RNN) that can recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes. The neural network is featured with the feedback loop to adjust the system output dynamically as it learns from the new data. In machine backpropagation, propagation and feedback loops are used to train an Artificial Intelligence (AI) model and continuously improve it upon usage. As the incoming data that the model receives increases, there are more opportunities for the model to learn from the data. The feedback loops, or backpropagation algorithms, identify inconsistencies and feed the corrected information back into the model as an input. Even though the AI/MI, model is trained well, with large sets of labeled data and concepts, after a while the models' performance may decline while adding new, unlabeled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabeled data is assimilated. A feedback loop refers to the process by which an AI model's predicted output is reused to train new versions of the model.

Initially, when the AI/ML model is trained, a few labeled samples comprising both positive and negative examples of the concepts (e.g., occupant type, occupant profile, priority levels for the profiles, limitations and priority levels, driving conditions, driver behavior, vehicle behavior, weather conditions etc.) are used that are meant for the model to learn how and what adjustments needs to be performed. Afterward, the model is tested using unlabeled data. By using, for example, deep learning and neural networks, the model can then make predictions on whether the desired output (for e.g., adjustments to the occupant settings and limitations to maximize safety, comfort etc.) is in the predicted range. However, in the cases where the model returns a low probability score, this input may be sent to a controller (maybe a human moderator) which verifies and, as necessary, corrects the result. The human moderator may be used only in exceptional cases. The feedback loop feeds labeled data, auto-labeled or controller-verified, back to the model dynamically and is used as training data so that the system can improve its predictions in real-time and dynamically. These models may be utilized at various levels, for example, (i) in image processing for detecting an occupant and occupant data (ii) in safety prediction given adjustments to the vehicle settings etc.

FIG. 5E shows a structure of the neural network / machine learning model with reinforcement learning according to an embodiment. The network receives feedback from authorized networked environments. Though the feedback logic is similar to supervised learning, the feedback obtained in this case is evaluative, not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced with a reward for each true positive of the output of the system. Feedback loops ensure that AI results do not stagnate. By incorporating a feedback loop, the model output keeps improving dynamically and over usage/time.

Display module 324, in the vehicles may be connected to the alert system through the vehicle's onboard computer or electronic control unit (ECU) according to an embodiment. The safety of the vehicle is constantly monitored. When the vehicle settings or limitation settings are changed, a warning signal is generated. This warning signal is then sent to the display module, which is responsible for presenting essential information to the occupant on the vehicle's dashboard or instrument cluster. The connection between the alert system and the display module is typically established through a communication network within the vehicle. Modern vehicles use Controller Area Network (CAN) or other communication protocols to transmit data between different electronic components, including the alert system and the display module.

Once the warning signal reaches the display module, it activates the appropriate visual and audible alerts to inform the driver about the safety. In another embodiment, the display module may also generate pop-up alerts on the infotainment or navigation screen, providing more detailed information about the safety issues and potential solutions, such as reducing the speed, aborting a lane change, or maintaining proper trailing distance etc. Furthermore, the vehicle may be equipped with haptic feedback capabilities, the display module can trigger haptic alerts, such as gentle vibrations in the steering wheel or seat, to provide an additional tactile cue to the driver. The integration of the safety alert system with the display module ensures that drivers receive timely and accurate information about their vehicle combination zone. In an embodiment of the system, the message comprises generating an alert in the vehicle, wherein the alert is at least one of a text message, a visual cue, a sound alert, a tactile cue, and a vibration.

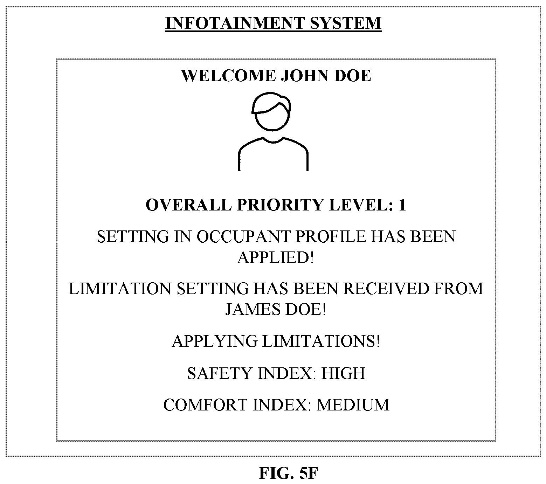

FIG. 5F shows a sample message displayed on a vehicle dashboard or infotainment system according to an embodiment. The message shows that the priority level of the occupant is level 1 and hence the limitations are being applied without any change. It may further specify from whom the limitation settings are received. This message may be displayed when the occupant enters the vehicle, and the vehicle starts adjusting the settings and limitations.

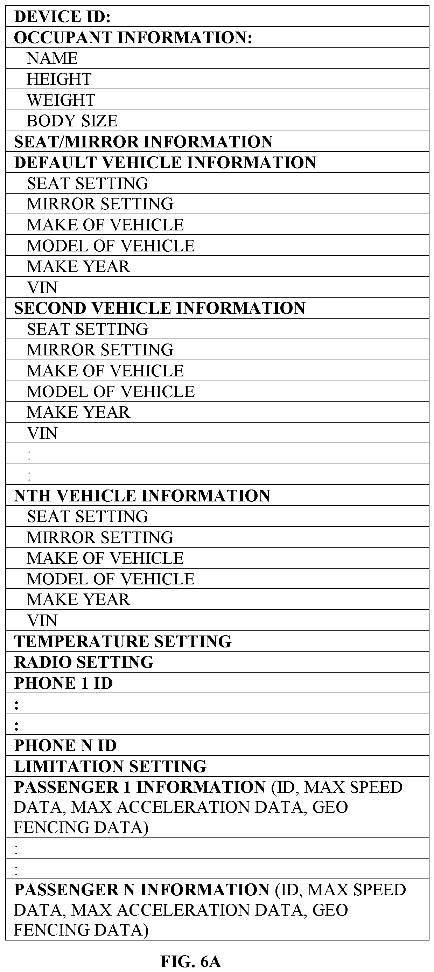

FIG. 6A shows an example message received by the vehicle from a user device according to an embodiment. In an aspect, a transmitter device (e.g., phone, portable device with microchip, key fob, etc.) is connected to a smart system of a vehicle. Once the connection with the vehicle is established, the transmitter transmits a message to the smart system. The message comprises height data, weight data, body size data, one or more seat/mirror adjustment data comprising a default seat adjustment that is associated with make and model used by the user's own vehicle (the system has to map the seat and mirror adjustment to current make and model), make and model of vehicle associated with the seat/mirror adjustment, additional seat/mirror adjustment data with specific make and model data for all previous vehicles borrowed or rented, temperature preferences, radio settings data, phone setting data to establish or add a phone to vehicle's Bluetooth^{®} list devices, etc. Following an exemplary message that is transmitted to the vehicle is as shown in FIG. 6A.

In an aspect, using the identification (ID) from limitation settings, the system can determine additional limitations even if no limitations are added, for example, based on prior use or driving record. If the driver abused the vehicle or received speeding violations, then the vehicle can limit use of the vehicle to protect the owner's interests.

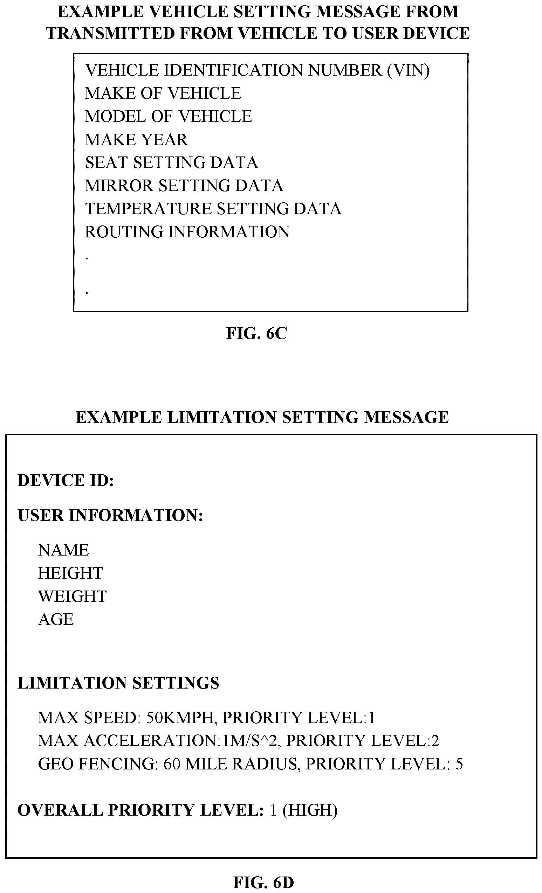

FIG. 6C shows an exemplary message received at the device from the vehicle. This message is transmitted by the vehicle if the user adjusts settings to the vehicle during the borrowing period. In an embodiment, the message comprises seat setting data, mirror setting data, make of vehicle, model of vehicle, make year, and vehicle identification number (VIN).

In an aspect of the connection process, when a person enters someone else's vehicle, using various technologies, a smart system recognizes the person (driver or a passenger) and determines 1) the person's preferences and 2) any adjustments to functionality (speed limits, stereo volume, etc.). For example, Car ABC (e.g., owned by another such as a rental car, a friend or family member car, etc.) comprises a smart system that allows user preferences to be set based on a device/transmitter (e.g., phone, FOB, badge, etc.) carried by the new occupant. As the occupant (e.g., driver or a passenger) nears Car ABC, the smart system begins a handshake process to connect with one or more devices that can provide user profile information. Once a connection is established with one or more devices, the system begins to retrieve information about the user and limitations associated with the user. For example, a message from the device can be transmitted that is received by the smart system comprising a receiver as the device nears the Car ABC. This reception of the message initiates the handshake process to establish the connection. Once the connection is established, user preferences and adjustments are extracted from the device. In an aspect, the smart system can transmit a request to provide the information. In another aspect, the device can automatically transmit the information once the handshake process is completed.

The message received may comprise occupant profile, wherein the occupant profile comprises occupant information, vehicle settings comprising seat and mirror information categorized and listed by vehicle model and make. The occupant profile may comprise all the vehicles that the occupant used in the past and their settings. In an embodiment, a default vehicle setting may be present to apply when there is no match found with the model of the vehicle that the occupant got into. In another embodiment, the settings of this new vehicle model may be communicated back and stored to the occupant profile. Further the occupant profile may comprise common settings that are used for all the vehicles such as temperature setting, radio setting etc. In an embodiment, the occupant profile may comprise various phone numbers associated with the occupant. For example, phone numbers could be family members, occupant friends and colleagues. In an embodiment, the occupant may predefine limitation settings for each of those passengers. These limitation settings may further be dynamically changed. Limitation settings may comprise maximum speed, maximum acceleration, geofencing etc. Further the message may comprise device identification number so that the vehicle knows which device it is communicating with and receiving messages.

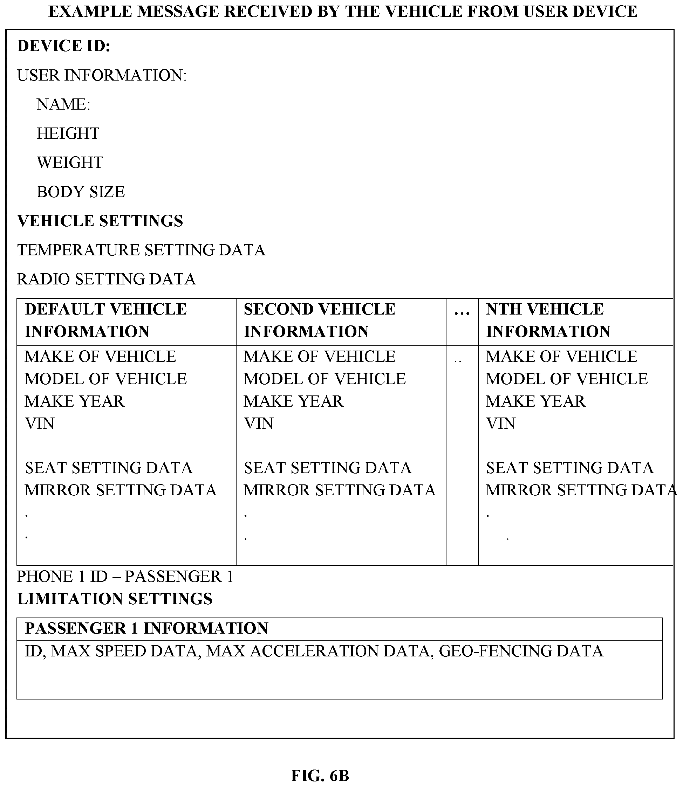

FIG. 6B shows another example message received by the vehicle from a user device according to an embodiment. The message received may comprise occupant profile, wherein the occupant profile comprises occupant information, vehicle settings comprising seat and mirror information categorized and listed by vehicle model and make. The occupant profile may comprise all the vehicles that the occupant used in the past and their settings. In an embodiment, a default vehicle setting may be present to apply when there is no match found with the model of the vehicle that the occupant got into. In another embodiment, the settings of this new vehicle model may be communicated back and stored to the occupant profile. Further the occupant profile may comprise common settings that are used for all the vehicles such as temperature setting, radio setting etc. In an embodiment, the occupant profile may comprise phone numbers associated with the occupant, such as a parent. In an embodiment, the occupant profile comprises predefined limitation settings. These limitation settings may further be dynamically changed by communicating with the phone number. Limitation settings may comprise maximum speed, maximum acceleration, geofencing etc. Further the message may comprise device identification number so that the vehicle knows which device it is communicating with and receiving the message.

FIG. 6C shows an example message transmitted by the vehicle to a user device comprising vehicle settings according to an embodiment. In an aspect, a transmitter assists establishing a connection with a vehicle by broadcasting a connection request message. Once the connection is established, the transmitter broadcasts a user preference message comprising user ID, seat positions, mirror position, temperature setting, routing information, one or more limitations data that limits functionality of the vehicle - max vehicle speed, max acceleration allowed, geofencing data, sobriety verification requirement, etc. In an aspect the transmitter can be a key fob, ID card, phone device, or any small portable device capable of exchanging messages with a smart system to set up user preferences and limitations. In an aspect, the transmitter may receive settings message from the vehicle system if the user has modified the settings. This may be due to the type of vehicle that is borrowed. The message may comprise seat setting data, vehicle setting data, make of the car, model of the car, make year and vehicle identification number.

The message received may comprise vehicle settings, wherein the vehicle settings comprise seat and mirror information, temperature setting, radio setting etc., of the specific vehicle model and make in which the occupant got into. In an embodiment, default vehicle settings may be received when there is no match found with the model of the vehicle that the occupant got into.

FIG. 6D shows an example message received by the vehicle from a user device comprising limitation settings according to an embodiment. The limitation setting message may comprise user information such as name, height, weight, age etc., to confirm that the limitations are set for the intended occupant. The message further comprises device identification number from which the message is shared along with timestamp. Limitation settings may comprise maximum speed, maximum acceleration, geofencing data, a specific route, a time limit, etc. Further, each restriction or limitation in the message may be accompanied by a priority level. The limitation settings may also comprise an overall priority level. The limitation settings could be preset limitations. Limitation settings may be received in real-time via the user device from another device. Limitation settings may be received in real-time by the vehicle from a device other than the user device.

In an embodiment, parents can establish limitation settings on a vehicle, when their child is borrowing the vehicle, to promote safety and responsible driving. These limitations may include setting a maximum speed for the vehicle to ensure adherence to speed limits, implementing geofencing to restrict the vehicle's operation within specified geographical boundaries, and enforcing curfew restrictions to limit driving during certain hours. Additionally, limitation settings may comprise the use of seatbelts and set audio volume limits to minimize distractions. Monitoring and limiting rapid acceleration or harsh braking can be implemented, along with restricting phone usage while driving to enhance focus on the road. Limitation settings may also consider setting mileage limits to control the distance traveled and initiating the ignition interlock devices for breathalyzer tests to prevent driving under the influence of alcohol. These limitation settings are implemented by the vehicle to foster safe and responsible driving behavior among young drivers.

In an embodiment, rental services may impose specific limitations or restrictions on vehicles to ensure safety, proper usage, and compliance with regulations via limitation settings. Limitation settings may comprise mileage limits to control the distance traveled during the rental period, and exceeding these limits may incur additional charges; specific geographic boundaries or regions where the vehicle is allowed to operate, ensuring it stays within designated areas; speed limitations to promote safe driving practices, and violating these limits can result in penalties; restrictions on towing, off-road driving and the transportation of pets.

In various scenarios, various restrictions/limitations can be set in the profile. For teenage drivers, parents can enforce limitations on speed, volume, and geographic boundaries to instill responsible driving habits. In employee fleet management, companies may implement restrictions on speed, vehicle features, and geofencing to ensure safety and compliance. Vehicle/Car rental services often set limits on mileage, geographic boundaries, and speed to monitor and regulate vehicle usage. Emergency service vehicles may have speed restrictions during non-emergencies for overall safety. In the delivery sector, companies may impose restrictions on mileage, usage duration, and geographic boundaries for operational efficiency. Public transportation vehicles may implement speed limitations and route restrictions to prioritize passenger safety. Car-sharing programs utilize restrictions on mileage, usage duration, and geographic boundaries for effective fleet management. In commercial trucking, restrictions on speed, idling, and routes are commonly employed for safety and regulatory compliance. Fleet management may include limitations on usage hours, routes, and idling to optimize operations. Autonomous vehicle test vehicles may have restrictions on specific conditions or areas during testing phases. Corporate vehicle/car policies often enforce restrictions aligning with sustainability goals, safety standards, and cost-effective management. Taxi services may limit certain vehicle features and speed for passenger safety and comfort. Such restrictions are used for safety, compliance, and operational efficiency across a diverse range of industries and use cases. In an embodiment, the limitation settings may comprise a trailing distance, lane change margins, safety zone restrictions, a volume restriction, a restriction on playing video or certain types of video, etc.

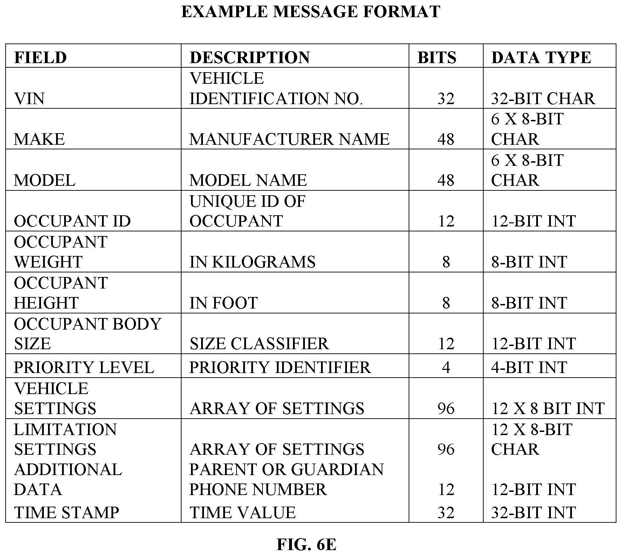

FIG. 6E shows an example message format and the bits allocated for the contents of the message according to an embodiment. To prepare a compact message for conveying occupant profile, a binary encoding scheme where each item is allocated a specific number of bits may be used. The number of bits allocated to each item will depend on the range and precision required for that particular attribute. FIG. 6E shows an example field and allocation of bits according to an embodiment. In this example, each field in the message has a specific number of bits allocated to it:

Vehicle Identification Number (VIN) field uses 32 bits (32 characters, each represented by an 8-bit ASCII code) to represent the Vehicle Identification Number, a unique identifier for the trailer. Make uses 48 bits (6 characters, each represented by an 8-bit ASCII code) to specify the manufacturer's name. Model uses 48 bits (6 characters, each represented by an 8-bit ASCII code) to specify the model's name.

Occupant ID uses 12 bits to represent the occupant id. In an embodiment, it could be the occupant's mobile number. Further the occupant details may include occupant weight using 8 bits integer value, occupant height using 8 bits representing an integer value, occupant body size using a 12 bit integer which states a size classifier value.

Priority level for the occupant profile may be using a 4 bit integer value. Further the message may comprise an array allocated to vehicle settings which is 96 bits where the array size is 12x8 bits and an array allocated to limitation settings which is 96 bits where the array size is 12x8 bits. The message further comprises additional data bits, 12 bit integer to convey any additional data, such as a parent or guardian phone number when the profile belongs to a minor, child or a young adult.

The Time Value field uses 32 bits to represent the timestamp using Unix Epoch format, indicating when the message was generated. The Reserved Bits are bits set aside for potential future use or additional attributes that may be added to the message format later.

Message fields and allocation of bits are for example and a hypothetical representation for demonstration. In implementations, the fields, actual message format, and the number of bits allocated to each item may vary based on the specific requirements and constraints of the application and communication protocol used.

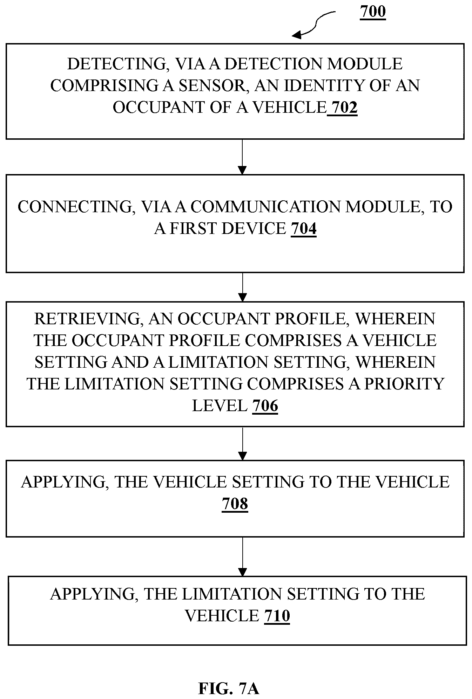

FIG. 7A shows a block diagram of the method 700 executed by the vehicle for accessing occupant profile and applying vehicle settings according to an embodiment. According to an embodiment, it is a method comprising, detecting, via a detection module comprising a sensor, an identity of an occupant of a vehicle as shown in step 702; connecting, via a communication module, to a first device as shown in step 704; retrieving, an occupant profile, wherein the occupant profile comprises a vehicle setting and a limitation setting, wherein the limitation setting comprises a priority level as shown in step 706; applying, the vehicle setting to the vehicle as shown in step 708; applying, the limitation setting to the vehicle as shown in step 710; and wherein the method is operable to be a component of the vehicle.

According to an embodiment of the method, the limitation setting is received in real-time after identifying the occupant via a second device. According to an embodiment of the method, the limitation setting is received from the second device via the first device. According to an embodiment of the method, an occupant data is provided periodically to the second device, wherein the occupant data comprises a location and a speed.

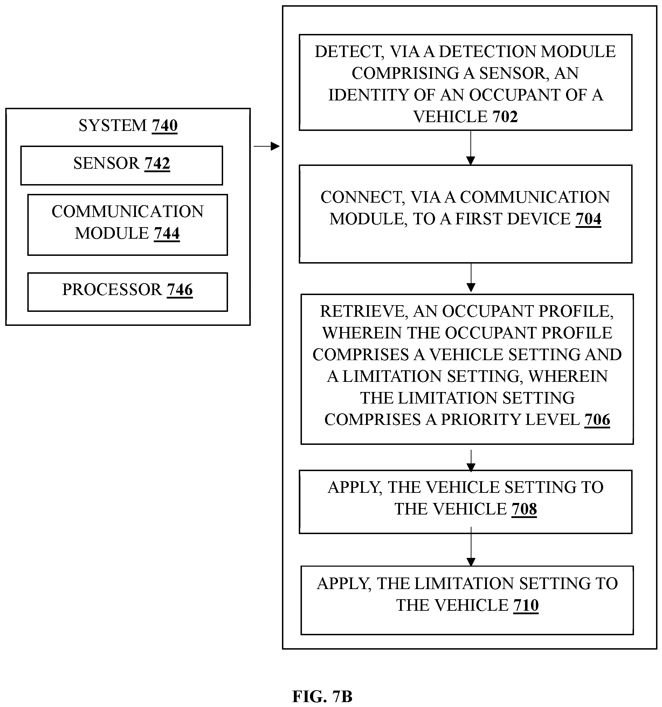

FIG. 7B shows a block diagram of the system of vehicle for accessing occupant profile and applying vehicle settings according to an embodiment. According to an embodiment, it is a system 740 comprising, a sensor 742, a communication module 744; and a processor 746; wherein the processor is operable to: detect, via a detection module comprising the sensor, an identity of an occupant of a vehicle as shown in step 702; connect, via the communication module, to a first device as shown in step 704; retrieve, an occupant profile, wherein the occupant profile comprises a vehicle setting and a limitation setting, wherein the limitation setting comprises a priority level as shown in step 706; apply, the vehicle setting to the vehicle as shown in step 708; apply, the limitation setting to the vehicle as shown in step 710; and wherein the system is operable to be a component of the vehicle.

According to an embodiment of the system, the communication module detects the first device when the first device is in proximity to the vehicle based on a handshake signal. According to an embodiment of the system, the handshake signal is exchanged via one of a Wi-Fi signal, a Bluetooth signal, a near field communication (NFC) signal, a wireless cell signal, and a radio signal. According to an embodiment of the system, the communication module is operable for a wired connection and a wireless connection.

According to an embodiment of the system, the occupant profile is retrieved via the first device. According to an embodiment of the system, the first device comprises one of a phone, a key fob, a smart card, a portable device with microchip, an RFID chip, an identification card, a laptop, a personal computing device, a wearable device, and a badge. According to an embodiment of the system, the occupant comprises one of a minor, a senior citizen, a baby on board, and an occupant having a medical emergency.

According to an embodiment of the system, the vehicle setting corresponds to a make and a model of the vehicle. According to an embodiment of the system, the vehicle setting includes one or more of a position of a seat, an angle of the seat, a position of mirror, an angle of the mirror, an air and heat setting, a lighting setting, a volume setting of speakers, a video setting to be displayed, a heat setting of the seat, a window setting, a digital glare setting of a window, and a radio setting.

According to an embodiment of the system, the limitation setting comprises one or more of a maximum speed data, a maximum acceleration data, a sobriety verification requirement, a route limitation data, a time limit data, and a geofencing data. According to an embodiment of the system, the system is operable to connect via the communication module to a second device and receive the limitation setting from the second device. According to an embodiment of the system, the second device belongs to one of a guardian, a parent, an owner of the vehicle, and a ride service administrator. According to an embodiment of the system, the second device comprises one of a phone, a key fob, a smart card, a portable device with microchip, an identification card, a laptop, a personal computing device, a wearable device, and a badge. According to an embodiment of the system, the limitation setting is received in real-time after identifying the occupant. According to an embodiment of the system, the limitation setting is received via the first device. According to an embodiment of the system, an occupant data is provided periodically to the second device, wherein the occupant data comprises a location and a speed. According to an embodiment of the system, the occupant data further comprises a route on which the vehicle is heading. According to an embodiment of the system, the occupant data further comprises total number of occupants in the vehicle.

According to an embodiment of the system, the limitation setting comprises a priority level. According to an embodiment of the system, the priority level is received in real-time after identifying the occupant. According to an embodiment of the system, the priority level is received via one of the first device and the second device. According to an embodiment of the system, the priority level indicates a prevailing authority of the limitation setting over conflicting situations. According to an embodiment of the system, the limitation setting is adjusted based on detecting another occupant in the vehicle based on the priority level.

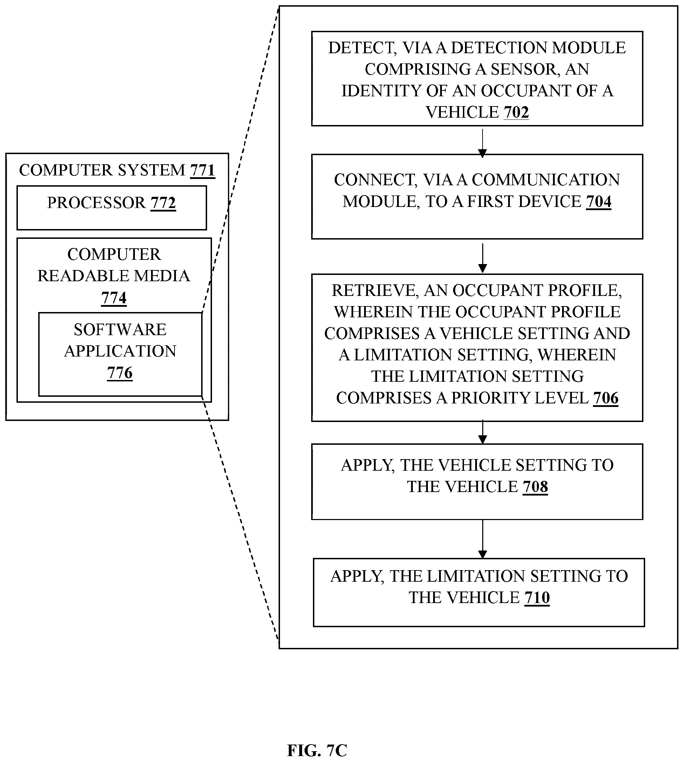

FIG. 7C shows a block diagram of the method executed by the non-transitory computer-readable medium for accessing occupant profile and applying vehicle settings according to an embodiment. According to an embodiment, it is a non-transitory computer-readable medium 774 having stored thereon instructions executable by a computer system 771 to perform operations comprising, detecting, via a detection module comprising a sensor, an identity of an occupant of a vehicle as shown in step 702; connecting, via a communication module, to a first device as shown in step 704; retrieving, an occupant profile, wherein the occupant profile comprises a vehicle setting and a limitation setting, wherein the limitation setting comprises a priority level as shown in step 706; applying, the vehicle setting to the vehicle as shown in step 708; and applying, the limitation setting to the vehicle as shown in step 710. A software application 776 may be stored on the computer-readable medium 774 and executed with processor 772 of the computer system 771.

According to an embodiment of the non-transitory computer-readable medium, the limitation setting is received in real-time after identifying the occupant. According to an embodiment of the non-transitory computer-readable medium, the limitation setting is received via a second device. According to an embodiment of the non-transitory computer-readable media, an occupant data is provided periodically to the second device, wherein the occupant data comprises a location and a speed.

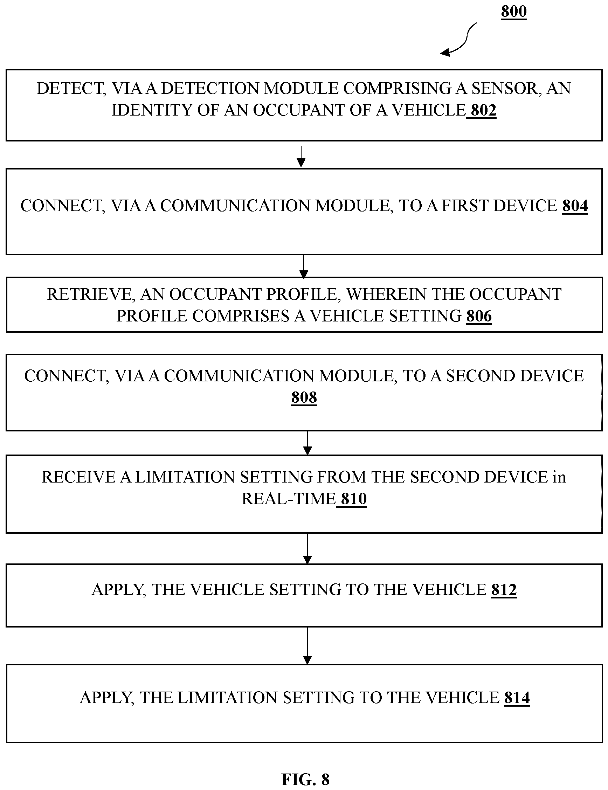

FIG. 8 shows a block diagram of a method executed by the vehicle for accessing occupant profile and applying vehicle settings according to an embodiment. According to an embodiment, it is a method 800 comprising, detecting, via a detection module comprising a sensor, an identity of an occupant of a vehicle as shown in step 802; connecting, via a communication module, to a first device as shown in step 804; retrieving, an occupant profile, wherein the occupant profile comprises a vehicle setting as shown in step 806; connecting, via a communication module, to a second device as shown in step 808; receive a limitation setting from the second device in real-time as shown in step 810; applying, the vehicle setting to the vehicle as shown in step 812; applying, the limitation setting to the vehicle as shown in step 814; and wherein the method is operable to be a component of the vehicle. According to an embodiment of the system, the limitation setting comprises a priority level.

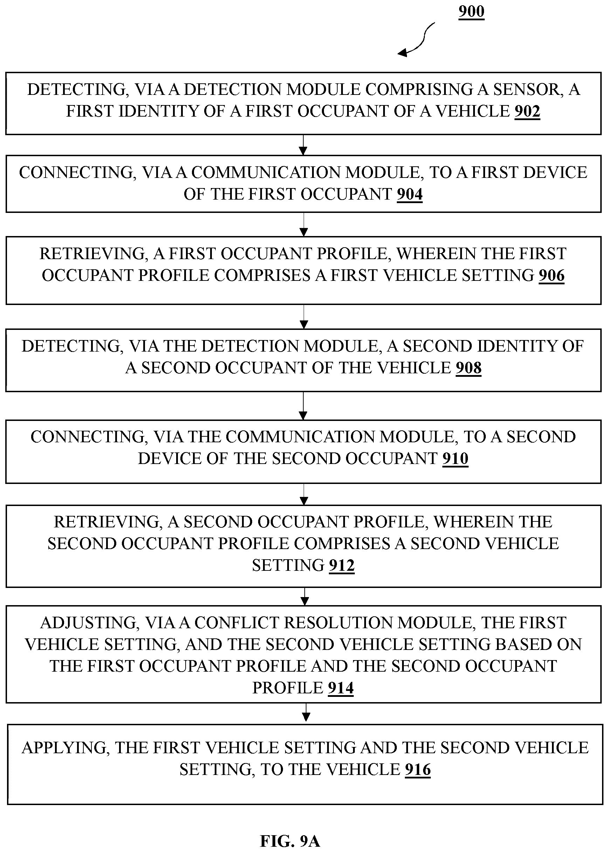

FIG. 9A shows a block diagram of the method executed by the vehicle for adjusting vehicle settings when more than one occupant is present in a vehicle according to an embodiment. According to an embodiment, it is a method 900 comprising, detecting, via a detection module comprising a sensor, a first identity of a first occupant of a vehicle as shown in step 902; connecting, via a communication module, to a first device of the first occupant as shown in step 904; retrieving, a first occupant profile, wherein the first occupant profile comprises a first vehicle setting as shown in step 906; detecting, via the detection module, a second identity of a second occupant of the vehicle as shown in step 908; connecting, via the communication module, to a second device of the second occupant as shown in step 910; retrieving, a second occupant profile, wherein the second occupant profile comprises a second vehicle setting as shown in step 912; adjusting, via a conflict resolution module, the first vehicle setting, and the second vehicle setting based on the first occupant profile and the second occupant profile as shown in step 914; and applying, the first vehicle setting and the second vehicle setting, to the vehicle as shown in step 916.

According to an embodiment of the method, the first occupant profile further comprises a first limitation setting and wherein the second occupant profile further comprises a second limitation setting. According to an embodiment of the method, the first limitation setting further comprises a first priority level and the second limitation setting further comprises a second priority level. According to an embodiment of the method, the first limitation setting, and the first priority level is received via a third device in real-time. According to an embodiment of the method, the second limitation setting, and the second priority level is received via a fourth device in real-time. According to an embodiment of the method, the first vehicle setting is adjusted based on the first priority level and the second priority level. According to an embodiment of the method, the second limitation setting is adjusted based on the first priority level and the second priority level.

According to an embodiment of the method, the first occupant comprises one of a non-owner driver, an owner driver, and a passenger. According to an embodiment of the method, the first occupant is one of a minor, a senior citizen, a baby on board, and an occupant having a medical emergency. According to an embodiment of the method, the second occupant comprises one of a non-owner driver, an owner driver, and a passenger. According to an embodiment of the method, the second occupant is one of a minor, a senior citizen, a baby on board, and an occupant having a medical emergency.

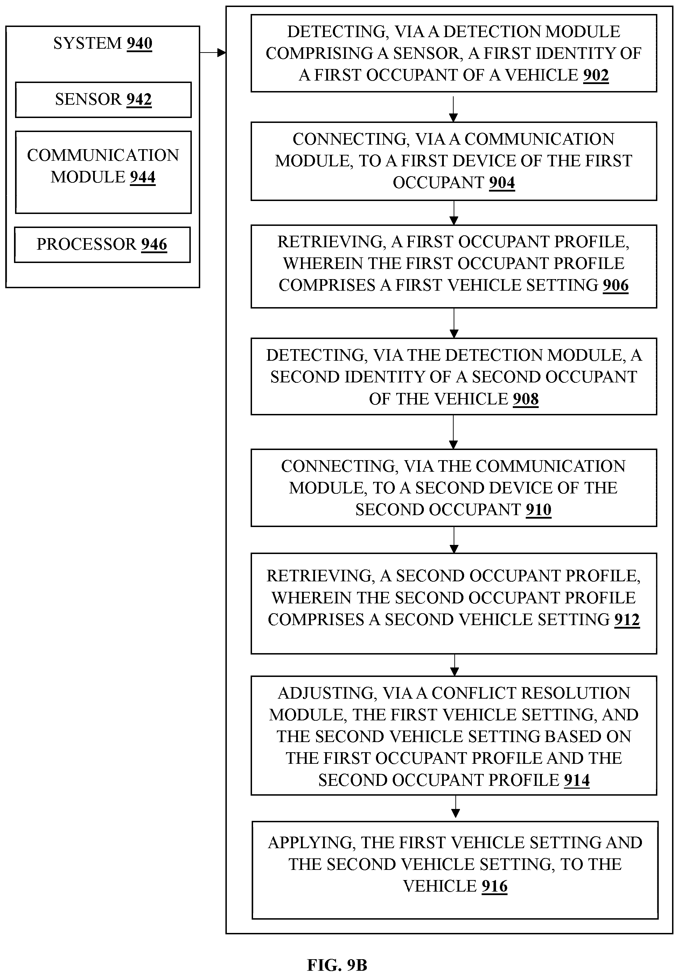

FIG. 9B shows a block diagram of the system of vehicle for adjusting vehicle settings when more than one occupant is present in a vehicle according to an embodiment. According to an embodiment, it is a system 940 comprising, a sensor 942, a communication module 944; and a processor 946; wherein the processor is operable to detect, via a detection module comprising the sensor, a first identity of a first occupant of a vehicle as shown in step 902; connect, via the communication module, to a first device of the first occupant as shown in step 904; retrieve, a first occupant profile, wherein the first occupant profile comprises a first vehicle setting as shown in step 906; detect, via the detection module, a second identity of a second occupant of the vehicle as shown in step 908; connect, via the communication module, to a second device of the second occupant as shown in step 910; retrieve, a second occupant profile, wherein the second occupant profile comprises a second vehicle setting as shown in step 912; adjust, via a conflict resolution module, the first vehicle setting and the second vehicle setting based on the first occupant profile and the second occupant profile as shown in step 914; and apply, the first vehicle setting and the second vehicle setting to the vehicle as shown in step 916.

According to an embodiment of the system, the sensor comprises one of a weight sensor, a heat sensor, a motion sensor, a sound sensor, an inertial sensor, a compression sensor, a camera sensor, an RFID reader, a proximity sensor, a smart phone, a key fob, a smart card, a portable device with microchip, a wearable device, and a badge.

According to an embodiment of the system, the first occupant comprises one of a non-owner driver, an owner driver, and a passenger. According to an embodiment of the system, the first occupant is one of a minor, a senior citizen, a baby on board, and an occupant having a medical emergency. According to an embodiment of the system, the second occupant comprises one of a non-owner driver, an owner driver, and a passenger. According to an embodiment of the system, the second occupant is one of a minor, a senior citizen, a baby on board, and an occupant having a medical emergency.

According to an embodiment of the system, the conflict resolution module comprises artificial intelligence aided by machine learning modules.

According to an embodiment of the system, the first occupant profile further comprises a first limitation setting and wherein the second occupant profile further comprises a second limitation setting. According to an embodiment of the system, the first limitation setting further comprises a first priority level and the second limitation setting further comprises a second priority level. According to an embodiment of the system, the first limitation setting, and the first priority level is received via a third device in real-time. According to an embodiment of the system, the second limitation setting, and the second priority level is received via a fourth device in real-time. According to an embodiment of the system, the first vehicle setting is adjusted based on the first priority level and the second priority level. According to an embodiment of the system, the second limitation setting is adjusted based on the first priority level and the second priority level.

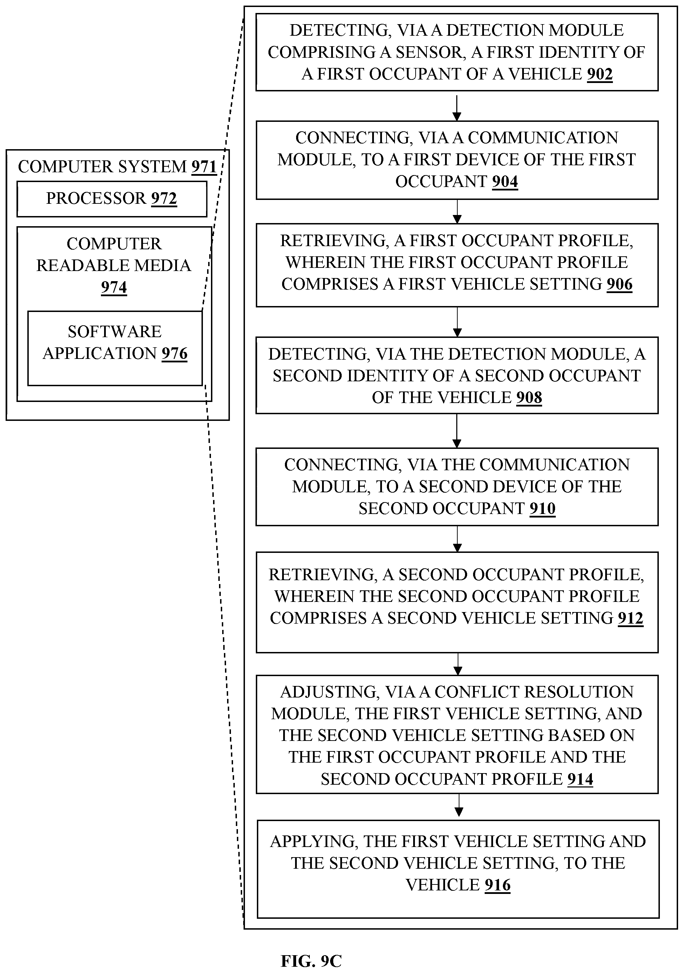

FIG. 9C shows a block diagram of the method executed by the non-transitory computer-readable medium for adjusting vehicle settings when more than one occupant is present in a vehicle according to an embodiment. According to an embodiment, it is a non-transitory computer-readable medium having stored thereon instructions executable by a computer system to perform operations comprising, detecting, via a detection module comprising a sensor, a first identity of a first occupant of a vehicle as shown in step 902; connecting, via a communication module, to a first device of the first occupant as shown in step 904; retrieving, a first occupant profile, wherein the first occupant profile comprises a first vehicle setting as shown in step 906; detecting, via the detection module, a second identity of a second occupant of the vehicle as shown in step 908; connecting, via the communication module, to a second device of the second occupant as shown in step 910; retrieving, a second occupant profile, wherein the second occupant profile comprises a second vehicle setting as shown in step 912; adjusting, via a conflict resolution module, the first vehicle setting, and the second vehicle setting based on the first occupant profile and the second occupant profile as shown in step 914; and applying, the first vehicle setting and the second vehicle setting, to the vehicle as shown in step 916. A software application 976 may be stored on the computer-readable medium 974 and executed with processor 972 of the computer system 971.

According to an embodiment of the non-transitory computer-readable medium, the first occupant profile further comprises a first limitation setting and wherein the second occupant profile further comprises a second limitation setting. According to an embodiment of the non-transitory computer-readable medium, the first limitation setting further comprises a first priority level and the second limitation setting further comprises a second priority level.

According to an embodiment of the non-transitory computer-readable medium, the first limitation setting and the first priority level is received via a third device in real-time. According to an embodiment of the non-transitory computer-readable medium, the second limitation setting and the second priority level is received via a fourth device in real-time According to an embodiment of the non-transitory computer-readable medium, the first vehicle setting is adjusted based on the first priority level and the second priority level. According to an embodiment of the non-transitory computer-readable medium, the second limitation setting is adjusted based on the first priority level and the second priority level.

According to an embodiment of the non-transitory computer-readable medium, the first occupant comprises one of a non-owner driver, an owner driver, and a passenger. According to an embodiment of the non-transitory computer-readable medium, the first occupant is one of a minor, a senior citizen, a baby on board, and an occupant having a medical emergency. According to an embodiment of the non-transitory computer-readable medium, the second occupant comprises one of a non-owner driver, an owner driver, and a passenger. According to an embodiment of the non-transitory computer-readable medium, the second occupant is one of a minor, a senior citizen, a baby on board, and an occupant having a medical emergency.

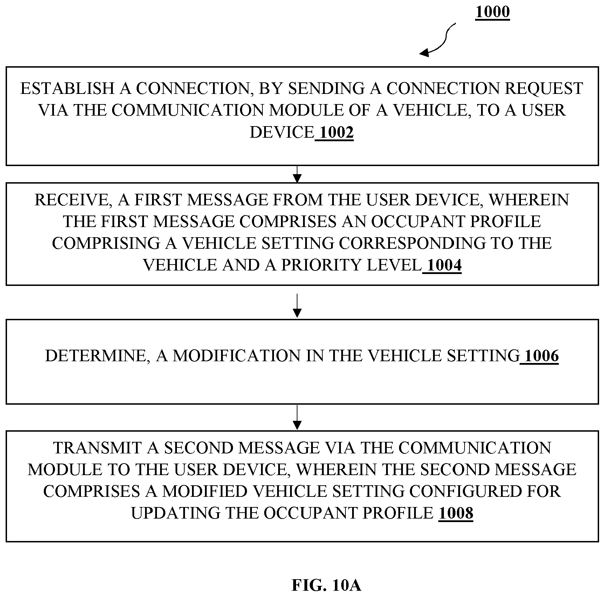

FIG. 10A shows a block diagram of the method executed by the vehicle for transmitting and receiving messages by a vehicle according to an embodiment. According to an embodiment, it is a method 1000 comprising establishing a connection, by sending a connection request via a communication module, to a user device as shown in step 1002; receiving, a first message from the user device, wherein the first message comprises an occupant profile comprising a vehicle setting corresponding to the vehicle and a priority level as shown in step 1004; determining, a modification in the vehicle setting as shown in step 1006; and transmitting a second message via the communication module to the user device, wherein the second message comprises a modified vehicle setting configured for updating the occupant profile as shown in step 1008. According to an embodiment of the method, the communication module comprises a transmitter and a receiver.

According to an embodiment of the method, the user device comprises one of a phone, a key fob, a smart card, a portable device with microchip, an identification (ID) card, a laptop, a personal computing device, a wearable device, and a badge. According to an embodiment of the method, the method is operable to transmit a third message from the vehicle to the user device, wherein the third message comprises an identification data of the vehicle prior to the receiving of the first message. According to an embodiment of the method, the vehicle setting comprises one or more of a seat setting, a mirror setting, a temperature setting, a radio setting corresponding to the identification data of the vehicle.

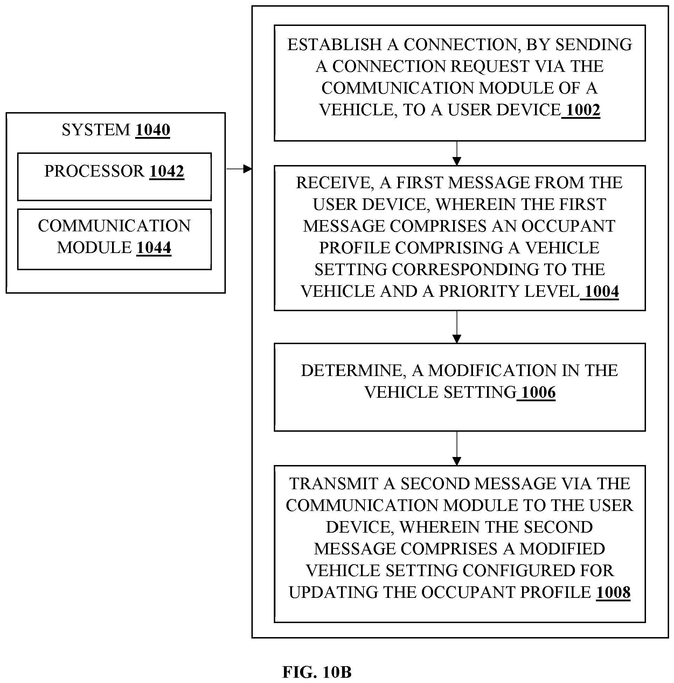

FIG. 10B shows a block diagram of the system of vehicle for transmitting and receiving messages by a vehicle according to an embodiment. According to an embodiment, it is a system 1040 comprising a communication module 1044 and a processor 1042 coupled to a memory; and wherein the processor is configured to establish a connection, by sending a connection request via the communication module of a vehicle, to a user device as shown in step 1002; receive, a first message from the user device, wherein the first message comprises an occupant profile comprising a vehicle setting corresponding to the vehicle and a priority level as shown in step 1004; determine, a modification in the vehicle setting as shown in step 1006; and transmit a second message via the communication module to the user device, wherein the second message comprises a modified vehicle setting configured for updating the occupant profile as shown in step 1008. According to an embodiment of the system, the communication module comprises a transmitter and a receiver.

According to an embodiment of the system, the user device comprises one of a phone, a key fob, a smart card, a portable device with microchip, an identification (ID) card, a laptop, a personal computing device, a wearable device, and a badge. According to an embodiment of the system, the system further comprises an application interface on the user device. According to an embodiment of the system, the system is operable to store the occupant profile on the user device.

According to an embodiment of the system, the system is operable to transmit a third message from the vehicle to the user device, wherein the third message comprises an identification data of the vehicle prior to the receiving of the first message. According to an embodiment of the system, the identification data of the vehicle comprises one or more of a vehicle identification number, a make of the vehicle, a model of the vehicle.

According to an embodiment of the system, the modified vehicle setting comprises a change or addition in one or more of a seat setting, a mirror setting, a temperature setting, a radio setting, and a routing information. According to an embodiment of the system, the occupant comprises one of a non-owner driver, an owner driver, and a passenger. According to an embodiment of the system, the occupant profile is stored in one or more of a local storage, a remote storage, and a cloud storage.

According to an embodiment of the system, the system further comprises an artificial intelligence module comprising machine learning models to process a historical data a recommend a setting based on one or more of real-time sensor data, other occupants in the vehicle, current weather data, current traffic data, and a road condition.

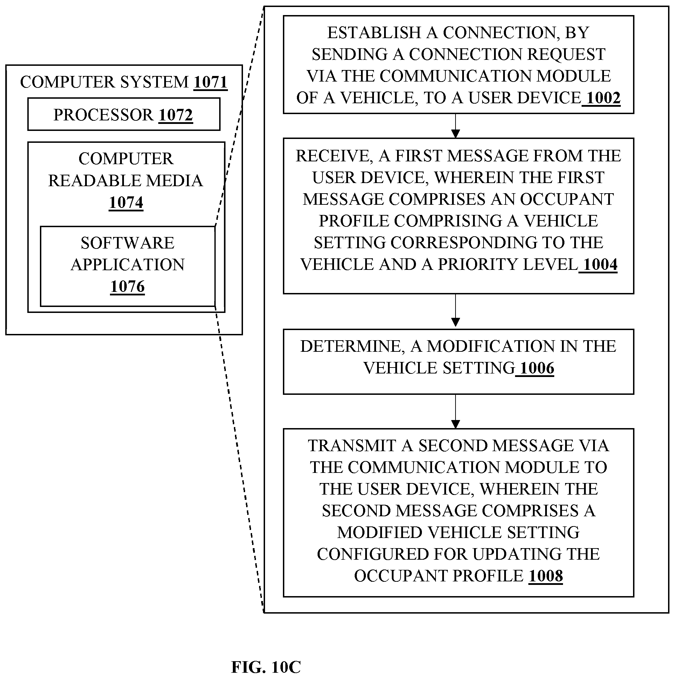

FIG. 10C shows a block diagram of the method executed by the non-transitory computer-readable medium for transmitting and receiving messages by a vehicle according to an embodiment. According to an embodiment, it is a non-transitory computer-readable medium 1074 operations having stored thereon instructions executable by a computer system 1071 to perform operations comprising establishing a connection, by sending a connection request via a communication module, to a user device as shown in step 1002; receiving, a first message from the user device, wherein the first message comprises an occupant profile comprising a vehicle setting corresponding to the vehicle and a priority level as shown in step 1004; determining, a modification in the vehicle setting as shown in step 1006; and transmitting a second message via the communication module to the user device, wherein the second message comprises a modified vehicle setting configured for updating the occupant profile as shown in step 1008. A software application 1076 may be stored on the computer-readable medium 1074 and executed with processor 1072 of the computer system 1071.

According to an embodiment of the non-transitory computer-readable medium, the occupant profile further comprises age of the occupant, height of the occupant, weight of the occupant, and a body size of the occupant. According to an embodiment of the non-transitory computer-readable medium, the connection is a wireless connection. According to an embodiment of the non-transitory computer-readable medium, the non-transitory computer-readable medium is operable to transmit a third message from the vehicle to the user device, wherein the third message comprises an identification data of the vehicle prior to the receiving of the first message.

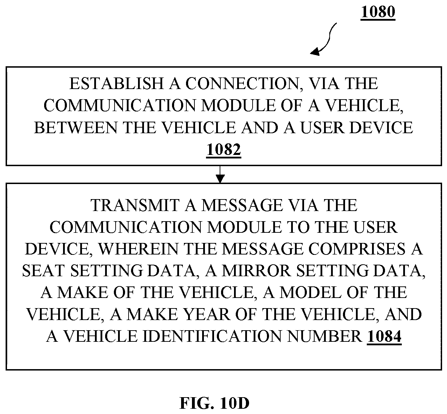

FIG. 10D shows a block diagram of the method executed by the vehicle for transmitting a message by the vehicle when the user adjusts settings to the vehicle according to an embodiment. According to an embodiment, it is a method 1080 comprising, establishing a connection, via the communication module of a vehicle, between the vehicle and a user device as shown at 1082; transmitting a message via the communication module to the user device, wherein the message comprises a seat setting data, a mirror setting data, a make of the vehicle, a model of the vehicle, a make year of the vehicle, and a vehicle identification number as shown at 1084; and wherein the method is operable to be a component of the vehicle. According to an embodiment of the method, the user device comprises one of a phone, a key fob, a smart card, a portable device with microchip, an identification card, a laptop, a personal computing device, a wearable device, and a badge.

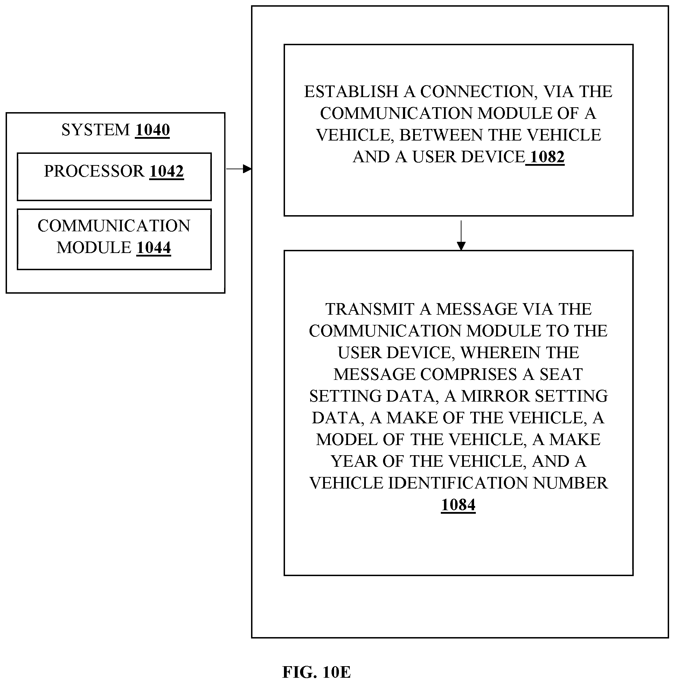

FIG. 10E shows a block diagram of the system of vehicle for transmitting a message by the vehicle when the user adjusts settings to the vehicle according to an embodiment. According to an embodiment, it is a system 1040 comprising a communication module 1044 and a processor 1042; wherein the processor 1042 is configured to establish a connection, via the communication module of a vehicle, between the vehicle and a user device as shown at step 1082; transmit a message via the communication module to the user device, wherein the message comprises a seat setting data, a mirror setting data, a make of the vehicle, a model of the vehicle, a make year of the vehicle, and a vehicle identification number as shown at step 1084; and wherein the system is operable to be a component of the vehicle. According to an embodiment of the method, the user device comprises one of a phone, a key fob, a smart card, a portable device with microchip, an identification card, a laptop, a personal computing device, a wearable device, and a badge.

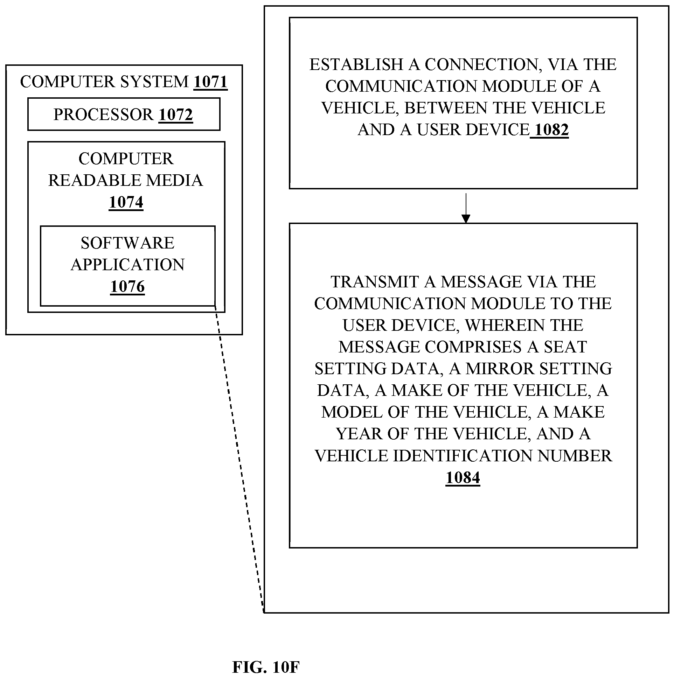

FIG. 10F shows a block diagram of the method executed by the non-transitory computer-readable medium for transmitting a message by the vehicle when the user adjusts settings to the vehicle according to an embodiment. According to an embodiment, it is a non-transitory computer-readable medium 1074 having stored thereon instructions executable by a computer system 1071 to perform operations comprising establishing a connection, via the communication module of a vehicle, between the vehicle and a user device as shown at 1082; transmitting a message via the communication module to the user device, wherein the message comprises a seat setting data, a mirror setting data, a make of the vehicle, a model of the vehicle, a make year of the vehicle, and a vehicle identification number as shown at 1084. According to an embodiment of the non-transitory computer-readable medium, the user device comprises one of a phone, a key fob, a smart card, a portable device with microchip, an identification card, a laptop, a personal computing device, a wearable device, and a badge. A software application 1076 may be stored on the computer-readable medium 1074 and executed with processor 1072 of the computer system 1071.

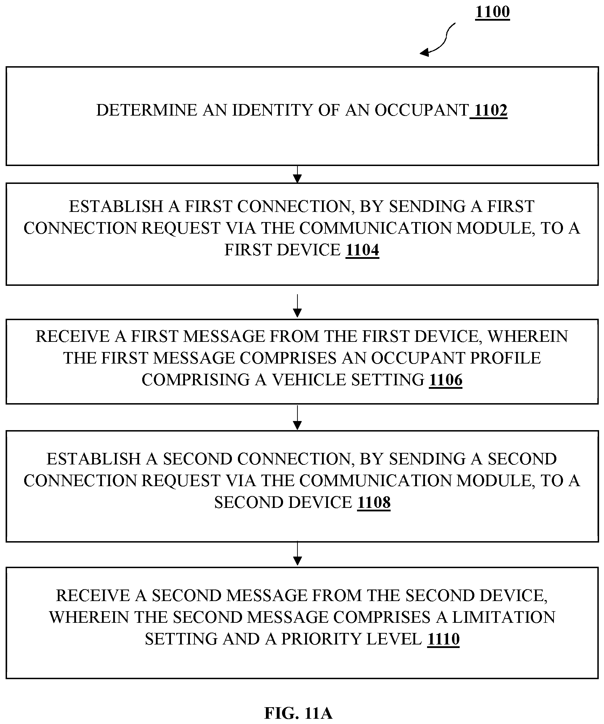

FIG. 11A shows a block diagram of the method executed by a vehicle for receiving messages by a vehicle according to an embodiment. According to an embodiment, it is a method 1100 comprising determining an identity of an occupant as shown in step 1102; establishing a first connection, by sending a first connection request via a communication module, to a first device as shown in step 1104; receiving a first message from the first device, wherein the first message comprises an occupant profile comprising a vehicle setting as shown in step 1106; establishing a second connection, by sending a second connection request via the communication module, to a second device as shown in step 1108; and receiving a second message from the second device, wherein the second message comprises a limitation setting and a priority level as shown in step 1110. According to an embodiment of the method, the communication module comprises a transmitter and a receiver.

According to an embodiment of the method, the first device comprises any one of a phone, a key fob, an infotainment system, a portable device with microchip, an identification card, a laptop, a personal computing device, a wearable device, and a badge. According to an embodiment of the method, the second device comprises one of a phone, a key fob, a smart card, a portable device with microchip, an identification card, a laptop, a personal computing device, a wearable device, and a badge. According to an embodiment of the method, the method further comprises an application on the first device, to store the occupant profile in a database.

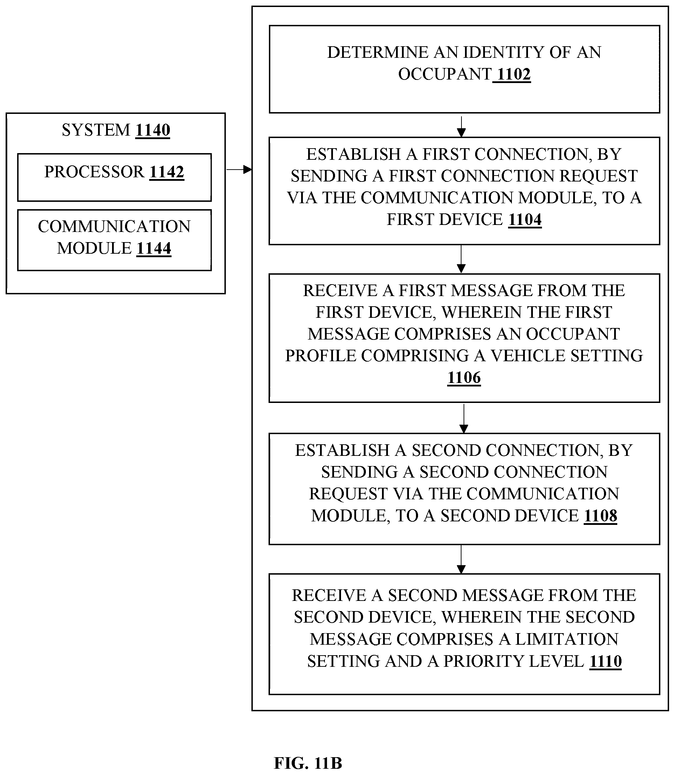

FIG. 11B shows a block diagram of the vehicle system for receiving messages by the vehicle according to an embodiment. According to an embodiment, it is a system 1140 comprising a communication module 1144 and a processor 1142; and wherein the processor 1142 is configured to determine an identity of an occupant as shown in step 1102; establish a first connection, by sending a first connection request via the communication module, to a first device as shown in step 1104; receive a first message from the first device, wherein the first message comprises an occupant profile comprising a vehicle setting as shown in step 1106; establish a second connection, by sending a second connection request via the communication module, to a second device as shown in step 1108; and receive a second message from the second device, wherein the second message comprises a limitation setting and a priority level as shown in step 1110.

According to an embodiment of the system, the communication module comprises a transmitter and a receiver. According to an embodiment of the system, the first device comprises one of a phone, a key fob, a smart card, a portable device with microchip, an identification card, a laptop, a personal computing device, a wearable device, and a badge. According to an embodiment of the system, the second device comprises one of a phone, a key fob, a smart card, a portable device with microchip, an identification card, a laptop, a personal computing device, a wearable device, and a badge.

According to an embodiment of the system, the system further comprises an application on the first device operable to store the occupant profile in a database. According to an embodiment of the system, the occupant profile further comprises occupant data comprising a height of the occupant, a weight of the occupant, a body size of the occupant, and an age of the occupant.

According to an embodiment of the system, the vehicle setting comprises one or more of a seat setting, mirror setting, temperature setting, radio setting. According to an embodiment of the system, the seat setting comprises one or more of a setting for the height of a seat, a recline of the seat, a lumbar support of the seat, an armrest height, and a temperature setting. According to an embodiment of the system, the mirror setting comprises one or more of a mirror tilt, a mirror angle, a mirror height, and a mirror position. According to an embodiment of the system, the mirror setting is configured to adjust a mirror, wherein the mirror is one or more of a side-view and a rearview mirror. According to an embodiment of the system, the temperature setting comprises a fan speed, a preferred temperature, and tilt and position of vents of an HVAC system of the vehicle. According to an embodiment of the system, the radio setting comprises one or more of preferred genres of content, audio playback settings, and a volume.

According to an embodiment of the system, the system is operable to transmit a third message from the vehicle to the first device, wherein the third message comprises an identification data of the vehicle prior to the receiving of the first message. According to an embodiment of the system, the vehicle setting that is received from the first device corresponds to the identification data of the vehicle. According to an embodiment of the system, the limitation setting comprises a maximum speed data, a maximum acceleration data, a sobriety verification requirement, a time limit data, and a geofencing data. According to an embodiment of the system, the occupant comprises one of a non-owner driver, an owner driver, and a passenger. According to an embodiment of the system, the occupant profile is stored in one or more of a local storage, a remote storage, and a cloud storage.

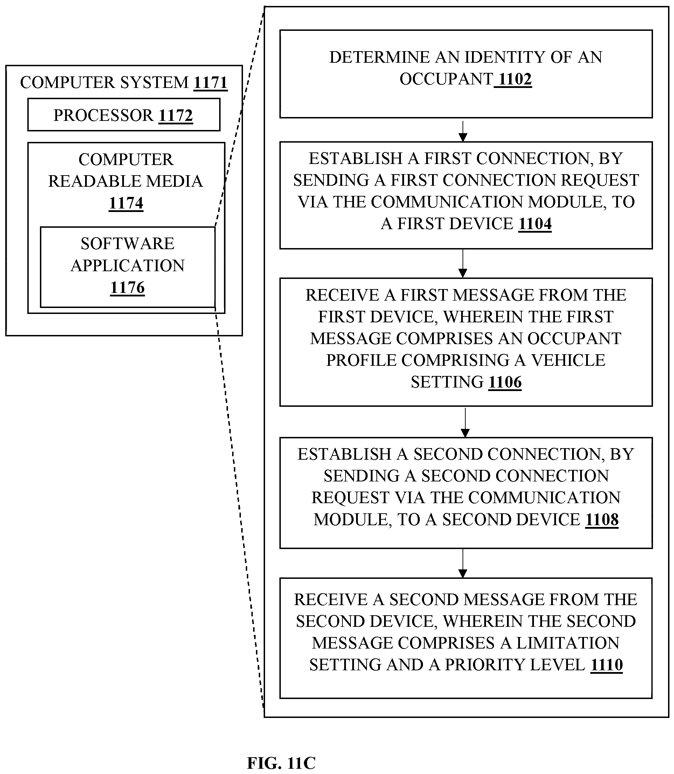

FIG. 11C shows a block diagram of the method executed by the non-transitory computer-readable medium 1174 for receiving messages by a vehicle according to an embodiment. According to an embodiment, it is a non-transitory computer-readable medium 1174 having stored thereon instructions executable by a computer system 1171 to perform operations comprising determine an identity of an occupant as shown in step 1102; establish a first connection, by sending a first connection request via a communication module, to a first device as shown in step 1104; receiving a first message from the first device, wherein the first message comprises an occupant profile comprising a vehicle setting as shown in step 1106; establish a second connection, by sending a second connection request via the communication module, to a second device as shown in step 1108; and receive a second message from the second device, wherein the second message comprises a limitation setting and a priority level as shown in step 1110. A software application 1176 may be stored on the computer-readable medium 1174 and executed with processor 1172 of the computer system 1171.

According to an embodiment of the non-transitory computer-readable medium, the occupant profile further comprises occupant data comprising a height of the occupant, a weight of the occupant, a body size of the occupant, and an age of the occupant. According to an embodiment of the non-transitory computer-readable medium, the vehicle setting comprises a seat setting, a mirror setting, a temperature setting, a radio setting, and routing information. According to an embodiment of the non-transitory computer-readable medium, the limitation setting comprises a maximum speed data, a maximum acceleration data, a sobriety verification requirement, a time based data and a geofencing data. According to an embodiment of the non-transitory computer-readable medium, the occupant comprises one of a non-owner driver, an owner driver, and a passenger. According to an embodiment of the non-transitory computer-readable medium, the occupant profile is stored in one or more of a local storage, a remote storage, and a cloud storage.

In an embodiment, the system may comprise a cyber security module. In one aspect, a secure communication management (SCM) computer device for providing secure data connections is provided. The SCM computer device includes a processor in communication with memory. The processor is programmed to receive, from a first device, a first data message. The first data message is in a standardized data format. The processor is also programmed to analyze the first data message for potential cyber security threats. If the determination is that the first data message does not contain a cyber security threat, the processor is further programmed to convert the first data message into a first data format associated with the vehicle environment and transmit the converted first data message to the vehicle system using a first communication protocol associated with the vehicle system. According to an embodiment, secure authentication for data transmissions comprises, provisioning a hardware-based security engine (HSE) located in communications system, said HSE having been manufactured in a secure environment and certified in said secure environment as part of an approved network; performing asynchronous authentication, validation and encryption of data using said HSE, storing user permissions data and connection status data in an access control list used to define allowable data communications paths of said approved network, enabling communications of the communications system with other computing system subjects to said access control list, performing asynchronous validation and encryption of data using security engine including identifying a user device (UD) that incorporates credentials embodied in hardware using a hardware-based module provisioned with one or more security aspects for securing the system, wherein security aspects comprising said hardware-based module communicating with a user of said user device and said HSE.

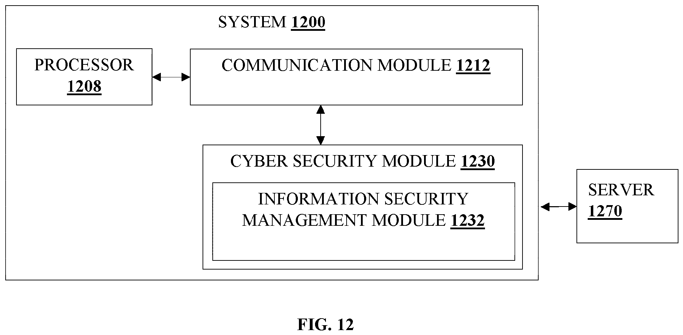

FIG. 12 shows the block diagram of the cyber security module 1230 in view of the system and server according to an embodiment. The communication of data between the processor 1208 of system 1200 and the server 1270 through the communication module 1212 is first verified by the information security management module 1232 before being transmitted from the system to the server or from the server to the system. Cyber security module 1230 comprises information security management module 1232. The information security management module is operable to analyze the data for potential cyber security threats, to encrypt the data when no cyber security threat is detected, and to transmit the data encrypted to the system or the server. In an embodiment, the cyber security module further comprises an information security management module providing isolation between the system and the server. In an embodiment, the system comprises methods for securing the data through the cyber security module. The information security management module is operable to receive data from the communication module, exchange a security key at the start of the communication between the communication module and the server, receive a security key from the server, authenticate an identity of the server by verifying the security key, analyze the security key for potential cyber security threats, negotiate an encryption key between the communication module and the server, receive the encrypted data, transmit the encrypted data to the server when no cyber security threat is detected. In an embodiment, the system comprises decryption of data by the cyber security module according to an embodiment. In an embodiment, the system comprises methods for securing the data through the cyber security module. The information security management module is operable to receive data from the communication module, exchange a security key at a start of the communication between the communication module and the server, receive a security key from the server, authenticate an identity of the server by verifying the security key, analyze the security key for potential cyber security threats, negotiate an encryption key between the communication module and the server, receive encrypted data, decrypt the encrypted data, and perform an integrity check of the decrypted data, transmit the decrypted data to the communication module when no cyber security threat is detected.

In an embodiment, the integrity check is a hash-signature verification using a Secure Hash Algorithm 256 (SHA256) or a similar method. In an embodiment, the information security management module is configured to perform asynchronous authentication and validation of the communication between the communication module and the server. In an embodiment, the information security management module is configured to raise an alarm if a cyber security threat is detected. In an embodiment, the information security management module is configured to discard the encrypted data received if the integrity check of the encrypted data fails. In an embodiment, the information security management module is configured to check the integrity of the decrypted data by checking accuracy, consistency, and any possible data loss during the communication through the communication module. In an embodiment, the server is physically isolated from the system through the information security management module. When the system communicates with the server as shown in FIG. 12, identity authentication is first carried out on the system and the server. The system is responsible for communicating/exchanging a public key of the system and a signature of the public key with the server. The public key of the system and the signature of the public key are sent to the information security management module. The information security management module decrypts the signature and verifies whether the decrypted public key is consistent with the received original public key or not. If the decrypted public key is verified, the identity authentication is passed. Similarly, the system and the server carry out identity authentication on the information security management module. After the identity authentication is passed on to the information security management module, the two communication parties, the system, and the server, negotiate an encryption key and an integrity check key for data communication of the two communication parties through the authenticated asymmetric key. A session ID number is transmitted in the identity authentication process, so that the key needs to be bound with the session ID number; when the system sends data to the outside, the information security gateway receives the data through the communication module, performs integrity authentication on the data, then encrypts the data through a negotiated secret key, and finally transmits the data to the server through the communication module. When the information security management module receives data through the communication module, the data is decrypted first, integrity verification is carried out on the data after decryption, and if verification is passed, the data is sent out through the communication module; otherwise, the data is discarded.

In an embodiment, the identity authentication is realized by adopting an asymmetric key with a signature. In an embodiment, the signature is realized by a pair of asymmetric keys which are trusted by the information security management module and the system, wherein the private key is used for signing the identities of the two communication parties, and the public key is used for verifying that the identities of the two communication parties are signed. Signing identity comprises a public and a private key pair. In other words, signing identity is referred to as the common name of the certificates which are installed in the user's machine. In an embodiment, both communication parties need to authenticate their own identities through a pair of asymmetric keys, and a task in charge of communication with the information security management module of the system is identified by a unique pair of asymmetric keys. In an embodiment, the dynamic negotiation key is encrypted by adopting an Rivest-Shamir-Adleman (RSA) encryption algorithm. RSA is a public-key cryptosystem that is widely used for secure data transmission. The negotiated keys include a data encryption key and a data integrity check key.

In an embodiment, the data encryption method is a Triple Data Encryption Algorithm (3DES) encryption algorithm. The integrity check algorithm is a Hash-based Message Authentication Code (HMAC-MD5-128) algorithm. When data is output, the integrity check calculation is carried out on the data, the calculated Message Authentication Code (MAC) value is added with the header of the value data message, then the data (including the MAC of the header) is encrypted by using a 3DES algorithm, the header information of a security layer is added after the data is encrypted, and then the data is sent to the next layer for processing. In an embodiment the next layer refers to a transport layer in the Transmission Control Protocol / Internet Protocol (TCP/IP) model. The information security management module ensures the safety, reliability, and confidentiality of the communication between the system and the server through the identity authentication when the communication between the two communication parties starts the data encryption and the data integrity authentication. The method is particularly suitable for an embedded platform which has less resources and is not connected with a Public Key Infrastructure (PKI) system and can ensure that the safety of the data on the server cannot be compromised by a hacker attack under the condition of the Internet by ensuring the safety and reliability of the communication between the system and the server.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and / or technical improvement over technologies found in the marketplace, and / or to enable others of ordinary skill in the art to understand the embodiments described herein.

## Claims

1. A system comprising:
a sensor, a communication module, and a processor;
wherein the processor storing instructions in a non-transitory memory that, when executed, cause the processor to:
detect, via a detection module comprising the sensor, a first identity of a first occupant of a vehicle;
connect, via the communication module, to a first device of the first occupant;
retrieve, a first occupant profile, wherein the first occupant profile comprises a first vehicle setting;
detect, via the detection module, a second identity of a second occupant of the vehicle;
connect, via the communication module, to a second device of the second occupant;
retrieve, a second occupant profile, wherein the second occupant profile comprises a second vehicle setting;
adjust, via a conflict resolution module, the first vehicle setting and the second vehicle setting based on the first occupant profile and the second occupant profile; and
apply, the first vehicle setting and the second vehicle setting to the vehicle.

2. The system of claim 1, wherein the sensor comprises one of a weight sensor, a heat sensor, a motion sensor, a sound sensor, an inertial sensor, a compression sensor, a camera sensor, an RFID reader, a proximity sensor, a smart phone, a key fob, a smart card, a portable device with microchip, a wearable device, and a badge.

3. The system of claim 1 or 2, wherein the first occupant comprises one of a non-owner driver, an owner driver, a passenger, a minor, a senior citizen, a baby on board, and an occupant having medical emergency; and wherein the second occupant comprises one of a non-owner driver, an owner driver, a passenger, a minor, a senior citizen, a baby on board, and an occupant having medical emergency.

4. The system of any one of the previous claims, wherein the conflict resolution module comprises artificial intelligence aided by machine learning modules.

5. The system of any one of the previous claims, wherein the first occupant profile further comprises a first limitation setting and wherein the second occupant profile further comprises a second limitation setting.

6. The system of claim 5, wherein the first limitation setting further comprises a first priority level and the second limitation setting further comprises a second priority level; wherein the first limitation setting and the first priority level is received via a third device in real-time; and wherein the second limitation setting and the second priority level is received via a fourth device in real-time.

7. The system of claim 6,
wherein the first vehicle setting and the second vehicle setting is adjusted based on the first priority level and the second priority level; and/or
wherein the first limitation setting and the second limitation setting is adjusted based on the first priority level and the second priority level.

8. The system of any one of the previous claims, wherein the system is operable to establish a connection by sending a connection request via the communication module to the first device of the first occupant.

9. The system of any one of the previous claims, wherein the first occupant profile is retrieved via one of the first device or wherein the first identity of the first occupant is received via the first device and the first occupant profile is retrieved via a network from a cloud.

10. The system of any one of the previous claims, wherein the first device comprises one of a phone, a key fob, a smart card, a portable device with microchip, an identification card, a laptop, a personal computing device, a wearable device, and a badge.

11. The system of any one of the previous claims, wherein the system is operable to establish a connection by sending a connection request via the communication module to the second device of the second occupant.

12. The system of any one of the previous claims, wherein the second occupant profile is retrieved via one of the second device and via a network from a cloud; and wherein the second device comprises one of a phone, a key fob, a smart card, a portable device with microchip, an identification card, a laptop, a personal computing device, a wearable device, and a badge.

13. A method comprising:
detecting, via a detection module comprising a sensor, a first identity of a first occupant of a vehicle;
connecting, via a communication module, to a first device of the first occupant;
retrieving, a first occupant profile, wherein the first occupant profile comprises a first vehicle setting;
detecting, via the detection module, a second identity of a second occupant of the vehicle;
connecting, via the communication module, to a second device of the second occupant;
retrieving, a second occupant profile, wherein the second occupant profile comprises a second vehicle setting;
adjusting, via a conflict resolution module, the first vehicle setting, and the second vehicle setting based on the first occupant profile and the second occupant profile; and
applying, the first vehicle setting and the second vehicle setting to the vehicle.

14. The method of claim 13,
wherein a first limitation setting and a first priority level is received via a third device in real-time; and/or
wherein a second limitation setting and a second priority level is received via a fourth device in real-time.

15. A non-transitory computer-readable medium having stored thereon instructions executable by a computer system to perform operations comprising:
detecting, via a detection module comprising a sensor, a first identity of a first occupant of a vehicle;
connecting, via a communication module, to a first device of the first occupant;
retrieving, a first occupant profile, wherein the first occupant profile comprises a first vehicle setting;
detecting, via the detection module, a second identity of a second occupant of the vehicle;
connecting, via the communication module, to a second device of the second occupant;
retrieving, a second occupant profile, wherein the second occupant profile comprises a second vehicle setting;
adjusting, via a conflict resolution module, the first vehicle setting, and the second vehicle setting based on the first occupant profile and the second occupant profile; and
applying, the first vehicle setting and the second vehicle setting, to the vehicle.
